# EUROPÄISCHE PATENTSCHRIFT

(11) **EP 3 194 482 B1**
(45) Veröffentlichungstag und Bekanntmachung des Hinweises auf die Patenterteilung: **08.05.2024**
(21) Anmeldenummer: 15771537.6
(22) Anmeldetag: 16.09.2015
(51) Int. Cl.: C08K 5/00, C08K 5/523

(54) **VERWENDUNG VON PHOSPHORHALTIGEN ORGANISCHEN OXYIMIDEN ALS FLAMMSCHUTZMITTEL FÜR KUNSTSTOFFE, FLAMMGESCHÜTZTE KUNSTSTOFFZUSAMMENSETZUNG, VERFAHREN ZU DEREN HERSTELLUNG SOWIE FORMTEILE, LACKE UND BESCHICHTUNGEN**
USE OF PHOSPHOROUS-CONTAINING ORGANIC OXYIMIDES AS FLAME RETARDANTS FOR PLASTICS, FLAME-RETARDANT PLASTIC COMPOSITIONS, METHOD FOR THE PRODUCTION THEREOF, MOULDED PART, PAINT AND COATINGS
UTILISATION D'OXY-IMIDES ORGANIQUES PHOSPHORÉS EN TANT QUE RETARDATEURS DE FLAMME POUR MATIÈRES PLASTIQUES, COMPOSITION DE MATIÈRE PLASTIQUE IGNIFUGÉE, PROCÉDÉ DE PRÉPARATION DE LADITE COMPOSITION, ET PIÈCES MOULÉES, PEINTURES ET REVÊTEMENTS

(30) Priorität: 18.09.2014 DE 102014218811
(43) Veröffentlichungstag der Anmeldung: 26.07.2017
(73) Patentinhaber: Fraunhofer-Gesellschaft zur Förderung der angewandten Forschung e.V., 80686 München (DE)
(72) Erfinder: PFAENDNER, Rudolf, 64668 Rimbach (DE); MAZUROWSKI, Markus, 65462 Ginsheim-Gustav (DE)
(74) Vertreter: Pfenning, Meinig & Partner mbB
(86) Internationale Anmeldenummer: PCT/EP2015/071251
(87) Internationale Veröffentlichungsnummer: WO 2016/042040

(56) Entgegenhaltungen:
- GB-A- 801 523
- US-A- 3 960 885
- US-A- 4 003 862
- DATABASE CA [Online] CHEMICAL ABSTRACTS SERVICE, COLUMBUS, OHIO, US; KOGA, WATARU ET AL: "Flame-resistant polyester resins", retrieved from STN Database accession no. 67:3373 -& JP S41 20234 B (HITACHI CHEMICAL CO., LTD.) 25 November 1966 (1966-11-25)

## Beschreibung

Die vorliegende Erfindung betrifft die Verwendung von phosphorhaltigen organischen Oxyimiden gemäß der unten dargestellten allgemeinen Formel I als Flammschutzmittel für Kunststoffe, und/oder als Stabilisatoren für Kunststoffe. Die vorliegende Erfindung betrifft zudem eine flammgeschützte Kunststoffformmasse, in der die zuvor beschriebenen phosphorhaltigen organischen Oxyimide integriert sind, sowie ein Verfahren zur Herstellung der zuvor genannten Kunststoffzusammensetzung. Außerdem betrifft die Erfindung eine stabilisierte Kunststoffzusammensetzung . Weiterhin betrifft die vorliegende Erfindung ein Formteil, einen Lack oder eine Beschichtung aus der zuvor genannten flammgeschützten Kunststoffzusammensetzung.

Die meisten Kunststoffe sind brennbar und vergleichsweise leicht entflammbar. Um das Brandrisiko von Kunststoffen in bestimmten Anwendungen zu vermindern oder auszuschließen ist es deshalb zwingend erforderlich die Entflammbarkeit zu verringern und flammfeste Kunststoffzusammensetzungen einzusetzen. Dazu werden in der Regel Flammschutzmittel dem Kunststoff beigegeben mit dem Ziel, das Entzünden für eine bestimmte Zeit zu verhindern oder die Brandausbreitung signifikant zu verzögern. Traditionelle Flammschutzmittel basieren auf chlor- und bromhaltigen Verbindungen (letztere meist in Kombination mit Antimontrioxid), auf phosphorhaltigen, auf stickstoffhaltigen Verbindungen und auf Metallydroxiden wie Aluminiumhydroxid (ATH) oder Magnesiumhydroxid (MDH). In neuerer Zeit werden aus toxikologischen und ökotoxikologischen Gründen halogenfreie Flammschutzlösungen bevorzugt.

Zur Herstellung von flammgeschützten Kunststoffen gibt es eine Vielzahl von Flammschutzmitteln , die in der Regel substratspezifisch für ein bestimmtes Polymer und einen bestimmten Einsatzbereich entsprechend den dafür zugrundeliegenden Normen eingesetzt werden. Flammgeschützte Kunststoffe werden beispielsweise in Elektro- und Elektronikanwendungen, im Transportbereich (Bahn, Flugzeug, Auto), bei Textilien und im Bauwesen verwendet.

Eine in den letzten Jahren entwickelte neue Flammschutzmittelklasse auf Stickstoff-Basis, vorzugsweise für Polyolefine, beruht auf ausgewählten Alkoxyaminen (z.B. WO 99/00450). Durch Spaltung der Alkoxyamine entstehen im Brandfall Radikale, die in den Abbauprozess des Polymeren eingreifen und damit die Flammschutzwirkung bewirken (C. R. Wilen, R. Pfaendner, J. Appl. Pol. Sci. 2013, 129, 925-944). Außer Alkoxyaminen wurden mittlerweile auch andere Radikalgeneratoren beschrieben, die als Flammschutzmittel oder als Flammschutzmittelsynergisten wirken wie Azoverbindungen (M. Aubert et. al. Macromol. Rapid Commun. 2006, 27, 976-981, WO 2005/030852), Hydrazone und Azine (M. Aubert et al., Pol. Adv. Technol. 2011, 22, 1529-1538), Azo-Alkoxyamine (M. Aubert et al. Pol. Degr. Stab. 2012, 97, 1438-1446) Azo-Phosphonate (T. Tirri et al., Pol. Degr. Stab. 2012, 97, 375-382) oder Triazene (W. Pawelec et al., Pol. Degr. Stab. 2012, 97, 948-954).

Weiterhin ist die Verwendung von neuen Radikalgeneratoren auf der Basis von Hydroxyimiden und polymeren Imiden als Flammschutzmittel in DE 10 2013 005 307 bzw. DE 10 2014 210 214 beschrieben.

Diese Verbindungsklassen werden bevorzugt in Kombination mit anderen Flammschutzmitteln z.B. auf Basis von anderen Stickstoff-, Phosphor-, Halogen- oder schwefelhaltigen Verbindungen eingesetzt, da sich dadurch synergistische Kombinationen ergeben. Ein Nachteil der Kombinationen ist es allerdings, dass mehr als eine Komponente zum Einsatz kommt, was z.B. die Zulassungskosten erhöhen kann, es entsteht eine zusätzliche Fehlerquelle und es kann zu unerwünschten Wechselwirkungen zwischen den Komponenten wie z.B. chemischen Reaktionen kommen.

Die US 4,003,862 betrifft N-substituierte Tetrahalogenphthalimide, Verfahren zu ihrer Herstellung und ihre Verwendung als feuerhemmende Mittel.

Aus der JP S41-20234 ist ein Verfahren zu Herstellung eines flammgeschützten ungesättigten Polyesterharzes bekannt, bei dem eine Phosphor enthaltende Hexachlor-endomethylentetrahydrophthalimid-Verbindung eingesetzt wird.

Aufgabe der vorliegenden Erfindung war es daher neue Flammschutzmittel und synergistische Flammschutzmittel-Komponenten auf der Basis von Radikalgeneratoren mit sehr guter Wirkung zur Verfügung zu stellen. Weiterhin können ausgewählte Verbindungen als Stabilisatoren für Kunststoffe eingesetzt werden.

Diese Aufgabe wird mit der Verwendung eines phosphorhaltigen organischen Oxyimids gemäß Patentanspruch 1, mit einer flammgeschützten und/oder stabilisierten Kunststoffzusammensetzung mit den Merkmalen des Patentanspruchs 19, mit einem Verfahren zur Herstellung der flammgeschützten und/oder stabilisierten Kunststoffzusammensetzung mit den Merkmalen des Patentanspruchs 22 sowie mit einem Formteil, einem Lack oder einer Beschichtung mit den Merkmalen des Patentanspruchs 23 gelöst. Die jeweilig abhängigen Patentansprüche stellen dabei vorteilhafte Weiterbildungen dar.

Die Erfindung betrifft somit die Verwendung von halogen-freien phosphorhaltigen organischen Oxyimiden, enthaltend mindestens ein Strukturelement der nachfolgend abgebildeten Formel I 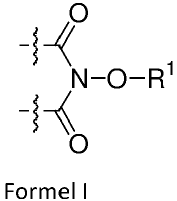 wobei R¹ ausgewählt ist aus der Gruppe bestehend Phosphor enthaltenden Resten,
in Kombination mit mindestens einem weiteren Flammschutzmittel, ausgewählt aus der Gruppe bestehend aus anorganischen Flammschutzmitteln, stickstoffhaltigen Flammschutzmitteln, Radikalbildnern, phosphorhaltigen Flammschutzmitteln, Halogenhaltigen Flammschutzmitteln auf Chlor- und Brombasis, Boraten, schwefelhaltigen Verbindungen, Antidrip-Mitteln, siliciumhaltigen Verbindungen, Kohlenstoffmodifikationen, sowie Kombinationen oder Mischungen hieraus,
als Flammschutzmittel für Kunststoffe.

Es hat sich nun gezeigt, dass durch Moleküle, die sowohl die Oxyimidgruppe als auch mindestens eine Phosphorgruppe beinhalten, die Flammschutzwirkung der Oxyimide weiter gesteigert werden kann. Diese ausgewählten Strukturen sind von den o.a. eigenen Anmeldungen bisher nicht explizit umfasst. Gleichzeitig sind manche dieser Produkte aus großtechnisch verfügbaren Ausgangsverbindungen kostengünstig herstellbar.

Die im oben dargestellten phosphorhaltigen organischen Oxyimid enthaltene Gruppe R¹ enthält dabei mindestens ein Phosphoratom. Die Gruppe R¹ kann dabei auch einen Rest darstellen, der mehrere Phosphoratome beinhaltet. Insbesondere besteht die Möglichkeit, dass sich die Struktur gemäß Formel I wiederholt, d.h. mehrere der dargestellten Oxyimidgruppen im Molekül vorhanden sind.

Die Aufgabe, neue Flammschutzmittel und Flammschutzmittelkomponenten mit hoher Wirksamkeit zur Verfügung zu stellen wird bevorzugt dadurch gelöst, dass Verbindungen verwendet werden, die sowohl mindestens eine Oxyimid-Gruppe als auch mindestens eine Phosphorgruppe im Molekül enthalten, d.h. mindestens eine Struktureinheit der allgemeinen Formeln la, Ib, Ic mit der Maßgabe, dass diese Strukturen keine Halogene beinhalten. 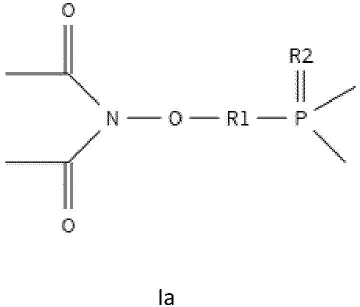 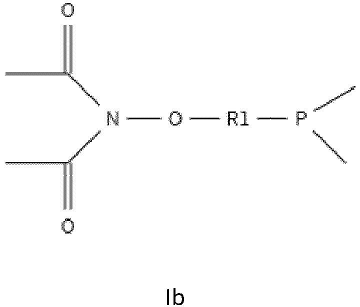 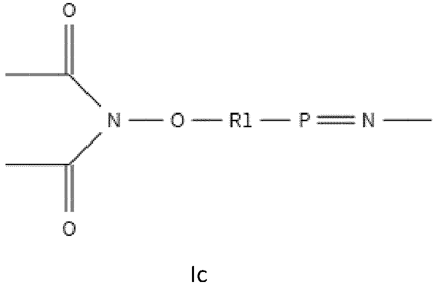
R1 ist eine direkte Bindung, eine ggf. substituierte Alkyl-, Cycloalkyl-, Aryl- oder Heteroarylgruppe, die kein Halogen enthält.
R2 ist O oder S

Erfindungsgemäß ist es bevorzugt, wenn die oben in Formel I bezeichnete Gruppe R1 ausgewählt ist aus der Gruppe bestehend aus

-X-Y

wobei
- X: eine direkte chemische Bindung, einen unsubstituierten oder substituierten Alkylenrest, einen unsubstituierten oder substituierten Cycloalkylenrest, einen unsubstituierten oder substituierten Arylrest, einen unsubstituierten oder substituierten Heteroarylrest oder eine Acylgruppe, deren Carbonylrest mit dem Sauerstoffatom und deren Säurerest mit Y verbunden ist, bedeutet, und
- Y: eine Phosphor enthaltende Gruppierung bedeutet, die über das Phosphoratom mit X chemisch verknüpft ist und worin das Phosphoratom die Wertigkeit -3 bis 5, insbesondere -2, -1, 0, +1, +2, +3, +4 oder +5 aufweist.

In der oben bezeichneten Gruppierung X-Y ist es vorteilhaft, wenn der Rest Y ausgewählt ist aus der Gruppe bestehend aus den nachfolgend abgebildeten Gruppierungen 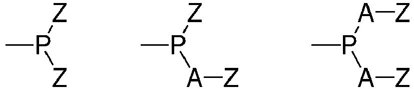 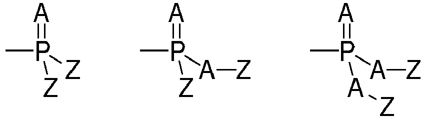 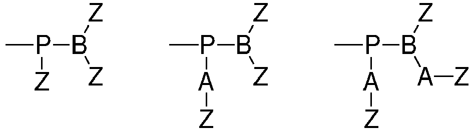 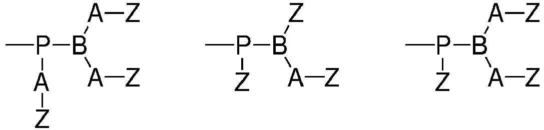 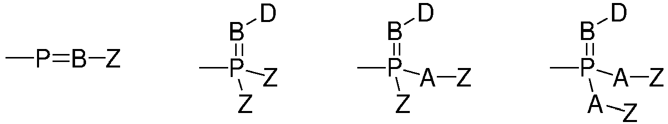 wobei
Z bei jedem Auftreten gleich oder verschieden ist und ausgewählt ist aus der Gruppe bestehend aus linearen oder verzweigten und/oder unsubstituierten oder substituierten Alkylresten, unsubstituierten oder substituierten Arylresten, unsubstituierten oder substituierten Heteroarylresten oder Acylgruppen, deren Carbonylrest mit dem Phosphoratom bzw. A oder B verbunden ist, wobei die die zuvor genannten Reste ggf. mit mindestens einem weiteren Strukturelement gemäß der oben abgebildeten Formel I und/oder mindestens einem weiteren Rest R1 substituiert sein können sowie aus Strukturelementen der oben abgebildeten Formel I und Gruppierungen -X-Y,
A bei jedem Auftreten gleich oder verschieden ist und Sauerstoff oder Schwefel,
B bei jedem Auftreten gleich oder verschieden ist und Stickstoff, und
D bei jedem Auftreten gleich oder verschieden ist und ausgewählt ist aus der Gruppe bestehend aus linearen oder verzweigten und/oder unsubstituierten oder substituierten Alkylresten, unsubstituierten oder substituierten Arlyresten, unsubstituierten oder substituierten Heteroarylresten, wobei die die zuvor genannten Reste ggf. mit mindestens einem weiteren Strukturelement gemäß der oben abgebildeten Formel I und/oder mindestens einem weiteren Rest R1 substituiert sein können, bedeutet.

Erfindungsgemäß ist das phosphorhaltige organische Oxyimid halogen-frei, d.h. die entsprechende Verbindung beinhaltet keine Halogenatome.

Bevorzugte phosphorhaltige organische Oxyimide weisen die nachfolgende Struktur auf:

E-R¹

wobei
- E: einen nachfolgend abgebildeten Rest bedeutet, wobei E über das Sauerstoffatom mit R¹ verbunden ist,

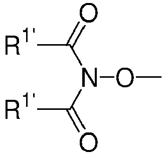

- R¹: wie oben stehend definiert ist und
- R^{1'}: bei jedem Auftreten gleich oder verschieden ist und Wasserstoff, einen linearen oder verzweigten Alkylrest, einen linearen oder verzweigten Alkylenrest, einen aromatischen Rest, einen heteroaromatischen Rest darstellt oder bei Reste R^{1'} zu einem Ring verbunden sind, wobei der Ring gesättigt oder ungesättigt, substituiert oder unsubstituiert sein kann und/oder mindestens einer oder beide Reste R^{1'} oder die zu einem Ring verbundenen Resten R^{1'} eine mindestens ein weiteres Strukturelement der oben abgebildeten Formel I umfassen.

Insbesondere weist das phosphorhaltige organische Oxyimid eine der nachfolgenden Formeln auf: 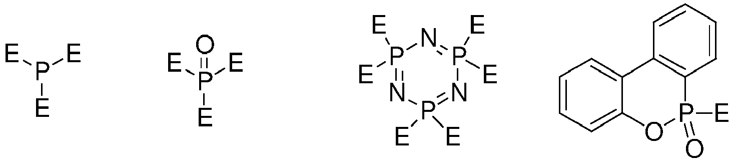 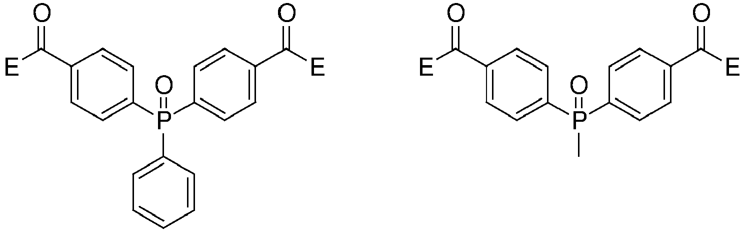 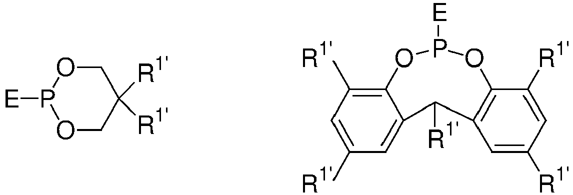 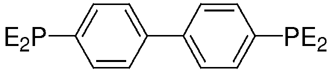 wobei E und R^{1'} die weiter oben angegebene Definition aufweisen.

Insbesondere bevorzugt und beispielhaft einzusetzende organische phosphorhaltige Oxyimide sind nachfolgend dargestellt:
Gemäß einer ersten bevorzugten Ausführungsform weist das phosphorhaltige organische Oxyimid ein Strukturelement der allgemeinen Formel I umfasst und eine der nachfolgenden Formeln aufweist

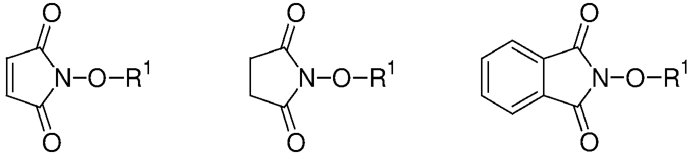

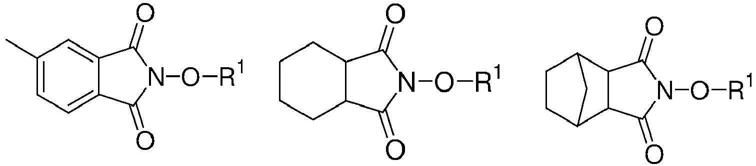

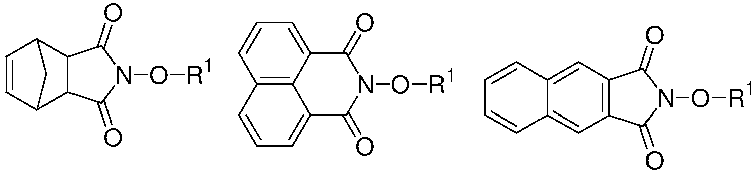

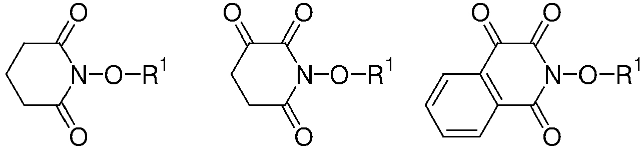

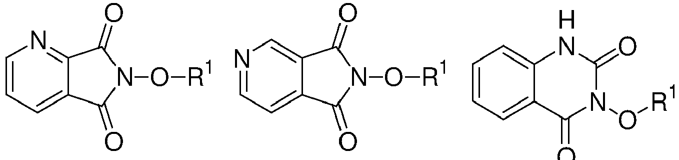

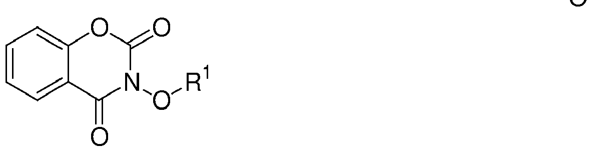

Eine weitere bevorzugte Ausführungsform eines erfindungsgemäßen phosphorhaltigen organischen Oxyimids weist zwei Strukturelemente der allgemeinen Formel I auf und besitzt eine der nachfolgend dargestellten Formeln

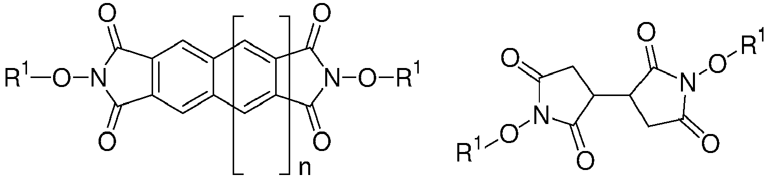

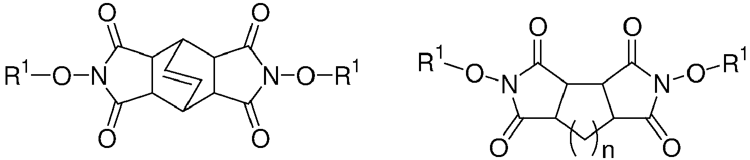

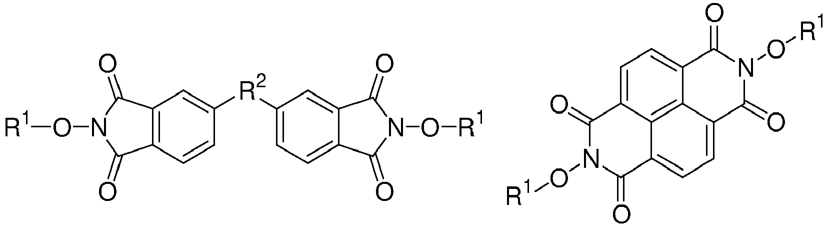

Bei beiden zuvor genannten Ausführungsformen gilt dabei:
- n: bedeutet 0, 1, 2, 3 oder 4, und
- R²: ist ausgewählt aus der Gruppe bestehend aus gegebenenfalls substituierten Alkylen-, Cycloalkylen-, Arylen-, Heteroarylen- oder verbrückenden Acyl-Resten.

In den zuvor angegebenen Formeln ist der Rest R² dabei bevorzugt wie nachfolgend definiert: R² ist dabei bevorzugt ausgewählt aus Resten der Gruppe bestehend aus -(CH₂)ₙ- mit n = 1 bis 18, -CH(CH₃)-, -C(CH₃)₂-, -CH(CF₃)-, -C(CH₃)₂-, -O-, -S-, -SO₂-, -NHCO-, -CO-, -OC(O)O- sowie den nachfolgend abgebildeten Gruppen 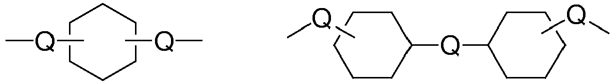 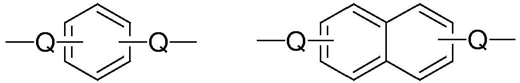 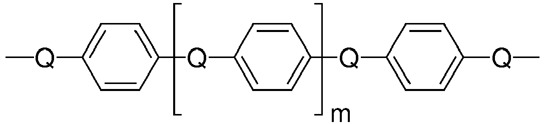 wobei
die in den zuvor abgebildeten Gruppen enthaltenen cycloaliphatischen oder aromatischen Ringsysteme unsubstituiert oder durch eine oder mehrere Alkyl- und/oder Alkoxygruppen substituiert sind,
- Q: bei jedem Auftreten gleich oder verschieden ist und ausgewählt ist aus der Gruppe bestehend aus einer chemischen Bindung sowie den Resten -(CH₂)n- mit n = 1 bis 18, -CH(CH₃)-, -C(CH₃)₂-, -CH(CF₃)-, -C(CF₃)₂-, -O-, -S-, -SO₂-, -NHCO-, -CO-, -O-C(O)-O, und
- m: 0 oder 1 bis 3 ist.

Besonders bevorzugt sind die Reste R² dabei durch die nachfolgend abgebildeten Strukturelemente wiedergegeben, wobei Q die oben angegebene Bedeu-

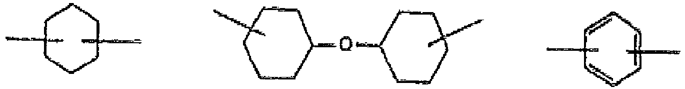

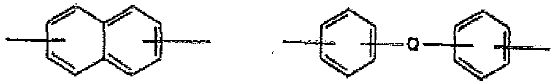

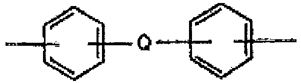

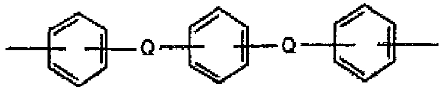

Insbesondere können die Reste R² dabei durch die nachfolgenden Strukturelemente gegeben sein:

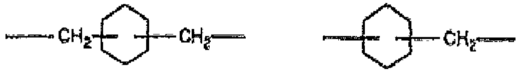

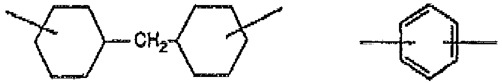

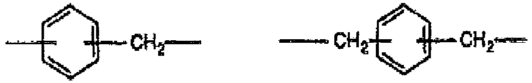

Eine weitere bevorzugte Ausführungsform sieht vor, dass das phosphorhaltige organische Oxyimid drei Strukturelemente der allgemeinen Formel I umfasst und die nachfolgende Formel aufweist

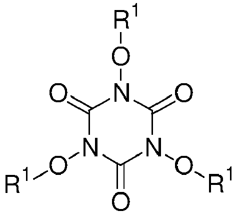

Die Definition des Restes R¹ ist dabei identisch mit der oben angegebenen Definition.

Insbesondere bevorzugte phosphorhaltige organische Oxyimide sind dabei ausgewählt aus der Gruppe bestehend aus den nachfolgend abgebildeten Verbindungen: 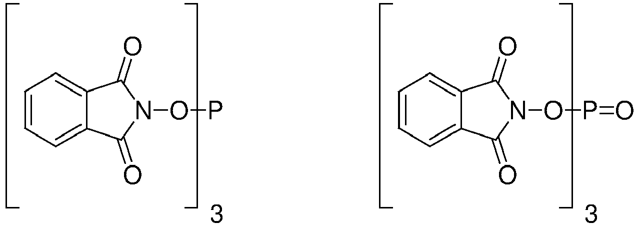 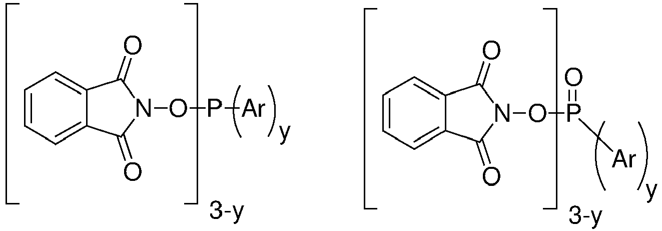 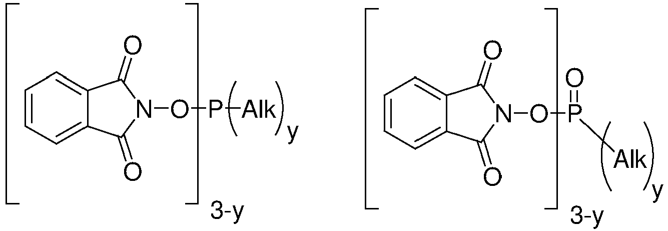 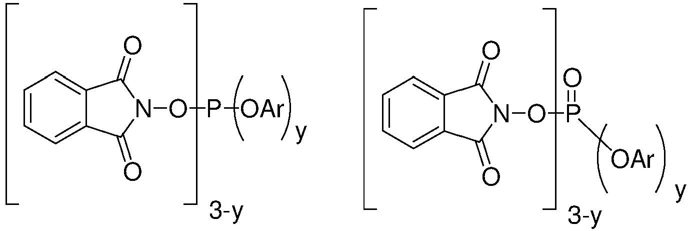 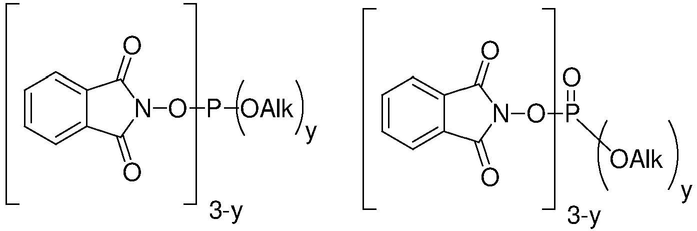 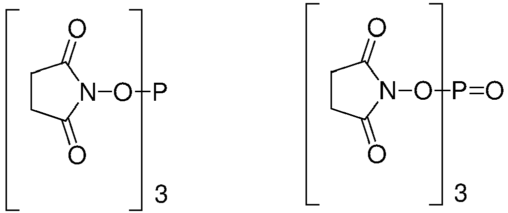 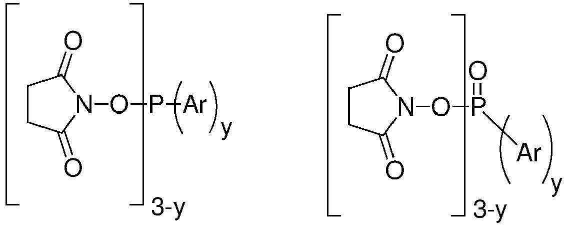 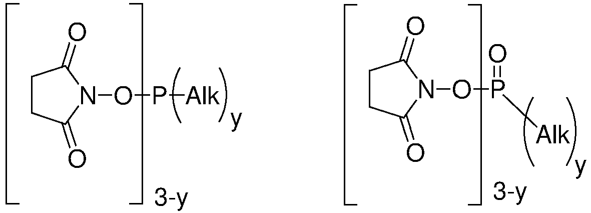 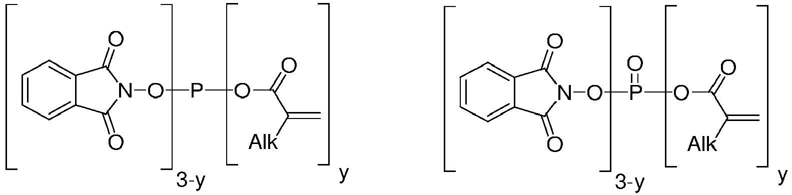 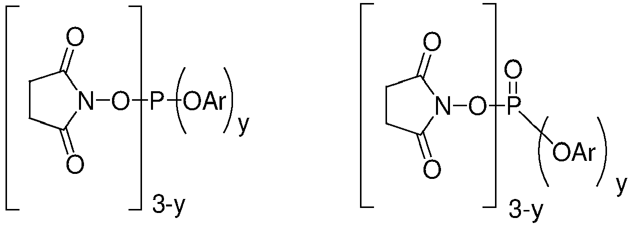 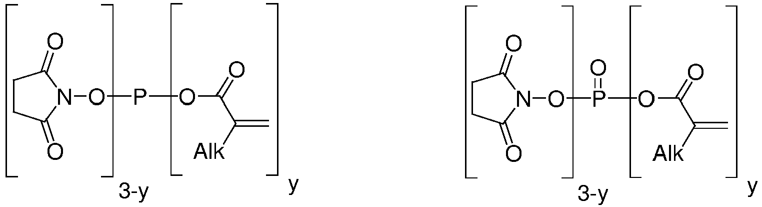 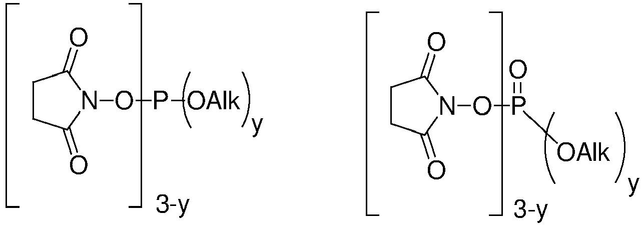 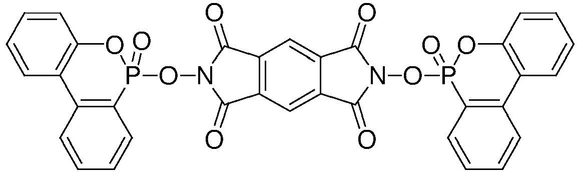 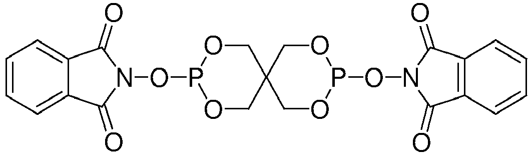 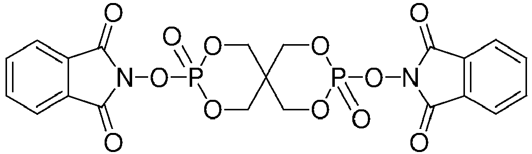 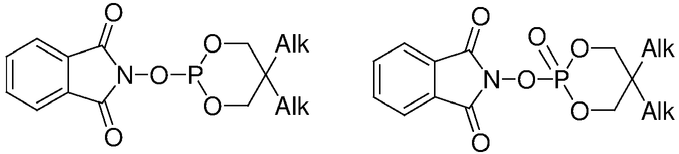 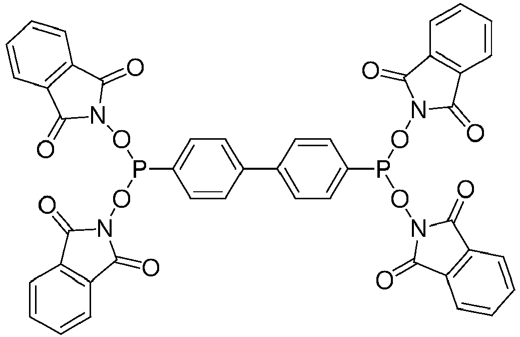 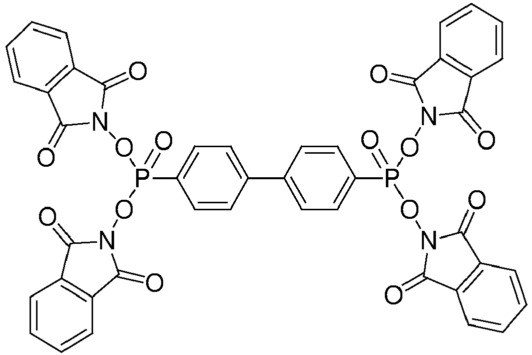 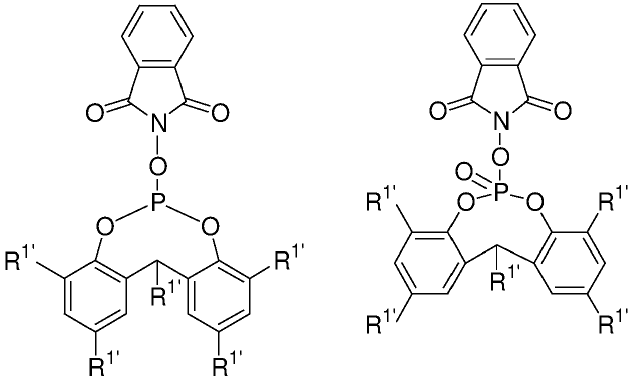 wobei
- y: 1 oder 2 ist
- Alk: einen linearen oder verzweigten, substituierten oder unsubstituierten Alkylrest bedeutet, und
- Ar: einen substituierten oder unsubstituierten Arylrest oder Heteroarylrest bedeutet.

Ebenso ist es möglich, dass das phosphorhaltige organische Oxyimid in Form eines Polymer bzw. eines Copolymeren vorliegt. Das Polymere ist dabei aus den nachfolgend angegebenen Wiederholungseinheiten aufgebaut, das Copolymere umfasst zumindest eine der nachfolgend angegebenen Wiederholungseinheiten:

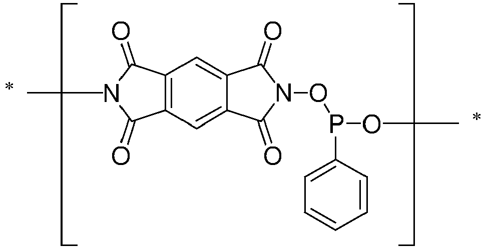

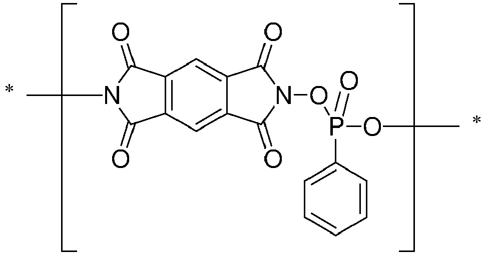

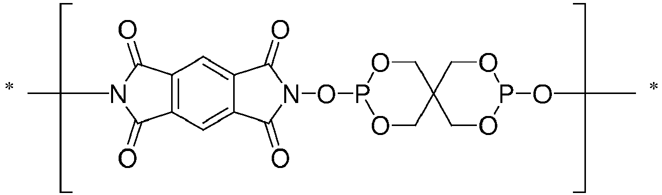

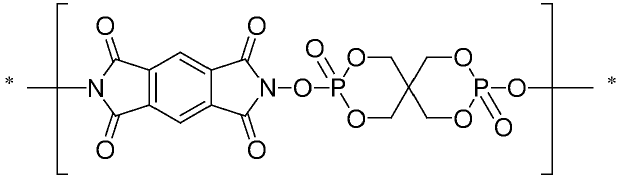

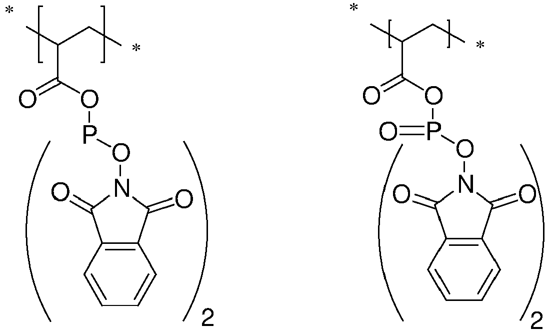

Die Kunststoffe sind dabei bevorzugt thermoplastische Polymere, insbesondere ausgewählt aus der Gruppe bestehend aus
a) Polymere aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyisobutylen, Poly-4-methyl-penten-1, Polybutadien, Polyisopren, Polycycloocten, Polyalkylen-Kohlenmonoxid-Copolymere, sowie Copolymere in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure und deren Salze (lonomere), sowie Terpolymere wie z.B. EthylenAcrylsäure-Glycidylacrylat, Pfropfpolymere wie z.B. Polypropylen-graft-Maleinsäureanhydrid, Polypropylen-graft-Acrylsäure, Polyethylen-graft-Acrylsäure, Polyethylen-Polybutylacrylat-graft-Maleinsäureanhydrid,
b) Polystyrol, Polymethylstyrol, Polyvinylnaphthalin, Styrol-Butadien (SB), Styrol-Butadien-Styrol (SBS), Styrol-Ethylen-Butylen-Styrol (SEBS), Styrol-Ethylen-Propylen-Styrol, Styrolisopren, Styrol-Isopren-Styrol (SIS), Styrol-butadien-acrylnitril (ABS), Styrol-acrylnitril-acrylat (ASA), Styrol-Ethylen, Styrol-Maleinsäureanhydrid-Polymere einschl. entsprechender Pfropfcopolymere wie z.B. Styrol auf Butadien, Maleinsäureanhydrid auf SBS oder SEBS, sowie Pfropfcopolymere aus Methylmethacrylat, Styrol-Butadien und ABS (MABS),
c) halogenenthaltende Polymere wie z.B. Polyvinylchlorid (PVC), Polychloropren und Polyvinylidenchlorid (PVDC), Copolymere aus Vinylchlorid und Vinylidenchlorid oder aus Vinylchlorid und Vinylacetat, chloriertes Polyethylen, Polyvinylidenfluorid,
d) Polymere von ungesättigten Estern wie z.B. Polyacrylate und Polymethacrylate wie Polymethylmethacrylat (PMMA), Polybutylacrylat, Polylaurylacrylat, Polystearylacrylat, Polyglycidylacrylat, Polyglycidylmethacrylat, Polyacrylnitril, Polyacrylamide, Copolymere wie z.B. Polyacrylnitril-Polyalkylacrylat, Polymethacrylimid
e) Polymere aus ungesättigten Alkoholen und Derivaten, wie z.B. Polyvinylalkohol, Polyvinylacetat, Polyvinylbutyral,
f) Polyacetale, wie z.B. Polyoxymethylen POM) oder Copolymere mit z.B. Butanal,
g) Polyphenylenoxide und Blends mit Polystyrol oder Polyamiden,
h) Polymere von cyclischen Ethern wie z.B. Polyethylenglycol, Polypropylenglycol, Polyethylenoxid, Polypropylenoxid, Polytetrahydrofuran,
i) Polyurethane, aus hydroxyterminierten Polyethern oder Polyestern und aromatischen oder aliphatischen Isocyanaten insbesondere lineare Polyurethane, Polyharnstoffe,
j) Polyamide wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3- Diaminobenzol, Blends von unterschiedlichen Polyamiden wie z.B. PA-6 und PA 6.6 bzw. Blends von Polyamiden und Polyolefinen wie z.B. PA/PP
k) Polyimide, Polyamid-imide, Polyetherimide, Polyesterimide, Poly-(ether)ketone, Polysulfone, Polyethersulfone, Polyarylsulfone, Polyphenylensulfid, Polybenzimidazole, Polyhydantoine,
l) Polyester aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat, Polyethylennaphthylat, Poly-1,4-dimethylolcyclohexanterephthalat, Polyhydroxybenzoat, Polyhydroxynaphthalat, Polymilchsäure (PLA), Polyhydroxybutyrat (PHB), Polyhydroxyvalerat (PHV)
m) Polycarbonate, Polyestercarbonate, sowie Blends wie z.B. PC/ABS, PC/PBT, PC/PET/PBT, PC/PA
n) Cellulosederivate wie z.B. Cellulosenitrat, Celluloseacetat, Cellulosepropionat, Cellulosebutyrat
o) duromeren oder elastomeren, nicht-thermoplastischen Kunststoffen
p) sowie Mischungen, Kombinationen oder Blends aus zwei oder mehr der zuvor genannten Polymere.

Sofern es sich bei den unter a) bis o) angegebenen Polymeren um Copolymere handelt, können diese in Form von statistischen ("random"), Block- oder "tapered" Strukturen vorliegen.

Sofern es sich bei den unter a) bis o) angegebenen Polymeren um stereoreguläre Polymere handelt, können diese in Form von isotaktischen, stereotaktischen, aber auch ataktischen Formen oder als Stereoblockcopolymere vorliegen.

Weiterhin können die unter a) bis o) angegebenen Polymere sowohl amorphe als auch (teil-)kristalline Morphologien aufweisen.

Ggf. können die unter a) genannten Polyolefine auch vernetzt vorliegen, z.B. vernetztes Polyethylen, das dann als X-PE bezeichnet wird.

Die genannten Polymeren a) bis o) können dabei nicht nur als Neuware sondern auch in Form von Rezyklaten vorliegen, z.B. als Produktionsabfälle oder aus Wertstoffsammlungen ("post-consumer" Rezyklate).

Die erfindungsgemäßen Flammschutzmittel können insbesondere in den folgenden duromeren oder elastomeren, nicht-thermoplastischen Kunststoffen Verwendung finden:
a) Epoxidharze, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
b) Phenolharze wie z.B. Phenol-Formaldehyd-Harze, Harnstoff-Formaldehyd-Harze, Melamin-Formaldehydharze,
c) ungesättigte Polyesterharze aus ungesättigten Dicarbonsäuren und Diolen,
d) Silikone,
e) Polyurethane als Reaktionsprodukte aus di- oder polyfunktionellen Isocyanaten und Polyolen, Polyharnstoffe,
f) Alkydharze, Allylharze.

Ganz besonders bevorzugt werden die erfindungsgemäßen Flammschutzmittel bei Polyolefinen, vorzugsweise Polypropylen und/oder Polyethylen und deren Copolymeren und Blends eingesetzt.

Ferner ist es bevorzugt, wenn
a) das anorganische Flammschutzmittel ausgewählt ist aus der Gruppe bestehend aus Al(OH)₃, Mg(OH)₂, AlO(OH), MgCOs, Schichtsilikate wie z.B. Montmorillonit oder Sepiolit, nicht oder organisch modifiziert, Doppelsalze, wie z.B. Mg-Al-Silikate, POSS-(Polyhedral Oligomeric Silsesquioxane) Verbindungen, Huntit, Hydromagnesit oder Halloysit sowie Sb₂O₃, Sb₂O₅, MoO₃, Zinkstannat, Zinkhydroxystannat,
b) das stickstoffhaltige Flammschutzmittel ausgewählt ist aus der Gruppe bestehend aus Melamin, Melem, Melam, Melon, Melaminderivate, Melaminkondensationsprodukte oder Melaminsalze, Benzoguanamin, Polyisocyanurate, Allantoin, (Poly)Phosphacene, insbesondere Melamincyanurat, Melaminphosphat, Dimelaminphosphat, Melaminpyrophosphat, Melaminpolyphosphat, Melamin-methanphosphonat, Melamin-Metall-Phosphate wie z.B. Melaminaluminumphosphat, Melaminzinkphosphat, Melaminmagnesiumphopsphat, sowie die entsprechenden Pyrophosphate und Polyphosphate, Poly-[2,4-(piperazin-1,4-yl)-6-(morpholin-4-yl)-1,3,5-triazin], Ammoniumpolyphosphat, Melaminborat, Melaminhydrobromid, Ethylendiamin-methanphosphonat,
c) der Radikalbildner ausgewählt ist aus der Gruppe bestehend aus Alkoxyamine, Hydroxylaminester, Azoverbindungen, Dicumyl oder Polycumyl, nicht phosphorhaltige Hydroxyimide oder deren Derivate wie z.B. Hydroxyimidester oder Hydroxyimidether,
d) das phosphorhaltige Flammschutzmittel ausgewählt ist aus der Gruppe bestehend aus anorganische oder organische Phosphonate wie z.B. Aluminiumphosphonat, Phosphonatester, oligomere und polymere Derivate der Methanphosphonsäure roter Phosphor, Phosphate wie z.B. Resorcindiphosphat, Bisphenol-A-diphosphat und ihre Oligomere, Triphenylphosphat, Ethylendiamindiphosphat, Phosphinate wie z.B. Salze der hypophosphorigen Säure und Ihrer Derivate wie Alkylphosphinatsalzen z.B. Diethylphosphinataluminium oder Diethylphosphinat-Zink oder Aluminiumphosphinat, Aluminiumphosphit, Aluminiumphosphat, 9,10-Dihydro-9-oxa-10-phosphorylphenanthren-10-oxid (DOPO) und deren substituierte Verbindungen,
e) das halogenhaltige Flammschutzmittel auf Chlor- und Brombasis ausgewählt ist aus der Gruppe bestehend aus polybrominierten Diphenyloxiden, wie z.B. Decabromdiphenyloxid,Tris(3-bromo-2,2-bis(bromomethyl)propyl-phosphat, Tris(tribromneopentyl)phosphat, Tetrabromphthalsäure, 1,2-Bis(tribromphenoxy)ethan, Hexabromcyclododecan, bromiertes Diphenylethan, Tris-(2,3-dibrompropyl)isocyanurat, Tetrabrombisphenol-A-bis(2,3)dibrompropylether), Ethylen-bis(tetrabromophthalimid), Tetrabromo-bisphenol A, bromiertes Polystyrol, bromiertes Polybutadien bzw, Polystyrol-bromiertes Polybutadien-Copolymere, bromiertes Epoxidharz, Polypentabrombenzylacrylat, bromierten Polyphenylenethern ggf. in Kombination mit Sb₂O₃ und/oder SbzOs,
f) das Borat ausgewählt ist aus der Gruppe bestehend aus Zinkborat oder Calciumborat, ggf. auf Silica als Trägermaterial,
g) die schwefelhaltige Verbindungen ausgewählt ist aus der Gruppe bestehend aus elementarem Schwefel, Disulfiden und Polysulfiden, Thiuramsulfid, Dithiocarbamaten, Mercaptobenzthiazol und Sulfenamiden,
h) das Antidrip-Mittel Polytetrafluorethylen ist,
i) die siliciumhaltige Verbindung ausgewählt ist aus der Gruppe bestehend aus Polyphenylsiloxanen,
j) die Kohlenstoffmodifikation ausgewählt ist aus der Gruppe bestehend aus Kohlenstoff-Nanoröhren (CNT) oder Graphen,
sowie Kombinationen oder Mischungen hieraus verwendet werden.

Bei den unter e) genannten halogenhaltigen Flammschutzmitteln handelt es sich häufig um kommerzielle Produkte, die z.B. von den Firmen Albemarle, Chemtura/Great Lakes oder ICL-IP im Handel erhältlich sind.

Insbesondere bei Kombinationen der erfindungsgemäß verwendeten Verbindungen gemäß Formeln I bis IV mit mindestens einem Radikalbildner als weiteres Flammschutzmittel ergeben sich synergistische Effekte.

Radikalbildner im Sinne der vorliegenden Erfindung sind Verbindungen, die durch thermische und Licht-induzierte Spaltung Radikale erzeugen können. Geeignete Radikalbildner für die hier vorliegenden Anwendungen sind solche, die für die Kunststoff- oder Beschichtungs-Verarbeitungsprozesse eine ausreichende thermische Stabilität aufweisen, d.h. bei der Verarbeitung noch keine oder nur sehr geringe Mengen an Radikalen bilden und erst bei höheren Temperaturen, wie sie erst im Brandfall auftreten, spontan Radikale erzeugen. Die jeweiligen Verarbeitungsprozesse und Temperaturen für Beschichtungen und Kunststoff-Verarbeitungsprozesse sind dem Fachmann bekannt. Kunststoff-Verarbeitungsprozesse und dazugehörige Temperaturen können aber auch der Fachliteratur entnommen werden wie z.B. H. Domininghaus, P. Elsner, P. Eyerer. T. Hirth, Kunststoffe , 8. Auflage, Springer 2012.

Der Radikalbildner ist dabei bevorzugt ausgewählt aus der Gruppe bestehend aus N-Alkoxyaminen, -C-C- Radikalbildnern, Radikalbildnern mit Azogruppen (-N=N-), Radikalbildnern mit Hydrazingruppen (-NH-HN-), Radikalbildnern mit Hydrazongruppen (>C=N-NH-), Radikalbildnern mit Azingruppen (>C=N-N=C<), Radikalbildnern mit Triazengruppen (-N=N-N<) oder aus Iminoxytriazinen.

Die Herstellung geeigneter Azoverbindungen ist beispielsweise in M. Aubert et. al. Macromol. Sci. Eng. 2007, 292, 707-714 oder in WO 2008101845, die Herstellung von Hydrazonen und Azinen in M. Aubert et al., Pol. Adv. Technol. 2011, 22, 1529-1538, die Herstellung von Triazenen in W. Pawelec et al., Pol. Degr. Stab. 2012, 97, 948-954 beschrieben. Die Synthese von Iminoxytriazinen ist in WO 2014/064064 beschrieben.

Insbesondere zu verwendende Radikalbildner sind dabei ausgewählt aus der Gruppe bestehend aus
a) N-Alkoxyaminen gemäß der nachfolgend abgebildeten Strukturformel wobei 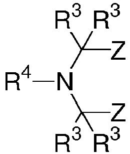
   - R³: für Wasserstoff oder einen gegebenenfalls substituierter Alkyl-, Cycloalkyl-, Aryl-, Heteroaryl- oder Acyl-Rest steht, insbesondere ein C1 bis C4- Alkylrest ist,
   - R⁴: für einen Alkoxy-, Aryloxy-, Cycloalkoxy-, Aralkoxy- oder Acyloxy-Rest steht,
   - Z: für Wasserstoff oder einen gegebenenfalls substituierter Alkyl-, Cycloalkyl-, Aryl-, Heteroaryl- oder Acyl-Rest steht, wobei die beiden Reste Z auch einen geschlossenen Ring bilden können, der ggf. durch Ester-, Ether-, Amin, Amid, Carboxy- oder Urethangruppen substituiert sein kann,
   - E: für einen Alkoxy-, Aryloxy- Cycloalkyloxy-, Aralkoxy oder Acyloxy-rest steht,
b) Azo-Verbindungen gemäß der nachfolgend abgebildeten Strukturformeln

   R⁵-N=N-R⁵

   oder 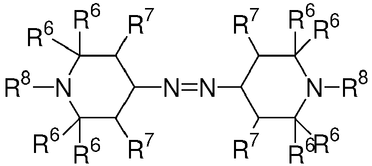 wobei
   - R⁵: einen Alkly-, Cycloalkyl- oder Arylrest bedeutet,
   - R⁶: bei jedem Auftreten gleich oder verschieden ist und einen linearen oder verzweigten Alkylrest bedeutet,
   - R⁷: bei jedem Auftreten gleich oder verschieden ist und Wasserstoff oder einen linearen oder verzweigten Alkylrest bedeutet, und
   - R⁸: bei jedem Auftreten gleich oder verschieden ist und einen Alkyl, Alkoxy-, Aryloxy- Cycloalkyloxy-, Aralkoxy oder Acyloxyrest bedeutet,
c) Dicumyl gemäß der nachfolgend abgebildeten Strukturformel 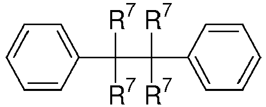 wobei R⁷ die zuvor angegebene Bedeutung aufweist, bevorzugt Methyl ist,
d) und/oder Polycumyl gemäß der nachfolgend abgebildeten Strukturformel 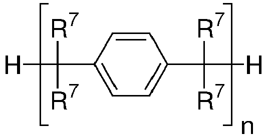 wobei R⁷ die zuvor angegebene Bedeutung aufweist, bevorzugt Methyl ist, und 2 < n < 100.

Typische Beispiele für die zuvor genannten N-Alkoxyamine der angegebenen Struktur sind dabei:
1-Cyclohexyloxy-2,2,6,6-Tetramethyl-4-Octadecylaminopiperidin; Bis(1-Octyloxy-2,2,6,6-Tetramethylpiperidin-4-yl) Sebacat; 2,4-Bis[(1-Cyclohexyloxy-2,2,6,6-Tetramethylpiperidin-4-yl)Butylamino]-6-(2-Hydroxyethylamino-S-Triazin; Bis(1-Cyclohexyloxy-2,2,6,6-Tetramethylpiperidin-4-yl) Adipat; 2,4-Bis[(1-Cyclohexyloxy-2,2,6,6-Tetramethylpiperidin-4-yl)Butylamino]-6-Chloro-S-Triazin; 1-(2-Hydroxy-2-Methylpropoxy)-4-Hydroxy-2,2,6,6-Tetramethylpiperidin; 1-(2-Hydroxy-2-Methylpropoxy)-4-Oxo-2,2,6,6-Tetramethylpiperidin; 1-(2-Hydroxy-2-Methylpropoxy)-4-Octadecanoyloxy-2,2,6,6-Tetramethylpiperidin; Bis(1-(2-Hydroxy-2-Methylpropoxy)-2,2,6,6-Tetramethylpiperidin-4-yl) Sebacat; Bis(1-(2-Hydroxy-2-Methylpropoxy)-2,2,6,6-Tetramethylpiperidin-4-yl) Adipat; 2,4-Bis{N-[1-(2-Hydroxy-2-Methylpropoxy)-2,2,6,6-Tetramethylpiperidin-4-yl]-N-Butylamino}-6-(2-Hydroxyethylamino)-S-Triazin); 4-Piperidinol, 2,2,6,6-Tetramethyl-1-(undecyloxy)-4,4'-carbonat; das Reaktionsprodukt von 2,4-Bis[(1-Cyclohexyloxy-2,2,6,6-Tetramethylpiperidin-4-yl)Butylamino]-6-Chloro-S-Triazin mit N,N'-Bis(3-Aminopropylethylendiamin); die Oligomer-Verbindung, welche das Kondensationsprodukt ist von 4,4'-Hexamethylen-Bis(Amino-2,2,6,6-Tetramethylpiperidin) und 2,4-Dichloro-6-[(1-Cyclohexyloxy-2,2,6,6-Tetramethyl-4-yl)Butylamino]-S-Triazin, an den Enden verschlossen mit 2-Chloro-4,6-Bis(Dibutylamino)-S-Triazin; aliphatische Hydro- 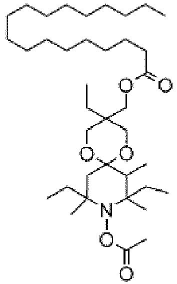 or 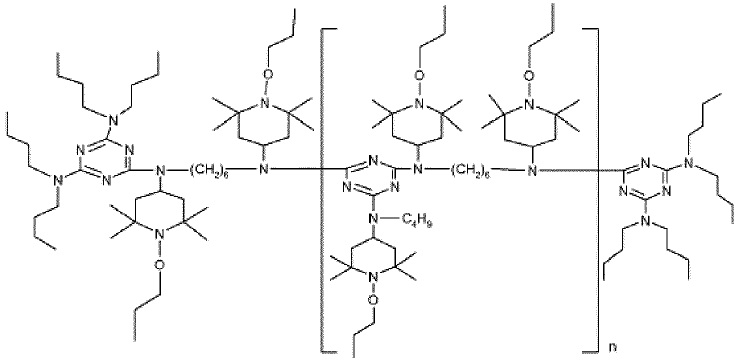 xylamin wie z.B. Disterarylhydroxylamin; sowie Verbindungen der Formeln in denen n = 1-15 ist.

Die oben genannten Verbindungen sind teilweise kommerzielle Produkte und werden unter den folgenden Handelsnamen gehandelt: FLAMESTAB NOR 116 (RTM), TINUVIN NOR 371 (RTM), IRGATEC CR 76 (RTM) von BASF SE, Hostavin NOW (RTM) von Clariant oder ADK Stab LA 81 (RTM) von Adeka. Dicumyl und Polycumyl sind Handelsprodukte, die z.B. von United Initiators erhältlich sind.

Das mindestens eine weitere Flammschutzmittel kann insbesondere auch ein phosphorhaltiges Flammschutzmittel sein. Bevorzugte phosphorhaltige Flammschutzmittel sind dabei Phosphinate der folgenden Strukturen: 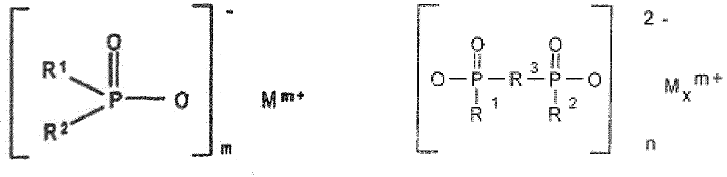 wobei bevorzugt R¹ und R² identisch oder verschieden sind und ausgewählt sind aus linearem oder verzweigtem C1-C6-Alkyl und/oder Aryl; R3 ausgewählt ist aus der Gruppe bestehend aus C1-C6-Alkylen, M ausgewählt ist aus der Gruppe bestehend aus Mg, Ca, AI, Sb, Sn, Ge, Ti, Fe, Zr, Ce, Bi, Sr, Mn, Li, Na, K, Zn und/oder einem protonierten Stickstoff-Base, vorzugsweise Calcium-Ionen, Magnesium-Ionen, Aluminium-Ionen, und/oder Zink-Ionen; und m = 1-4, bevorzugt 2 oder 3, ist; n = 1-4, bevorzugt 1 oder 3, ist; x = 1-4, bevorzugt 1 oder 2, ist. In einer besonders bevorzugten Ausführungsform ist R₁ = Alkyl, R₂ = Alkyl und M = Al oder Zn.

Ein besonders bevorzugtes Beispiel für ein erfindungsgemäßes Phosphinat sind die kommerziell erhältlichen Produkte Exolit OP (RTM) von Clariant SE.

Weitere bevorzugte phosphorhaltige Flammschutzmittel sind Metallsalze der hypophosphorigen Säure mit einer Struktur gemäß der Formel 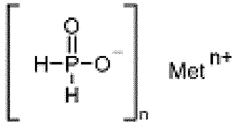 wobei Met ein Metall ist, ausgewählt aus den Gruppen I, II, III und IV des Periodensystems der Elemente, und n eine Zahl von 1 bis 4 ist, die der Ladung des entsprechenden Metall-Ions Met entspricht. Metⁿ⁺ ist beispielsweise Na⁺, Ca²⁺, Mg²⁺, Zn²⁺, Ti⁴⁺ oder Al³⁺, wobei Ca²⁺, Zn²⁺ und Al³⁺ besonders bevorzugt sind.

Die oben genannten Salze der hypophosphorigen Säure sind teilweise kommerziell erhältlich z.B. unter der Bezeichnung Phoslite (RTM) von Italmatch Chemicals.

Eine weitere bevorzugte Gruppe von Phosphorhaltigen Flammschutzmitteln sind Phosphonate oder Phosphonsäurediarylester einer Struktur gemäß der folgenden Formel: 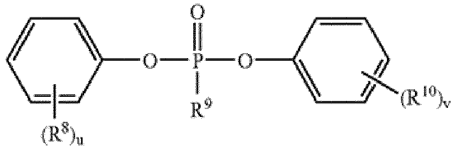 wobei R₈, und R₁₀ = H, Alkyl, vorzugsweise C1-C4 sind, R₉= C1-C4 alkyl u = 1-5st und v = 1-5ist.

Entsprechende Strukturen können auch in der Form von Phosphonat-Oligomeren, Polymeren und Co-Polymeren vorliegen. Linear oder verzweigte Phosphonat-Oligomere und Polymere sind aus dem Stand der Technik bekannt. Für verzweigte Phosphonat-Oligomere und Polymere wird auf die US-Patente US 2 716 101, US 3 326 852, US 4 328 174, US 4 331 614, US 4 374 971, US 4 415 719, US 5 216 113, US 5 334 692, US 3 442 854, US 6 291 630 B1 US 6 861 499 B2 und US 7816486 B2 verwiesen. Für Phosphonat-Oligomere wird auf die US-Patentanmeldungen US 2005/0020800 A1, US 2007/0219295 A1 und US 2008/0045673 A1 verwiesen. In Bezug auf lineare Phosphonat-Oligomere und Polymere wird auf die US-Patent-Dokumente , US 3 946 093, US 3 919 363, US 6 288 210 B1, US 2 682 522 und US 2 891 915 verwiesen.

Oligomere und polymere Phophonate sind beispielsweise unter dem Handelsnamen Nofia (RTM) von FRX Polymers erhältlich.

Eine weitere bevorzugte Gruppe von phosphorhaltigen Flammschutzmitteln sind Verbindungen auf Basis von Oxaphosphorinoxid und deren Derivate mit beispielsweise den folgenden Strukturen: 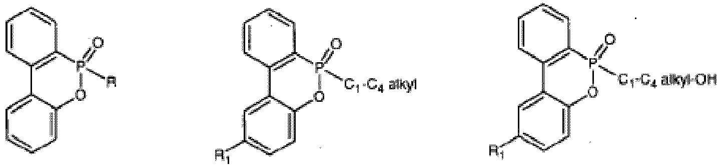 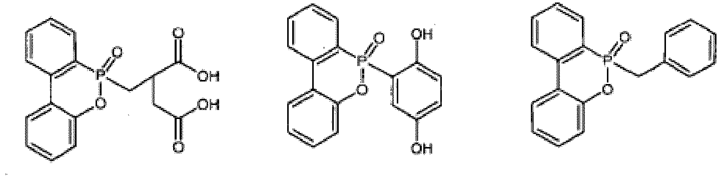 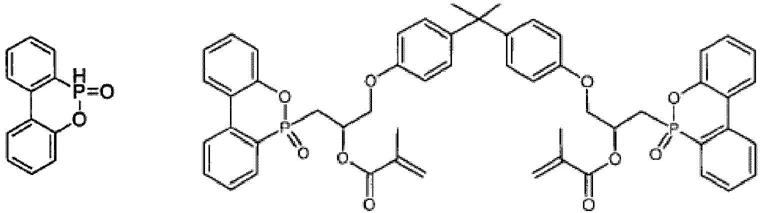 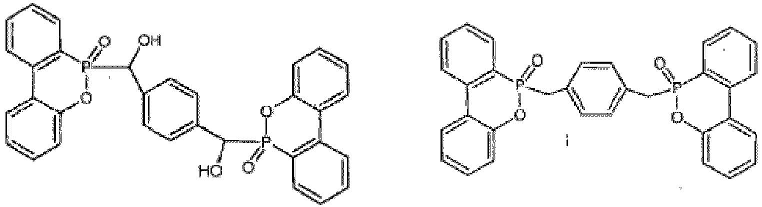 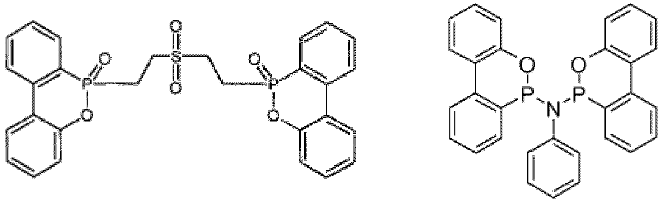 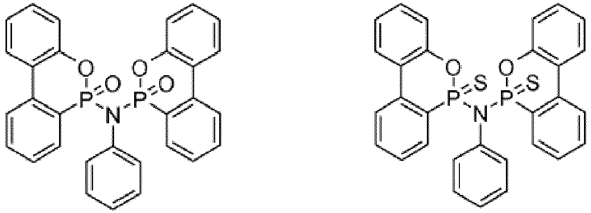 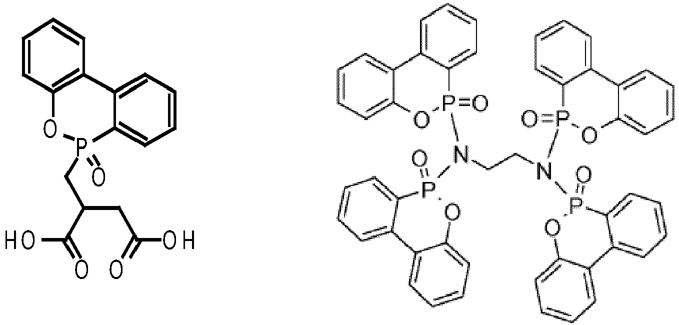 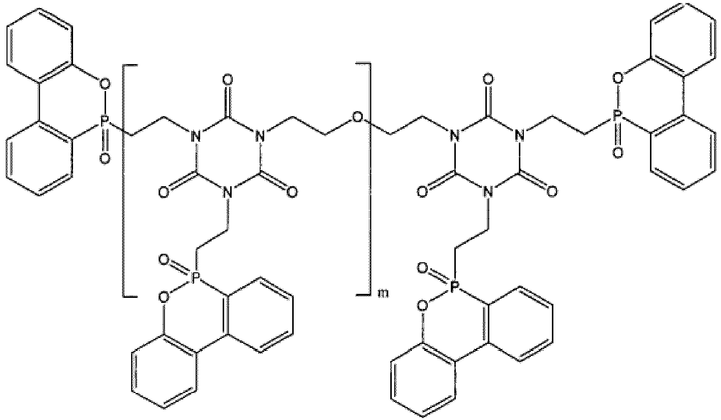 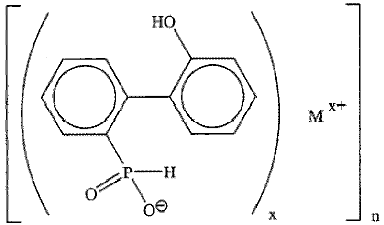 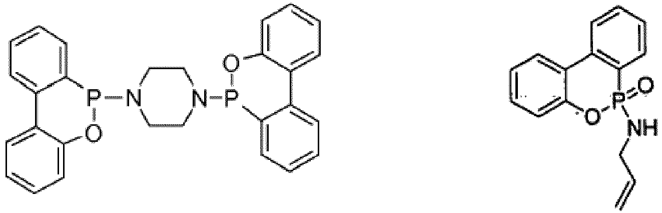 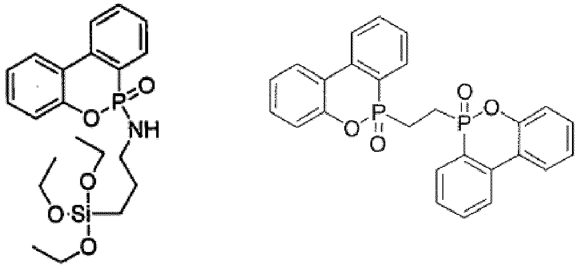 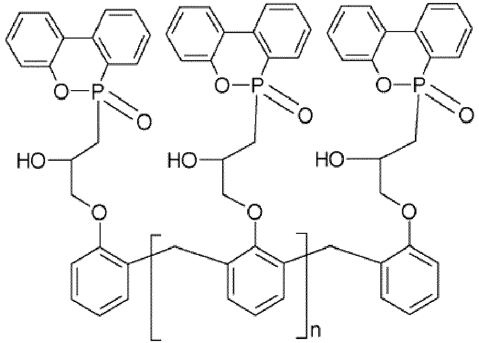 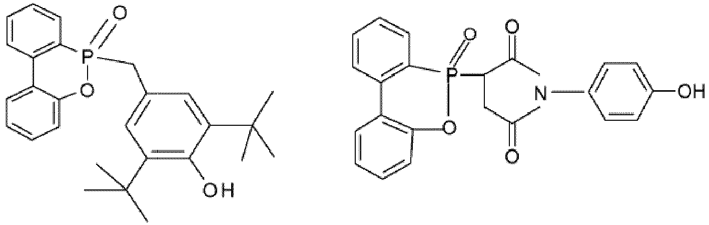 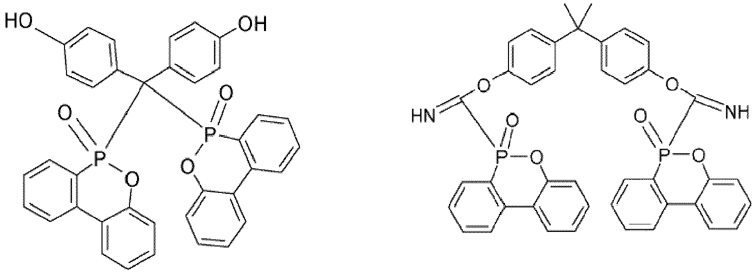 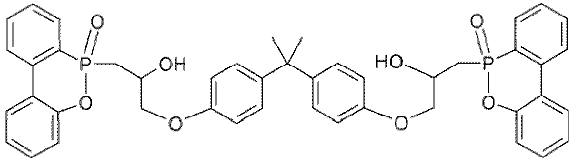 wobei M ein Metall ist, ausgewählt aus der zweiten, dritten, zwölften oder dreizehnten Gruppe des Periodensystems der Elemente ist, x = 2 oder 3 ist, n ≥ 10 ist, m= 0-25 ist, R = H, Halogen oder ein aliphatischer oder aromatischer Rest mit 1-32 C-Atomen ist und R₁ = H, C1-C6 alkyl oder phenyl ist.

Produkte auf der Basis von Oxophosphorinoxid sind beispielsweise unter dem Handelsnamen Ukanol (RTM) von Schill und Seilacher GmbH im Handel. Weitere Verbindungen können beispielsweise gemäß der Patentschriften WO 2013020696, WO 2010135398, WO03070736, WO2006084488, WO 2006084489, WO2011000019, WO2013068437, WO2013072295 hergestellt werden.

Weitere synergistische phosphorhaltige Flammschutzmittel sind zyklische Phosphonate einer Struktur gemäß einer der folgenden Formeln: 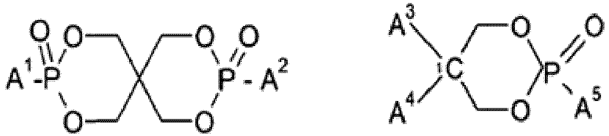 wobei A¹ und A² unabhängig voneinander eine substituierte oder nicht substituierte, geradkettige oder verzweigte Alkylgruppe mit 1 bis 4 Kohlenstoffatomen, substituiertes oder nicht substituiertes Benzyl, substituiertes oder nicht substituiertes Phenyl, substituiertes oder nicht substituiertes Naphthyl darstellten und wobei A³ und A⁴ unabhängig voneinander Methyl oder Ethyl sind und A⁵ eine geradkettige oder verzweigte Alkylgruppe mit 1 bis 4 Kohlenstoffatomen oder eine Phenyl- oder Benzylgruppe ist, die jeweils bis zu 3 Methylgruppen aufweisen kann, ist.

Zyklische Phosphonate sind beispielsweise von der Fa. Thor GmbH unter dem Handelsnamen Aflammit (RTM) im Handel oder können gemäß EP 2450401 hergestellt werden.

Weitere synergistische phosphorhaltige Flammschutzmittel sind Phosphacene, insbes. polymere Phosphacene. Ein entsprechendes Produkt ist z.B. unter der Bezeichnung SPB-100 von Otsuka Chemicals im Handel.

Das mindestens eine weitere Flammschutzmittel kann insbesondere auch ein Stickstoffhaltiges Flammschutzmittel sein. Bevorzugte Stickstoffhaltige Flammschutzmittel sind Melaminpolyphosphat, Melamincyanurat, Melamin-Metall-Phosphate, Poly-[2,4-(piperazin-1,4-yl)-6-(morpholin-4-yl)-1,3,5-triazin] und Ammoniumpolyphosphat. Diese Verbindungen sind kommerzielle Produkte und unter den Handelsnamen Melapur (RTM) von BASF SE, Budit (RTM) von Budenheim Chemische Fabrik, Exolit (RTM) von Clariant, Safire (RTM) von Huber Chemicals oder MCA PPM Triazine von MCA Technologies GmbH erhältlich.

Ganz besonders bevorzugt ist die Kombination der erfindungsgemäßen phosphorhaltigen organischen Oxyimide mit einem Phosphonat oder einem (Poly)phosphacen.

Vorzugsweise werden die phosphorhaltigen organischen Oxyimide und das mindestens eine weitere Flammschutzmittel in einem Gewichtsverhältnis von 99:1 bis 1:99, bevorzugt von 5 : 95 bis 50 : 50, besonders bevorzugt von 10 : 90 bis 30 : 70 verwendet.

Erfindungsgemäß werden die zuvor erwähnten phosphorhaltigen organischen Oxyimide in Kombination mit mindestens einer phosphorhaltigen Verbindung verwendet. Die phosphorhaltige Verbindung ist dabei nicht identisch mit den zuvor erwähnten phosphorhaltigen Flammschutzmitteln. Diese phosphorhaltigen Verbindungen können dabei insbesondere ausgewählt sein aus der Gruppe bestehend aus organischen Phosphiten oder Phosphoniten. Geeignete Verbindungen sind dann beispielsweise: Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-tert-butylphenyl)phosphit, Diisodecylpentaerythritoldiphosphit, Bis(2,4-di-tert-butylphenyl)-pentaerythritoldiphosphit, Bis(2,4-di-cumylphenyl)pentaerythritoldiphosphit, Bis(2,6-di-tert-butyl-4-methylphenyl)pentaerythritoldiphosphit, Diisodecyloxy-pentaerythritoldiphosphit, Bis(2,4-di-tert-butyl-6-methylphenyl)penta-erythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)-methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2'2"-Nitrilo[triethyltris(3,3",5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl))phosphit, 5-Butyl-5-ethyl-2-(2,4,6-tri-tert-butylphenoxy)-1,3,2-dioxaphosphiran.

Zudem ist es vorteilhaft, wenn die phosphorhaltigen organischen Oxyimide, bezogen auf die Kunststoffe, zu 0,01 bis 30 Gew.-%, bevorzugt zu 0,1 bis 20 Gew.-%, besonders bevorzugt zu 1 bis 10 Gew.-% eingesetzt werden.

Die Erfindung betrifft zudem eine flammgeschützte und/oder stabilisierte, insbesondere (photo)oxidativ stabilisierte Kunststoffzusammensetzung, enthaltend oder bestehend aus
a) 60 bis 99,9 Gew.-Teilen, bevorzugt 60 bis 98, besonders bevorzugt 70 bis 95 Gew.-Teilen mindestens eines Kunststoffes, insbesondere mindestens eines thermoplastischen Polymers,
b) 0,1 bis 40 Gew.-Teilen, bevorzugt 1 bis 25, besonders bevorzugt 2,5 bis 15 Gew.-Teilen mindestens eines halogem-freien phosphorhaltigen organischen Oxyimids, enthaltend mindestens ein Strukturelement der nachfolgend abgebildeten Formel I 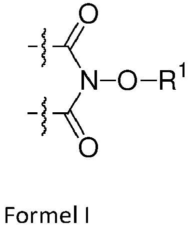 wobei R¹ wie oben stehend definiert ist,
c) 1 bis 25, bevorzugt 1 bis 20 Gew.-Teilen, besonders bevorzugt 2,5 bis 15 Gew.-Teilen mindestens eines weiteren Flammschutzmittels, ausgewählt aus der Gruppe bestehend aus anorganischen Flammschutzmitteln, stickstoffhaltigen Flammschutzmitteln, Radikalbildnern, phosphorhaltigen Flammschutzmitteln, Halogenhaltigen Flammschutzmitteln auf Chlor- und Brombasis, Boraten, schwefelhaltigen Verbindungen, Antidrip-Mitteln, siliciumhaltigen Verbindungen, Kohlenstoffmodifikationen, sowie Kombinationen oder Mischungen hieraus, sowie
d) 0 bis 25 Gew.-Teilen, bevorzugt 1 bis 20 Gew.-Teilen, besonders bevorzugt 2,5 bis 15 Gew.-Teilen mindestens einer phosphorhaltigen Verbindung, ausgewählt aus der Gruppe bestehend aus Phosphiten oder Phosphoniten, wobei die mindestens eine phosphorhaltigen Verbindung nicht identisch ist mit den phosphorhaltigen Flammschutzmitteln.

Die in der Zusammensetzung eingesetzten Oxyimidsalze und/oder Flammschutzmittel entsprechen den voranstehend beschriebenen Oxyimidsalzen bzw. Flammschutzmitteln. Insbesondere ist es bevorzugt, wenn das Flammschutzmittel ein Phosphonat oder ein (Poly)phosphacen ist.

Bevorzugte Zusammensetzungen bestehen aus:
(A) 60-98 Teile von mindestens einem thermoplastischen Polymeren
(B) 0.1-20 Teile mindestens einem phosphorhaltigen Oxyimid
(C) 1-20 Teile eines weiteren Flammschutzmittels

Für die Zwecke der erfindungsgemäßen Zusammensetzung können sämtliche der zuvor beschriebenen Oxyimide verwendet werden.

Insbesondere die obenstehend beschriebenen phosphorhaltigen organischen Oxyimide, bei denen zumindest ein, bevorzugt alle Phosphoratome in niedrigen Oxidationsstufen, d.h. -2, -1-, 0, +1, +2, +3 vorliegen, können darüber hinaus als Stabilisatoren eingesetzt werden z.B. um einen Kunststoff bei der Verarbeitung vor Oxidation zu schützen und wirken somit als Antioxidantien.

Besonders bevorzugte Verbindungen als Antioxidantien sind dabei Oxyimide mit Phosphit- oder Phosphonitgruppen. Durch die Stabilisierung wird eine (photo)oxidative Schädigung des Kunststoffs verzögert oder verhindert. Ein weiterer Erfindungsgegenstand ist daher ein stabilisierter Kunststoff, der die o.a. phosphorhaltigen Oxyimide in niedrigen Oxidationsstufen als Stabilisatoren enthält sowie ein Verfahren zur Herstellung dieses stabilisierten Kunststoffs.

Hinsichtlich des Kunststoffes, insbesondere des thermoplastischen Polymers sowie des phosphorhaltigen organischen Oxyimids wird dabei auf die bereits weiter oben angegebenen Definitionen und Erläuterungen Bezug genommen. Sämtliche dazu zuvor beschriebenen Ausführungsformen gelten ebenso uneingeschränkt für die flammgeschützte Kunststoffzusammensetzung.

Vorteilhaft bei der flammgeschützten Kunststoffzusammensetzung ist dabei weiterhin, dass zusätzlich
e) bis 40 Gew.-Teile mindestens eines Verstärkungs- oder Füllstoffes und/oder
f) bis 5 Gew.-Teile mindestens eines Additivs aus der Klasse der phenolischen Antioxidantien, Säurefänger, gehinderten Amine, Dispergiermittel sowie Kombinationen hiervon
   enthalten sind.

Die flammgeschützte Kunststoffzusammensetzung kann Zusatzstoffe ausgewählt aus der Gruppe bestehend aus UV-Absorber, der Lichtstabilisatoren, der Stabilisatoren, der Hydroxylamine, der Benzofuranone, der Nukleierungsmittel, Schlagzähigkeitsverbesserer, Weichmacher, Gleitmittel, Rheologiemodifikatoren, Kettenverlängerer, Verarbeitungshilfsmittel, Pigmente, Farbstoffe, optische Aufheller, antimikrobielle Wirkstoffe, Antistatika, Slipmittel, Antiblockmittel, Kopplungsmittel, Dispergiermittel, Kompatibilisatoren, Sauerstofffänger, Säurefänger, Markierungsmittel oder Antifoggingmittel eingesetzt werden. In bevorzugter Ausführungsform enthalten die Zusammensetzungen insbesondere Säurefänger, z.B. auf Basis von Salzen langkettiger Säuren wie z.B. Calciumstearat, Magnesiumstearat, Zinkstearat, Calciumlactat oder von Hydrotalciten und/oder Stabilisatoren aus der Gruppe der phenolischen Antioxidantien und der Phosphite und/oder Lichtstabilisatoren aus der Gruppe der gehinderten Amine (HALS) und/oder Dispergiermittel enthalten.

Geeignete Lichtstabilisatoren sind beispielsweise Verbindungen auf der Basis von 2-(2'-Hydroxyphenyl)benzotriazolen, 2-Hydroxybenzophenonen, Estern von Benzoesäuren, Acrylaten, Oxamiden und 2-(2-Hydroxyphenyl)-1,3,5-Triazinen.

Geeignete 2-(2'-Hydroxyphenyl)benzotriazole sind beispielsweise 2-(2'-Hydroxy-5'methylphenyl)benzotriazol, 2-(3',5'-Di-*tert*-butyl-2'-hydroxyphenyl)-benzotriazol, 2-(5'-*tert*-Butyl-2'-hydroxy-phenyl)benzotriazol, 2-(2'-Hydroxy-5'-(1,1,3,3-tetramethylbutyl)phenyl)benzotriazol, 2-(3',5'-Di-*tert*-butyl-2'-hydroxyphenyl)-5-chlorobenzotriazol, 2-(3'-*tert*-Butyl-2'-hydroxy-5'-methylphenyl-5-chlorobenzotriazol, 2-(3'-*sec*-Butyl-5'-tert-butyl-2'-hydroxy-phenyl)benzotriazol, 2-(2'-Hydroxy-4'-octyloxyphenyl)benzotriazol, 2-(3',5'-Di-*tert*-amyl-2'-hydroxyphenyl)benzotriazol, 2-(3',5'-Bis(α,α-dimethylbenzyl)-2'-hydroxyphenyl)benzotriazol, 2-(3'-*tert*-Butyl-2'-hydroxy-5'-(2-octyloxycarbonyl-ethyl)phenyl)-5-chlorobenzotriazol, 2-(3'-*tert*-Butyl-5'-[2-(2-ethylhexyloxy)carbonylethyl]-2'-hydroxyphenyl)-5-chlorobenzotriazol, 2-(3'-*tert*-Butyl-2'-hydroxy-5'-(2-methoxycarbonylethyl)phenyl)-5-chlorobenzotriazol, 2-(3'-*tert-*Butyl-2'-hydroxy-5'-(2-methoxycarbonylethyl)phenyl)benzotriazol, 2-(3'-*tert-*Butyl-2'-hydroxy-5'-(2-octyloxycarbonylethyl)phenyl)benzotriazol, 2-(3'-*tert-*Butyl-5'-[2-(2-ethylhexyloxy)carbonylethyl]-2'-hydroxyphenyl)benzotriazol, 2-(3'-Dodecyl-2'-hydroxy-5'-methylphenyl)benzotriazol, 2-(3'-*tert*-Butyl-2'-hydroxy-5'-(2-isooctyloxycarbonylethyl)phenylbenzotriazol, 2,2'-Methylenbis[4-(1,1,3,3-tetramethylbutyl)-6-benzotriazol-2-ylphenol]; das Produkt der Umesterung von 2-[3'-*tert*-Butyl-5'-(2-methoxycarbonylethyl)-2'-hydroxyphenyl]-2H-benzotriazol mit Polyethylenglycol 300; [R-CH₂CH₂-COO-CH₂CH₂⁆-₂, wobei R = 3'-*tert*-Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)phenyl]benzotriazol, 2-[2'-hydroxy-3'-(1,1,3,3-tetramethylbutyl)-5'-(α,α-dimethylbenzyl)phenyl]benzotriazol.

Geeignete 2-Hydroxybenzophenone sind beispielsweise 4-Hydroxy-, 4-Methoxy-, 4-Octyloxy-, 4-Decyloxy- 4-Dodecyloxy, 4-Benzyloxy, 4,2',4'-Trihydroxy- und 2'-Hydroxy-4,4'-dimethyoxy-Derivate der 2-Hydroxybenzophenone.

Geeignete Acrylate sind beispielsweise Ethyl-α-cyano-β,β-diphenylacrylat, Isooctyl-α-cyano-β,β-diphenylacrylat, Methyl-α-carbomethoxycinnamat, Methyl-α-cyano-β-methyl-p-methoxycinnamat, Butyl-α-cyano-β-methyl-p-methoxycinnamat, Methyl-α-carbomethoxy-p-methoxycinnamat und N-(β-carbomethoxy-β-cyanovinyl)-2-methylindolin.

Geeignete Ester von Benzoesäuren sind beispielsweise 4-*tert*-Butylphenylsalicylat, Phenylsalicylat, Octylphenylsalicylat, Dibenzoylresorcinol, Bis(4-tert-butylbenzoyl)resorcinol, Benzoylresorcinol, 2,4-Di-*tert*-butylphenyl-3,5-di-tert-butyl-4-hydroxybenzoat, Hexadecyl-3,5-di-*tert*-butyl-4-hydroxybenzoat, Octadecyl-3,5-di-*tert*-butyl-4-hydroxybenzoat, 2-Methyl-4,6-di-*tert*-butylphenyl-3,5-di-*tert*-butyl-4-hydroxybenzoat.

Geeignete Oxamide sind beispielsweise 4,4'-Dioctyloxyoxanilid, 2,2'-diethoxyoxanilid, 2,2'-Dioctyloxy-5,5'-di-*tert*-butoxanilid, 2,2'-didodecyloxy-5,5'-di-*tert-*butoxanilid, 2-Ethoxy-2'-ethyloxanilid, N,N'-Bis(3-dimethylaminopropyl)oxamid, 2-Ethoxy-5-*tert*-butyl-2'-ethoxanilid und seine Mischungen mit 2-Ethoxy-2'-ethyl-5,4'-di-*tert*-butoxanilid, Mischungen von o- und p-Methoxy-disubstituierten Oxaniliden und Mischungen von o- und p-Ethoxy-disubstituierten Oxaniliden.

Geeignete 2-(2-Hydroxyphenyl)-1,3,5-Triazine sind beispielsweise 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)-phenyl]-4,6-bis(2,4-dimethyl)-1,3,5-triazin, 2-[2-Hydroxy-4-(2-hydroxy-3-octyloxypropyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxypropoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl-1,3,5-triazin.

Geeignete Metalldesaktivatoren sind beispielsweise N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)oxylyldihydrazid, N,N'-Bis(salicyloyl)thiopropionyldihydrazid.

Insbesondere als Metalldesaktivatoren geeignet sind die folgenden Strukturen:

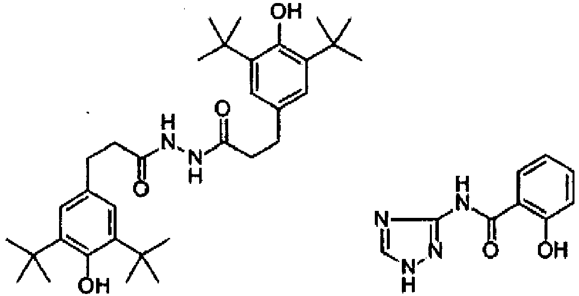

Geeignete phenolische Antioxidantien sind beispielsweise:
Alkylierte Monophenole, wie z.B. 2,6-Di-tert-butyl-4-methylphenol, 2-*tert-*Butyl-4,6-dimethylphenol, 2,6-Di-*tert*-butyl-4-ethylphenol, 2,6-Di-tert-butyl-4-n-butylphenol, 2,6-Di-*tert*-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-*tert*-butyl-4-methoxymethyl-phenol, lineare oder verzweigte Nonylphenole, wie z.B. 2,6-Dinonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol und Mischungen hiervon;
Alkylthiomethylphenole, wie z.B. 2,4-Dioctylthiomethyl-6-*tert*-butylphenol, 2,4-Dioctylthiomethyl-6-methylphenol, 2,4-Dioctylthiomethyl-6-ethylphenol, 2,6-Didodecylthiomethyl-4-nonylphenol;
Hydrochinone und alkylierte Hydrochinone, wie z.B. 2,6-Di-*tert*-butyl-4-methyoxyphenol, 2,5-Di-*tert*-butylhydrochinon, 2,5-Di-*tert*-amylhydrochinon, 2,6-Diphenyl-4-octadecyloxyphenol, 2,6-Di-*tert*-butylhydrochinon, 2,5-Di-*tert-*butyl-4-hydroxyanisol, 3,5-Di-*tert*-butyl-4-hydroxyanisol, 3,5-Di-*tert*-butyl-4-hydroxyphenylstearat, Bis(3,5-di-*tert*-butyl-4-hydroxylphenyl)adipat;
Tocopherole, wie z.B. α-, β-, γ-, δ-Tocopherol und Mischungen aus diesen (Vitamin E);
Hydroxylierte Thiodiphenylether, wie z.B. 2,2'-Thiobis(6-*tert*-butyl-4-methylphenol), 2,2'-Thiobis(4-octylphenol), 4,4'-Thiobis(6-*tert*-butyl-3-methylphenol), 4,4'-Thiobis(6-*tert*-butyl-2-methylphenol), 4,4'-Thiobis(3,6-di-*sec*amylphenol), 4,4'-Bis(2,6-dimethyl-4-hydroxyphenyl)disulfid;
Alkylidenbisphenole, wie z.B. 2,2'Methylenbis(6-*tert*-butyl-4-methylphenol), 2,2'-Methylenbis(6-*tert*-butyl-4-ethylphenol), 2,2'-Methylenbis[4-methyl-6-(α-methylcyclohexyl)phenol], 2,2'-Methylenbis(4-methyl-6-cyclhexylphenol), 2,2'-Methylenbis(6-nonyl-4-methylphenol), 2,2'-Methylenbis(4,6-di-*tert-*butylphenol), 2,2'-Ethylidenbis(4,6-di-*tert*-butylphenol), 2,2'-Ethylidenbis(6-*tert*-butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-*tert*-butylphenol, 4,4'-Methylenbis(6-*tert*-butyl-2-methylphenol), 1,1-bis(5-*tert*-butyl-4-hydroxy-2-methylphenyl)butan, 2,6-Bis(3-*tert-*butyl-5-methyl-2-hydroxybenzyl)-4-methylphenol, 1,1,3-Tris(5-*tert*-butyl-4-hydroxy-2-methylphenyl)butan, 1,1-bis(5-*tert*-butyl-4-hydroxy-2-methylphenyl)-3-n-dodecylmercaptobutan, Ethylenglycol-bis[3,3-bis(3'-*tert*-butyl-4'-hydroxyphenyl)butyrat], Bis(3-*tert*-butyl-4-hydroxy-5-methylphenyl)dicyclopentadien, Bis[2-(3'-*tert*-butyl-2'-hydroxy-5'-methylbenzyl)-6-tert-butyl-4-methylphenyl]terephthalat, 1,1-Bis-(3,5-dimethyl-2-hydroxyphenyl)butan, 2,2-Bis(3,5-di-*tert*-butyl-4-hydroxyphenyl)propan, 2,2-Bis-(5-*tert*-butyl-4-hydroxy-2-methylphenyl)-4-n-dodecylmercaptobutan, 1,1,5,5-Tetra(5-*tert*-butyl-4-hydroxy-2-methylphenyl)pentan;
O-, N- und S-Benzyl-Verbindungen, wie z.B. 3,5,3',5'-Tetra-*tert*-butyl-4,4'-dihydroxydibenzylether, Octadecyl-4-hydroxy-3,5-dimethylbenzylmercaptoacetat, Tridecyl-4-hydroxy-3,5-di-*tert*-butylbenzylmercaptoacetat, Tris(3,5-di-*tert*-butyl-4-hydroxybenzyl)amin, , Bis(4-*tert*-butyl-3-hydroxy-2,6-dimethylbenzyl)dithioterephthalat, Bis(3,5-di-tert-butyl-4-hydroxybenzyl)sulfid, Isooctyl-3,5-di-*tert*-butyl-4-hydroxybenzylmercaptoacetat;
Hydroxybenzylierte Malonate, wie z.B. Dioctadecyl-2,2-bis(3,5-di-*tert*-butyl-2-hydroxybenzyl)malonat, Dioctadecyl-2-(3-*tert*-butyl-4-hydroxy-5-methylbenzyl)malonat, Didodecylmercaptoethyl-2,2-bis(3,5-di-*tert*-butyl-4-hydroxybenzyl)malonat, Bis[4-(1,1,3,3-tetramethylbutyl)phenyl]-2,2-bis(3,5-di-*tert-*butyl-4-hydroxybenzyl)malonat;
Aromatische Hydroxybenzylverbindungen, wie z.B. 1,3,5-Tris(3,5-di-*tert*-butyl-4-hydroxybenzyl)-2,4,6-trimethylbenzol, 1,4-Bis(3,5-di-*tert*-butyl-4-hydroxybenzyl)-2,3,5,6-tetramethylbenzol, 2,4,6-Tris(3,5-di-*tert*-butyl-4-hydroxybenzyl)phenol;
Triazinverbindungen, wie z.B. 2,4-Bis(octylmercapto)-6-(3,5-di-*tert*-butyl-4-hydroxyanilino)-1,3,5-triazin, 2-Octylmercapto-4,6-bis(3,5-di-*tert*-butyl-4-hydroxyanilino)-1,3,5-triazin, 2-Octylmercapto-4,6-bis(3,5-di-*tert*-butyl-4-hydroxy-phenoxy)-1,3,5-triazin, 2,4,6-Tris(3,5-di-*tert*-butyl-4-hydroxyphenoxy)-1,2,3-triazin, 1,3,5-Tris(3,5-di-*tert*-butyl-4-hydroxybenzyl)isocyanurat, 1,3,5-Tris(4-*tert*-butyl-3-hydroxy-2,6-dimethylbenzyl)isocyanurat, 2,4,6-Tris(3,5-di-*tert-*butyl-4-hydroxphenylethyl)-1,3,5-triazin, 1,3,5-Tris(3,5-di-*tert*-butyl-4-hydroy-phenylpropionyl)hexahydro-1,3,5-triazin, 1,3,5-Tris(3,5-dicyclohexyl-4-hydroxybenzyl)isocyanurat;
Benzylphosphonate, wie z.B. Dimethyl-2,5-di-*tert*-butyl-4-hydroxybenzylphosphonat, Dietyhl-3,5-di-*tert*-butyl-4-hydroxybenzylphosphonat, Dioctadecyl-3,5-di-*tert*-butyl-4-hydroxybenzylphosphonat, Dioctadecyl-5-*tert*-butyl-4-hydroxy-3-methylbenzylphosphonat, das Calciumsalz des Monoethylesters der 3,5-Di-*tert*-butyl-4-hydroxybenzylphosphonsäure;
Acylaminophenole, wie z.B. 4-Hydroxylauranilid, 4-Hydroxystearanilid, Octyl-N-(3,5-di-*tert*-butyl-4-hydroxyphenyl)carbamat;
Ester der β-(3,5-Di-*tert*-butyl-4-hydroxyphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der β-(5-*tert*-Butyl-4-hydroxy-3-methylphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, 3,9-Bis[2-{3-(3-*tert*-butyl-4-hydroxy-5-methylphenyl)propionyloxy}-1,1-dimethylethyl]-2,4,8,10-tetraoxaspiro[5.5]undecan;
Ester der β-(3,5-Dicyclohexyl-4-hydroxyphenyl)propionsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris-(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der 3,5-Di-*tert*-butyl-4-hydroxyphenyl)essigsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Amide der β-(3,5-Di-tert-butyl-4-hydroxyphenyl)propionsäure, wie z.B. N,N'-Bis(3,5-di-tert-butyl-4-hydroxyphenylpropionyl)hexamethylendiamid, N,N'-Bis(3,5-di-tert-butyl-4-hydroxyphenylpropionyl)hexamethylendiamid, N,N'-Bis(3,5-di-tert-butyl-4-hydroxyphenylpropionyl)hexamethylendiamid, N,N'-Bis(3,5-di-*tert*-butyl-4-hydroxyphenylpropionyl)hydrazid, N,N'-Bis[2-(3-[3,5-di-*tert*-butyl-4-hydroxyphenyl]propionyloxy)ethyl]oxamid (Naugard^{®}XL-1, vertrieben durch Uniroyal);
Ascorbinsäure (Vitamin C).

Besonders bevorzugte phenolische Antioxidantien sind:
Octadecyl-3-(3,5-di-*tert*-butyl-4-hydroxyphenyl)propionat, Pentaerythritol-tetrakis[3-(3,5-di-*tert*-butyl-4-hydroxyphenyl)propionat, Tris(3,5-di-*tert*-butyl-4-hydroxyphenyl)isocyanurat, 1,3,5-Trimethyl-2,4,6-tris(3,5-di-*tert*-butyl-4-hydroxyphenyl)isocyanurat, 1,3,5-Trimethyl-2,4,6-tris(3,5-di-*tert*-butyl-4-hydroxybenzyl)benzol, Triethylenglycol-bis[3-(3-*tert*-butyl-4-hydroxy-5-methylphenyl)propionat, N,N'-Hexan-1,6-diyl-bis[3-(3,5-di-*tert*-butyl-4-hydroxyphenyl)propionsäureamid.

Geeignete Phosphite/Phosphonite sind beispielsweise:
Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-*tert*-butylphenyl)phosphit, Diisodecylpentaerythritoldiphosphit, Bis(2,4-di-*tert*-butylphenyl)pentaerythritoldiphosphit, Bis(2,4-di-cumylphenyl)pentaerythritoldiphosphit, Bis(2,6-di-*tert*-butyl-4-methylphenyl)pentaerythritoldiphosphit, Diisodecyloxypentaerythritoldiphosphit, Bis(2,4-di-*tert*-butyl-6-methylphenyl)pentaerythritoldiphosphit, Bis(2,4,6-tris(*tert*-butylphenyl)pentaerythritoldiphosphit, Tristearylsorbitoltriphosphit, Tetrakis(2,4-di-*tert*-butylphenyl)-4,4'-biphenylendiphosphonit, 6-Isooctyloxy-2,4,8,10-tetra-*tert*-butyl-12H-dibenz[d,g]-1,3,2-dioxaphosphocin, Bis(2,4-di-*tert*-butyl-6-methylphenyl)methylphosphit, Bis(2,4-di-*tert*-butyl-6-methylphenyl)ethylphosphit, 6-Fluoro-2,4,8,10-*tetra*-tert-butyl-12-methyl-dibenz[d,g]-1,3,2-dioxaphosphocin, 2,2'2"-Nitrilo[triethyltris(3,3",5,5'-tetra-*tert*-butyl-1,1'-biphenyl-2,2'-diyl)phosphit], 2-Ethylhexyl(3,3',5,5'-tetra-*tert*-butyl-1,1'-biphenyl-2,2'-diyl))phosphit, 5-Butyl-5-ethyl-2-(2,4,6-tri-*tert*-butylphenoxy)-1,3,2-dioxaphosphiran.

Besonders bevorzugte Phosphite/Phosphonite sind:

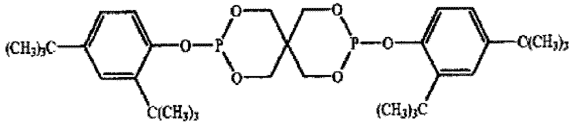

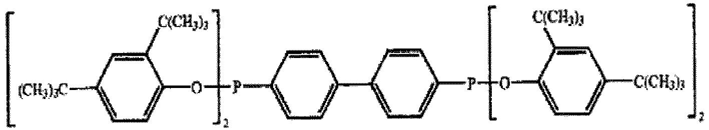

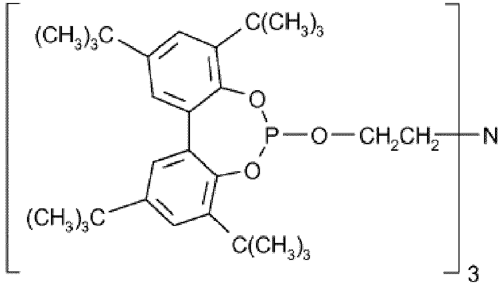

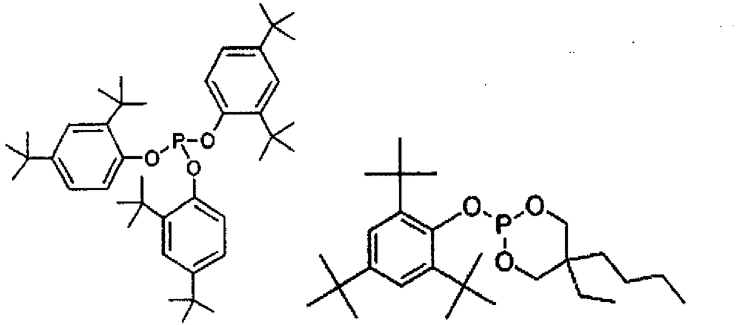

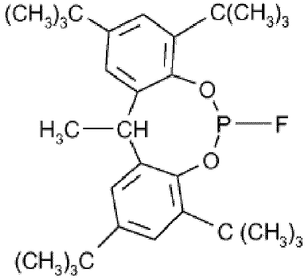

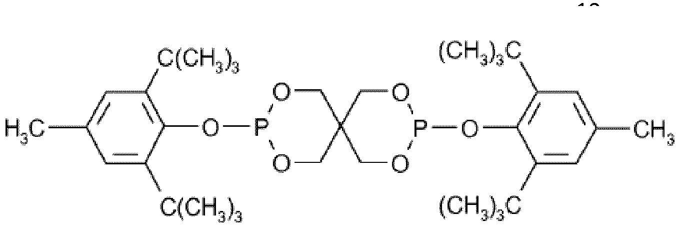

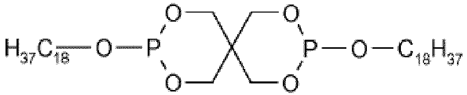

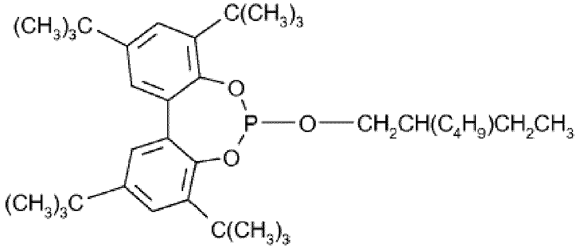

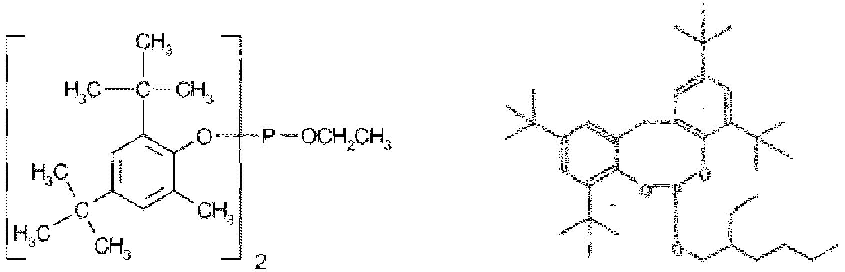

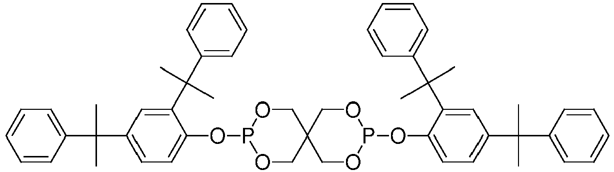

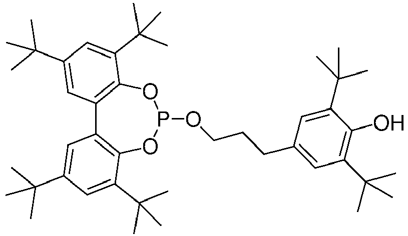

Weitere geeignete Stabilisatoren sind aminische Antioxidantien. Geeignete aminische Antioxidantien sind beispielsweise:
N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylamino-phenol, Bis(4-methoxyphenyl)amin, 2,6-Di-tert-butyl-4-dimethylaminomethyl-phenol, 2,4'-Diaminodiphenylmethan, 4,4'-Diaminodiphenylmethan, N,N,N',N'-Tetra-methyl-4,4'-diaminodiphenylmethan, 1,2-Bis[(2-methyl-phenyl)amino]ethan, 1,2-Bis(phenylamino)propan, (o-Tolyl)biguanid, Bis[4-(1',3'-dimethylbutyl)phenyl]amin, *tert*-octyliertes N-Phenyl-1-naphthylamin, ein Gemisch aus mono- und dialkylierten *tert*-Butyl/tert-Octyldiphenylaminen, ein Gemisch aus mono- und dialkylierten Nonyldiphenylaminen, ein Gemisch aus mono- und dialkylierten Dodecyldiphenylaminen, ein Gemisch aus mono- und dialkylierten Isopropyl/Isohexyl-diphenylaminen, ein Gemisch aus mono- und dialkylierten *tert*-Butyldiphenylaminen, 2,3-Dihydro-3,3-dimethyl-4H-1,4-benzothiazin, Phenothiazin, ein Gemisch aus mono- und dialkylierten *tert*-Butyl/tert-Octylphenothiazinen, ein Gemisch aus mono- und dialkylierten tert-Octylphenothiazinen, N-Allylphenothiazin, N,N,N',N'-Tetraphenyl-1,4-diaminobut-2-en sowie Mischungen oder Kombinationen hiervon.

Weitere geeignete aminische Antioxidantien sind Hydroxylamine bzw. N-oxide (Nitrone), wie z.B. N,N-Dialkylhydroxylamine, N,N-Dibenzylhydroxylamin, N,N-Dilaurylhydroxylamin, N,N-Distearylhydroxylamin, N-Benzyl-α-phenylnitron, N-Octadecyl-α-hexadecylnitron, sowie Genox EP (Addivant) gemäß der Formel:

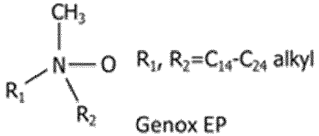

Weitere geeignete Stabilisatoren sind Thiosynergisten. Geeignete Thiosynergisten sind beispielsweise Distearylthiodipropionat, Dilauryldipropionat oder die Verbindung gemäß der folgenden Formel:

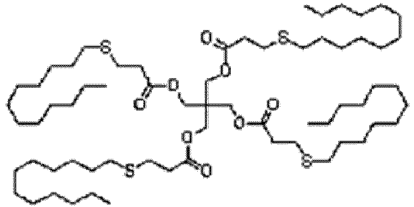

Weitere geeignete Stabilisatoren insbesondere für Polyamide sind Kupfersalze wie z.B. Kupfer-(I)-iodid, Kupfer-(I)-bromid oder Kupferkomplexe wie z.B. Triphenylphosphin_Kupfer-(I)-Komplexe
Geeignete gehinderte Amine sind beispielsweise 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl)hexamethylendiamin und 4-*tert-*Octylamino-2,6-di-chloro-1,3,5-triazin, Tris(2,2,6,6-tetramethyl-4-piperidyl)nitrilotriacetat, Tetrakis(2,2,6,6-tetra-methyl-4-piperidyl)-1,2,3,4-butan-tetracarboxylat, 1,1'-(1,2-Ethandiyl)-bis(3,3,5,5-tetramethylpiperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

Geeignete Dispergiermittel sind beispielsweise:
Polyacrylate, z.B. Copolymere mit langkettigen Seitengruppen, Polyacrylat-Blockcopolymere, Alkylamide: z.B. N,N'-1,2-Ethandiylbisoctadecanamid Sorbitanester, z.B. Monostearylsorbitanester, Titanate und Zirconate, reaktive Copolymere mit funktionellen Gruppen z.B. Polypropylen-co-Acrylsäure, Polypropylen-co-Maleinsäureanhydrid, Polyethylen-co-Glycidylmethacrylat, Polystyrol-alt-Maleinsäureanhydrid-Polysiloxane: z.B. Dimethylsilandiol-Ethylenoxid Copolymer, Polyphenylsiloxan Copolymer, Amphiphile Copolymere: z.B. Polyethylen-block-Polyethylenoxid, Dendrimere, z.B. hydroxylgruppenhaltige Dendrimere.

Geeignete Nukleierungsmittel sind beispielsweise Talkum, Alkali oder Erdalkalisalze von mono- und polyfunktionellen Carbonsäuren wie z.B. Benzoesäure, Bernsteinsäure, Adipinsäure, z.B. Natriumbenzoat, Zinkglycerolat, Aluminiumhydroxy-bis(4-*tert*-butyl)benzoat, Benzylidensorbitole wie z.B. 1,3:2,4-Bis(Benzyliden)sorbitol oder 1,3:2,4-Bis(4-Methylbenzyliden)sorbitol, 2,2'-Methylen-bis-(4,6-di-*tert*-butylphenyl)phosphat, sowie Trisamide wie z.B. gemäß der folgenden Strukturen

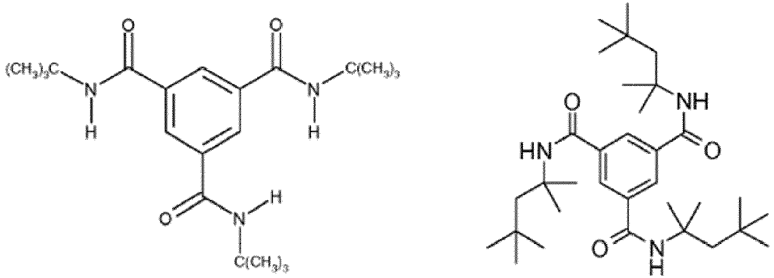

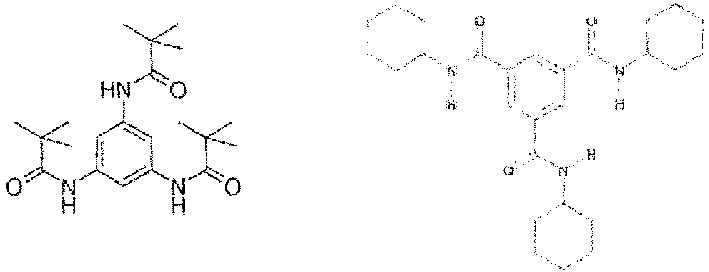

Geeignete Füllstoffe und Verstärkungsstoffe sind beispielsweise synthetische oder natürliche Materialien wie z.B. Calciumcarbonat, Silikate, Glasfasern, Glaskugeln (massiv oder hohl), Talkum, Glimmer, Kaolin, Bariumsulfat, Metalloxide und Metallhydroxide, Ruß, Graphit, Kohlenstoffnanoröhrchen, Graphen, Holzmehl oder Fasern von Naturprodukten wie z.B. Cellulose oder synthetische Fasern. Weitere geeignete Füllstoffe sind Hydrotalcite oder Zeolithe oder Schichtsilikate wie z.B. Montmorillonit, Bentonit, Beidelit, Mica, Hectorit, Saponit, Vermiculit, Ledikit, Magadit, Illit, Kaolinit, Wollastonit, Attapulgit.

Geeignete Pigmente können anorganischer oder organischer Natur sein. Anorganische Pigmente sind beispielsweise Titandioxid, Zinkoxid, Zinksulfid, Eisenoxid, Ultramarin, Ruß, organische Pigmente sind beispielsweise Anthrachinone, Anthanthrone, Benzimidazolone, Chinacridone, Diketopyrrolopyrrole, Dioxazine, Indanthrone, Isoindolinone, Azo-Verbindungen, Perylene, Phthalocyanine oder Pyranthrone. Weitere geeignete Pigmente sind Effektpigmente auf Metallbasis oder Perlglanzpigmente auf Metalloxid-Basis.

Geeignete Kettenverlängerer für den linearen Molekulargewichtsaufbau von Polykondensationspolymeren wir Polyestern oder Polyamiden sind beispielsweise Diepoxide, Bis-Oxazoline, Bis-Oxazolone, Bis-Oxazine, Diisocyanate, Dianhydride, Bis-Acyllactame, Bis-Maleimide, Dicyanate, Carbodiimide. Weitere geeignete Kettenverlängerer sind polymere Verbindungen wie z.B. Polystyrol-Polyacrylat-Polyglycidyl(meth)acrylat- Copolymere, Polystyrol-Maleinsäureanhydrid-Copolymere und Polyethylen-Maleinsäureanhydrid-Copolymere.

Optische Aufheller sind beispielsweise Bisbenzoxazole, Phenylcumarine oder Bis(styryl)biphenyle und insbesondere optische Aufheller der Formeln:

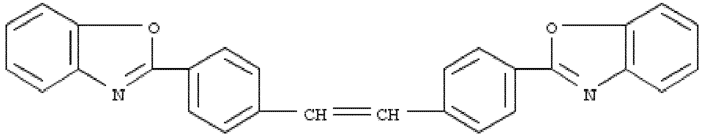

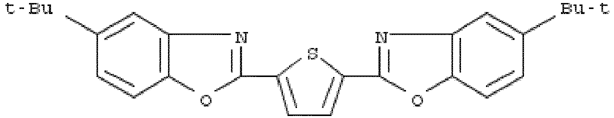

Geeignete Füllstoffdesaktivatoren sind beispielsweise glycidylbasierte Epoxide wie z.B. Bis-phenol-A-diglycidylether oder Bisphenol-F-diglycidylether und deren oligomere oder polymere Harze, Polysiloxane, Polyacrylate insbesondere Blockcopolymere wie Polymethacrylsäure-polyalkylenoxid.

Geeignete Antistatika sind beispielsweise ethoxylierte Alkylamine, Fettsäureester, Alkylsulfonate und Polymere wie z.B. Polyetheramide.

Weiter betrifft die Erfindung ein Verfahren zur Herstellung einer zuvor beschriebenen flammgeschützten und/oder stabilisierten, insbesondere (photo)oxidativ stabilisierten Kunststoffzusammensetzung bei dem
a) 0,1 bis 40 Gew.-Teile, bevorzugt 1 bis 25, besonders bevorzugt 2,5 bis 15 Gew.-Teile mindestens eines phosphorhaltigen organischen Oxyimids, enthaltend mindestens ein Strukturelement der nachfolgend abgebildeten Formel I 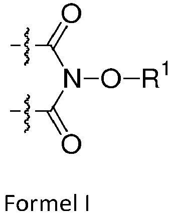
b) vor, nach oder gleichzeitig mit 1 bis 25 Gew.-Teilen, bevorzugt 2,5 bis 15 Gew.-Teilen mindestens eines weiteren Flammschutzmittels
in 60 bis 99,9 Gew.-Teile, bevorzugt 60 bis 98, besonders bevorzugt 70 bis 95 Gew.-Teile mindestens eines Kunststoffes, insbesondere mindestens eines thermoplastischen Polymers eingebracht wird.

Bezüglich der bevorzugt einsetzbaren phopshorhaltigen organischen Oxyimide wird auf die zuvor gemachten Ausführungen verwiesen.

Ein weiterer Gegenstand der vorliegenden Erfindung ist ein Formteil, Lack oder Beschichtung, herstellbar aus einer zuvor beschriebenen flammengeschützten Kunststoffzusammensetzung, insbesondere in Form von Spritzgussteilen, Folien, Beschichtungen, Schäumen, Fasern, Kabeln und Rohren, die über Extrusion, Spritzguss, Blasformen, Pressverfahren hergestellt werden z.B. für Haushalts- und Elektrogeräte, Fahrzeugteile, Konsumartikel, Möbel, Textilien.

Die erfindungsgemäß verwendeten Flammschutzmittel eignen sich insbesondere für thermoplastische, elastomere und duromere Kunststoffe insbesondere in Form von Spritzgussteilen, Folien oder Filmen, Beschichtungen oder Lacken, Schäumen, Fasern, Kabeln und Rohren, Profilen, Hohlkörper, Bändchen, Membranen, wie z.B. Geomembranen, oder Klebstoffen, die über Extrusion, Spritzguss, Blasformen, Kalandrieren, Pressverfahren, Spinnprozesse, Rotomoulding oder Streich- und Beschichtungsprozesse hergestellt werden z.B. für die Elektro- und Elektronikindustrie, Bauindustrie, Transportindustrie (Auto, Flugzeug, Schiff, Bahn), für medizinische Anwendungen, für Haushalts- und Elektrogeräte, Fahrzeugteile, Konsumartikel, Verpackungen, Möbel, Textilien. Ein weiterer Einsatzbereich sind Lacke, Farben und Beschichtungen (Coatings).

Besonders bevorzugte Beispiele für phosphorhaltige organische Oxyimide, die gemäß der vorliegenden Erfindung verwendet werden können bzw. in den flammengeschützten Kunststoffzusammensetzungen enthalten sind, sind nachfolgend dargestellt, ohne die zuvor dargestellte Erfindung jedoch auf diese speziellen Strukturen zu limitieren:

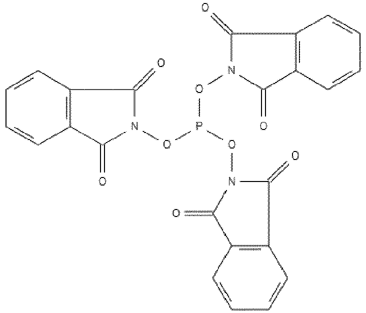

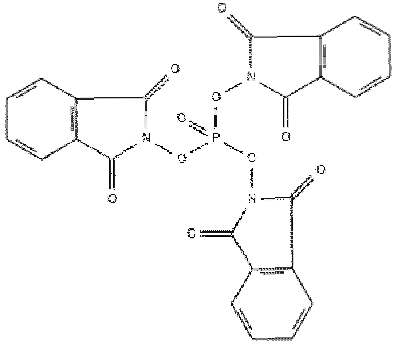

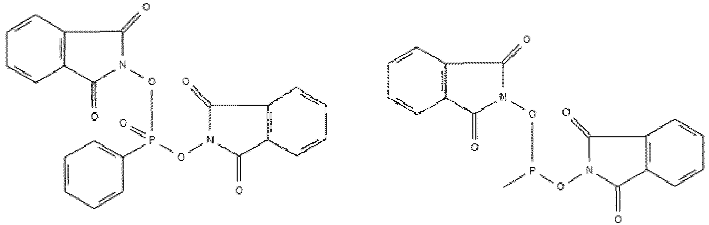

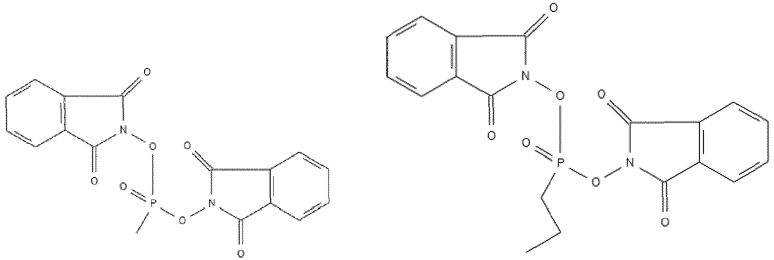

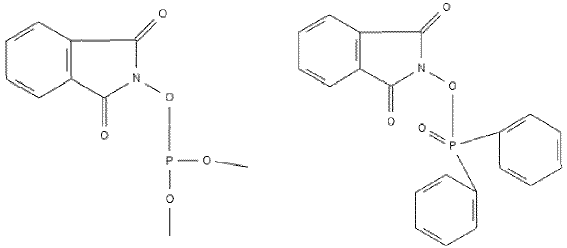

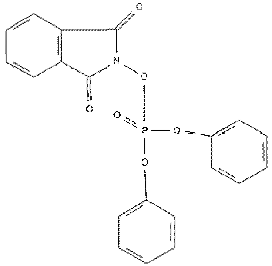

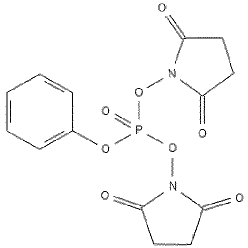

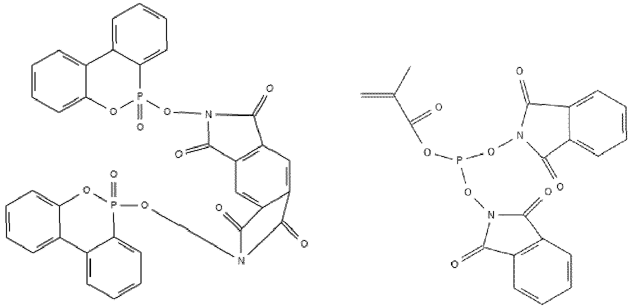

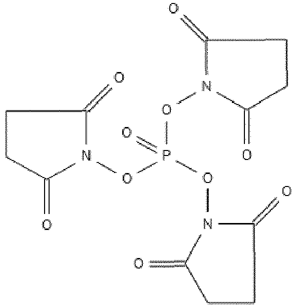

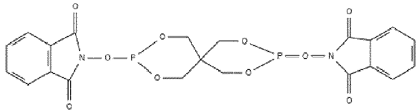

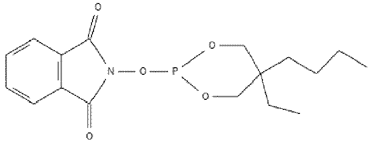

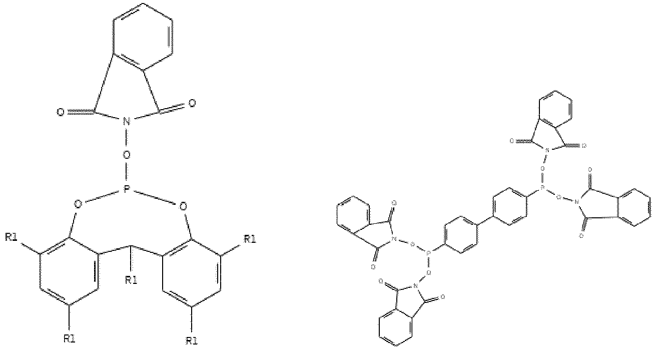

Ggf. können die erfindungsgemäßen phosphorhaltigen Oxyimide auch polymere Strukturen wie z.B. mit den folgenden wiederkehrenden Einheiten aufweisen:

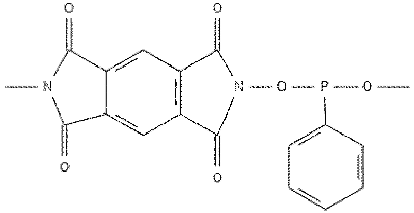

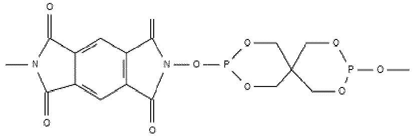

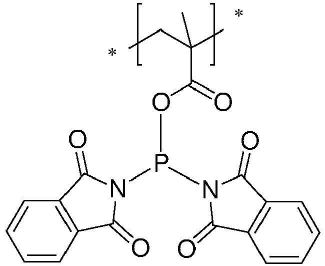

Die Einarbeitung der oben beschriebenen Flammschutzmittel und der zusätzlichen Additive in den Kunststoff erfolgt durch übliche Verarbeitungsmethoden, wobei das Polymere aufgeschmolzen und mit den Flammschutzmitteln und Zusätzen gemischt wird, vorzugsweise durch Mischer, Kneter und Extruder. Als Verarbeitungsmaschinen bevorzugt sind Extruder wie z.B. Einschneckenextruder, Zweischneckenextruder, Planetwalzenextruder, Ringextruder, Co-Kneter, die vorzugsweise mit einer Vakuumentgasung ausgestattet sind. Die Verarbeitung kann dabei unter Luft oder ggf. unter Inertgasbedingungen erfolgen. Verschiedene Flammschutzmittel und Additive können dabei separat oder als Mischung zugegeben werden, in Form von Flüssigkeiten, Pulvern, Granulaten oder kompaktierten Produkten oder ebenfalls in Form von Masterbatchen oder Konzentraten, die beispielsweise 50-80 % der erfindungsgemäßen Zusammensetzungen enthalten.

Die Erfindung wird anhand der nachfolgenden Beispiele näher erläutert, ohne die Erfindung hierauf zu beschränken.

### A) Synthesen von erfindungsgemäßen phosphorhaltigen Oxyimiden

### Synthesebeispiel 1:

### Synthese von Phosphoryl-tris-N-oxyphthalimid

Unter Inertgas wird zu einer Dispersion aus Natrium N-oxyphthalimid (18,41 g; 9,9 mmol) in absolutiertem THF (125 mL) tropfenweise Phosphorylchlorid (3,0 mL; 3,3 mmol) hinzugefügt und das Gemisch anschließend für zwei Tage gerührt, wobei es zur Entfärbung der Dispersion kommt. Die unlöslichen Bestandteile werden durch Filtration abgetrennt und das Produkt enthaltende Gemisch ohne weitere Aufreinigung nach Entfernen des Lösungsmittel am Rotationsverdampfers erhalten.
¹H-NMR (500 MHz, DMSO): δ = 7.82(S) ppm.
¹³C-NMR (126 MHz, DMSO): δ = 164.05, 134.47, 128.73, 122.91, 39.52 ppm.
³¹P-NMR (202 MHz, DMSO): δ = 0.31, -11.76 ppm.

### Synthesebeispiel 2:

### Synthese von Phenoxyphosphoryl-bis-N-oxyphthalimid

Unter Inertgas wird zu einer Dispersion aus Natrium N-oxyphthalimid (18,0 g; 9,7 mmol) in absolutiertem THF (125 mL) tropfenweise Phenyldichlorphosphat (7,1 mL; 4,7 mmol) hinzugefügt und das Gemisch anschließend für zwei Tage gerührt, wobei es zur Entfärbung der Dispersion kommt. Die unlöslichen Bestandteile werden durch Filtration abgetrennt und das Produkt enthaltende Gemisch ohne weitere Aufreinigung nach Entfernen des Lösungsmittel am Rotationsverdampfers erhalten.
¹H-NMR (300 MHz, DMSO): δ = 7.82(S), 7.33-7.31(m).
³¹P-NMR (122 MHz, DMSO): δ = -6.58.

### Synthesebeispiel 3:

### Synthese eines 10-chloro-9,10-dihydro-9-oxa-10-phosphaphenanthren N-Hydroxyphthalimid Addukts:

Unter Inertgas wird zu Lösung aus *N*-hydroxyphthalimid (6,95 g; 42,6 mmol) und Triethylamin (5,9 mL; 42 mmol) in absolutiertem THF (100 mL) tropfenweise eine Lösung von 10-Chlor-9,10-dihydro-9-oxa-10-phosphaphenanthren (10 g; 42,6 mmol) in absolutiertem THF (50 mL) hinzugefügt und das Gemisch anschließend für 12 Stunden bei Umgebungstemperatur gerührt, wobei es zur Entfärbung der Lösung kommt. Nach Beendigung der Reaktion wird das Produkt abfiltriert mit Wasser gewaschen und anschließend als reines Produkt durch Umkristallisation in Toluol erhalten.
¹H NMR (300 MHz, CDCl₃): δ = 8.27 (ddd, *J* = 7.7, 1.5, 0.6 Hz, 1H), 8.05 (d, *J* = 8.0 Hz, 1H), 7.99 (dd, *J* = 8.0, 1.6 Hz, 1H), 7.86 - 7.80 (m, 2H), 7.80 - 7.77 (m, 1H), 7.77 - 7.71 (m, 2H), 7.59 (td, *J* = 7.6, 1.0 Hz, 1H), 7.45 (ddd, *J* = 8.5, 7.0, 1.6 Hz, 1H), 7.39 - 7.34 (m, 1H), 7.31 (ddd, *J* = 8.0, 7.1, 1.6 Hz, 1H).
³¹P NMR (122 MHz, CDCl₃): δ = 2.58.

### Synthesebeispiel 4:

### Synthese von Diphenoxyphosphoryl-N-oxyphthalimid:

Unter Inertgas wird zu Lösung aus N-hydroxyphthalimid (15,18 g; 93 mmol) und Triethylamin (13 mL; 93 mmol) in absolutiertem DCM (400 mL) tropfenweise Diphenoxyphosphorylchlorid (19,3 mL; 93 mmol) hinzugefügt und das Gemisch anschließend für 12 Stunden bei Umgebungstemperatur gerührt, wobei es zur Entfärbung der Lösung kommt. Nach Beendigung der Reaktion wird die Lösung dreimal mit je 200 mL Wasser und anschließend mit 200 mL 10% NaHCO₃ Lösung gewaschen. Nach Trocknung über Calciumchlorid und Entfernen des Lösungsmittels wird das Produkt durch Umkristallisation in DCM/Hexan 1:1 erhalten.
¹H-NMR (300 MHz, CDCl₃): δ = 7.93 - 7.85 (m, 2H), 7.85 - 7.76 (m, 2H), 7.48 - 7.36 (m, 8H), 7.36 - 7.20 (m, 2H).
³¹P-NMR (122 MHz, CDCl₃): δ = -11.68 ppm.

### B) Herstellung und Prüfung einer flammgeschützten erfindungsgemäßen Kunststoff-Mischung

Die Extrusionen der Polypropylen-Proben (DOW C766-03) erfolgen bei einer Temperatur von 190°C und einer Schneckendrehzahl von 150 U/min auf einem 11 mm Doppelschneckenextruder (Process 11 von Thermo Scientific). Das gewünschte Verhältnis aus Polymer und Additiven wird zunächst durch Mischen homogenisiert und über eine volumetrischen Dosierung der Extrusion zugeführt.

Probekörper für die Brandprüfung werden aus dem Granulat bei einer Temperatur von 220°C und einem Druck von 2 t unter Verwendung einer hydraulischen 10t-Presse (Werner & Pfleiderer) hergestellt. Dazu wird das Granulat in die Pressform eingefüllt und diese in die bereits vorgeheizte Presse überführt. Bei einem Druck von 0,5 t wird das Granulat zunächst 60 s lang aufgeschmolzen. Nach Ablauf der Schmelzzeit wird der Druck auf 2 t erhöht und für weitere 3 min konstant gehalten. Unter Beibehaltung des Anpressdruckes wird die Form auf 60 °C abgekühlt und danach die Probekörper entnommen. Die Probenkörper haben gemäß Norm die folgenden Dimensionen: 127,5 x 12,5 x 1,5 mm.

Die in der Tabelle 1 enthaltenen erfindungsgemäßen Beispiele und Vergleichsbeispiele wurden nach DIN EN 60695-11-10 geprüft und die Brennzeiten und Klassifizierung gemäß Norm erhalten:

**Tabelle 1: Zusammensetzungen in Polypropylen und Ergebnisse der Brandprüfung**

| Beispiel | Zusammensetzung Flammschutzmittel | Brennzeiten Summe der Nachbrennzeiten von 5 Prüfkörper bei 2 Beflammungen [in Sekunden] | Klassifizierung nach DIN EN 60695-11-10 |
|---|---|---|---|
| Vergleichsbeispiel 1 (Stand der Technik) | 15 % Aluminiumdiethylphosphinat | >200 | Nicht klassifiziert |
| Vergleichsbeispiel 2 | 20 % Aluminiumdiethylphosphinat | 170 | Nicht klassifiziert |
| Erfindungsgemäßes Beispiel 1 | 15 % Aluminiumdiethylphosphinat | 21,8 | V-2 |
| | 2% Phosphoryl-tris-*N*-oxyphthalimid | | |
| | (Synthesebeispiel 1) | | |
| Erfindungsgemäßes Beispiel 2 | 15 % Aluminiumdiethylphosphinat | | |
| | 2% Phenoxyphosphoryl-bis-*N*-oxyphthalimid | 47,2 | V-2 |
| | (Synthesebeispiel 2) | | |
| Erfindungsgemäßes Beispiel 3 | 6 % Aluminiumdiethylphosphinat | 16,5 | V-2 |
| | 4% Phenoxyphosphoryl-bis-*N*-oxyphthalimid | | |
| | (Synthesebeispiel 2) | | |
| Erfindungsgemäßes Beispiel 4 | 15 % Diethylaluminiumphosphinat | 83,8 | V-2 |
| | 2% 10-chloro-9,10-dihydro-9-oxa-10-phosphaphenanthren *N*-Hydroxyphthalimid Addukt | | |
| | (Synthesebeispiel 3) | | |
| Erfindungsgemäßes Beispiel 5 | 15 % Diethylaluminiumphosphinat | 23,9 | V-2 |
| | 2% Diphenoxyphosphoryl-*N*-oxyphthalimid | | |
| | (Synthesebeispiel 4) | | |
| Erfindungsgemäßes Beispiel 6 | 10 % Diethylaluminiumphosphinat | 19,9 | V-2 |
| | 5% Diphenoxyphosphoryl-*N*-oxyphthalimid | | |
| | (Synthesebeispiel 4) | | |

| | | | |
|---|---|---|---|
| Aluminumdiethylphosphinat (Exolit OP 1230, Hersteller: Clariant SE) | | | |

Die erfindungsgemäßen Beispiele sind nach Entfernen der Zündquelle selbstverlöschend und weisen überraschenderweise verkürzte Brennzeiten gegenüber dem Vergleichsbeispiel auf, es wird eine Klassifizierung nach V-2 erhalten.

## Patentansprüche

1. Verwendung von halogen-freien phosphorhaltigen organischen Oxyimiden, enthaltend mindestens ein Strukturelement der nachfolgend abgebildeten Formel I 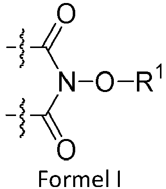 wobei R¹ ausgewählt ist aus der Gruppe bestehend Phosphor enthaltenden Resten,
in Kombination mit mindestens einem weiteren Flammschutzmittel,
ausgewählt aus der Gruppe bestehend aus anorganischen Flammschutzmitteln, stickstoffhaltigen Flammschutzmitteln, Radikalbildnern, phosphorhaltigen Flammschutzmitteln, Halogenhaltigen Flammschutzmitteln auf Chlor- und Brombasis, Boraten, schwefelhaltigen Verbindungen, Antidrip-Mitteln, siliciumhaltigen Verbindungen, Kohlenstoffmodifikationen, sowie Kombinationen oder Mischungen hieraus,
als Flammschutzmittel für Kunststoffe.

2. Verwendung nach Anspruch 1, **dadurch gekennzeichnet, dass** R¹ ausgewählt ist aus der Gruppe bestehend aus
-X-Y
wobei
X eine direkte chemische Bindung, einen unsubstituierten oder substituierten Alkylenrest, einen unsubstituierten oder substituierten Cycloalkylenrest, einen unsubstituierten oder substituierten Arylrest, einen unsubstituierten oder substituierten Heteroarylrest oder eine Acylgruppe, deren Carbonylrest mit dem Sauerstoffatom und deren Säurerest mit Y verbunden ist, bedeutet, und
Y eine Phosphor enthaltende Gruppierung bedeutet, die über das Phosphoratom mit X chemisch verknüpft ist und worin das Phosphoratom die Wertigkeit -3 bis 5, insbesondere -2, -1, 0, +1, +2, +3, +4 oder +5 aufweist, und
Y bevorzugt ausgewählt ist aus der Gruppe bestehend aus den nachfolgend abgebildeten Gruppierungen 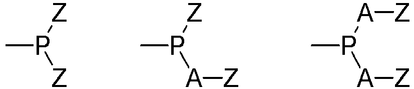 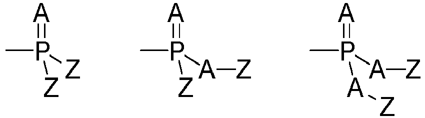 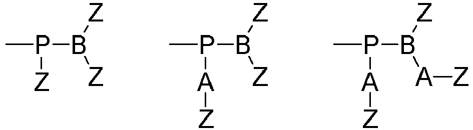 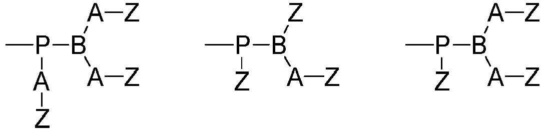 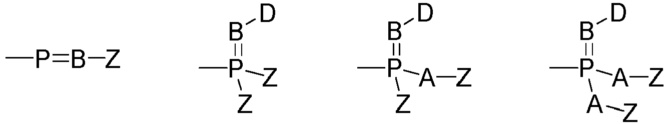 wobei
Z bei jedem Auftreten gleich oder verschieden ist und ausgewählt ist aus der Gruppe bestehend aus linearen oder verzweigten und/oder unsubstituierten oder substituierten Alkylresten, unsubstituierten oder substituierten Arylresten, unsubstituierten oder substituierten Heteroarylresten oder Acylgruppen, deren Carbonylrest mit dem Phosphoratom bzw. A oder B verbunden ist, wobei die die zuvor genannten Reste ggf. mit mindestens einem weiteren Strukturelement gemäß der oben abgebildeten Formel I und/oder mindestens einem weiteren Rest R¹ substituiert sein können sowie aus Strukturelementen der oben abgebildeten Formel I und Gruppierungen -X-Y,
A bei jedem Auftreten gleich oder verschieden ist und Sauerstoff oder Schwefel,
B bei jedem Auftreten gleich oder verschieden ist und Stickstoff, und
D bei jedem Auftreten gleich oder verschieden ist und ausgewählt ist aus der Gruppe bestehend aus linearen oder verzweigten und/oder unsubstituierten oder substituierten Alkylresten, unsubstituierten oder substituierten Arlyresten, unsubstituierten oder substituierten Heteroarylresten, wobei die die zuvor genannten Reste ggf. mit mindestens einem weiteren Strukturelement gemäß der oben abgebildeten Formel I und/oder mindestens einem weiteren Rest R¹ substituiert sein können,
bedeutet.

3. Verwendung nach einem der vorhergehenden Ansprüche, **dadurch gekennzeichnet, dass** das phosphorhaltige organische Oxyimid die nachfolgende Struktur aufweist
E-R¹
wobei
E einen nachfolgend abgebildeten Rest bedeutet, wobei E über das Sauerstoffatom mit R¹ verbunden ist, 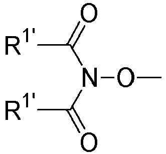
R¹ wie oben stehend definiert ist und
R^{1'} bei jedem Auftreten gleich oder verschieden ist und Wasserstoff, einen linearen oder verzweigten Alkylrest, einen linearen oder verzweigten Alkylenrest, einen aromatischen Rest, einen heteroaromatischen Rest darstellt oder bei Reste R^{1'} zu einem Ring verbunden sind, wobei der Ring gesättigt oder ungesättigt, substituiert oder unsubstituiert sein kann und/oder mindestens einer oder beide Reste R^{1'} oder die zu einem Ring verbundenen Resten R^{1'} eine mindestens ein weiteres Strukturelement der oben abgebildeten Formel I umfassen, wobei
das phosphorhaltige organische Oxyimid insbesondere eine der nachfolgenden Formeln aufweist 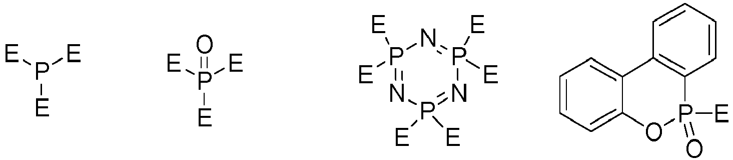 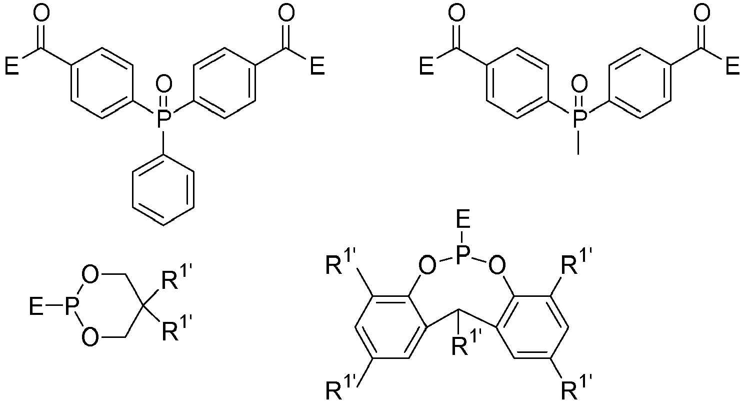 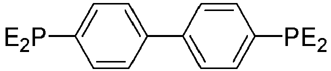 wobei E und R^{1'} die weiter oben angegebene Definition aufweisen.

4. Verwendung nach einem der vorhergehenden Ansprüche, **dadurch gekennzeichnet, dass** das phosphorhaltige organische Oxyimid
a) ein Strukturelement der allgemeinen Formel I umfasst und eine der nachfolgenden Formeln aufweist 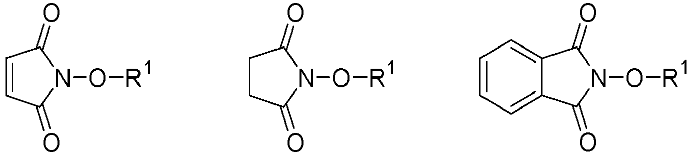 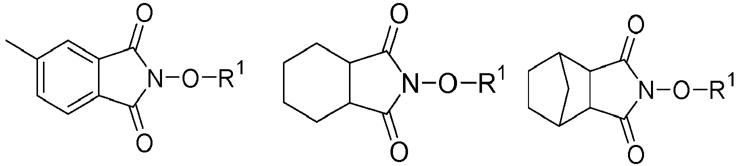 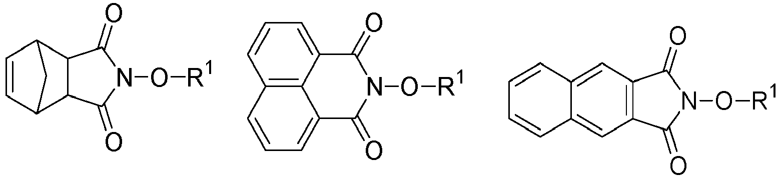 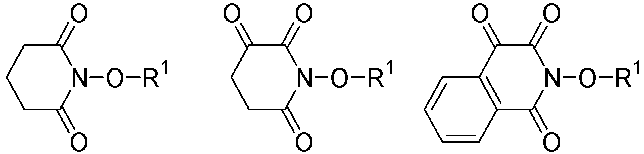 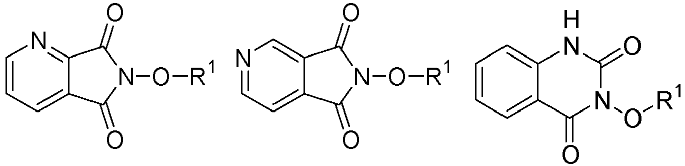 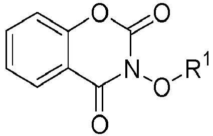
b) zwei Strukturelemente der allgemeinen Formel I umfasst und eine der nachfolgenden Formeln aufweist 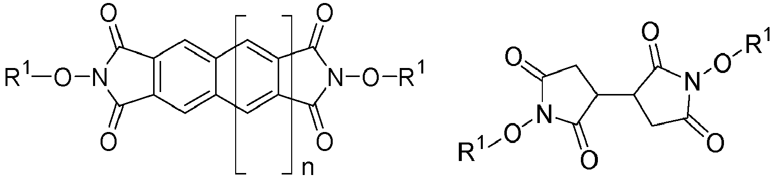 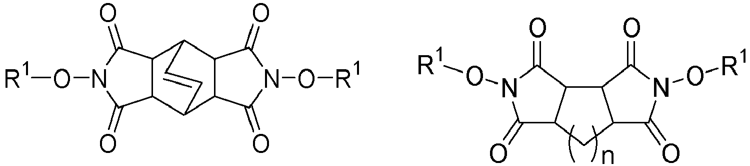 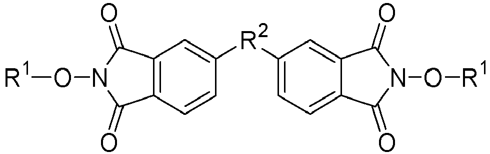 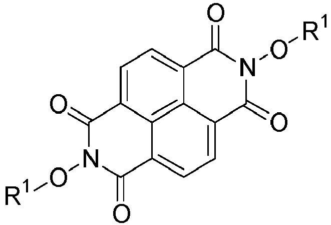 wobei
n 0, 1, 2, 3 oder 4 bedeutet, und
R² ausgewählt ist aus der Gruppe bestehend aus gegebenenfalls substituierten Alkylen-, Cycloalkylen-, Arylen-, Heteroarylen- oder verbrückenden Acyl-Resten, und insbesondere R² ausgewählt ist aus Resten der Gruppe bestehend aus -(CH₂)ₙ- mit n = 1 bis 18, -CH(CH₃)-, -C(CH₃)₂-, -CH(CF₃)-, -C(CF₃)₂-,-O-, -S-, -SO₂-, -NHCO-, -CO-, -OC(O)O- sowie den nachfolgend abgebildeten Gruppen 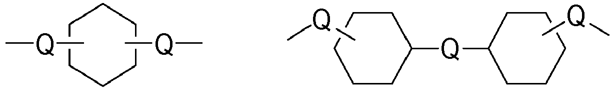 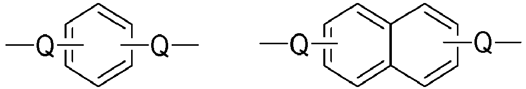 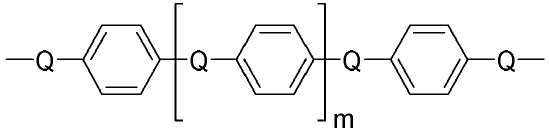 wobei
die in den zuvor abgebildeten Gruppen enthaltenen cycloaliphatischen oder aromatischen Ringsysteme unsubstituiert oder durch eine oder mehrere Alkyl- und/oder Alkoxygruppen substituiert sind,
Q bei jedem Auftreten gleich oder verschieden ist und ausgewählt ist aus der Gruppe bestehend aus einer chemischen Bindung sowie den Resten -(CH₂)ₙ- mit n = 1 bis 18, -CH(CH₃)-, -C(CH₃)₂-, -CH(CF₃)-, -C(CH₃)₂-, -O-C(O)-O-, -O-, -S-, -SO₂-, -NHCO-, -CO-, und
m 0 oder 1 bis 3 ist.
oder
c) drei Strukturelemente der allgemeinen Formel I umfasst und die nachfolgende Formel aufweist

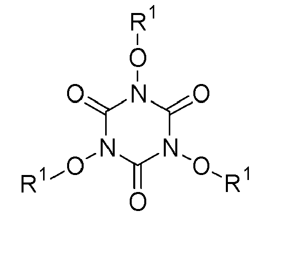

5. Verwendung nach einem der vorhergehenden Ansprüche, **dadurch gekennzeichnet, dass** das phosphorhaltige organische Oxyimid ausgewählt ist aus der Gruppe bestehend aus den nachfolgend abgebildeten Verbindungen 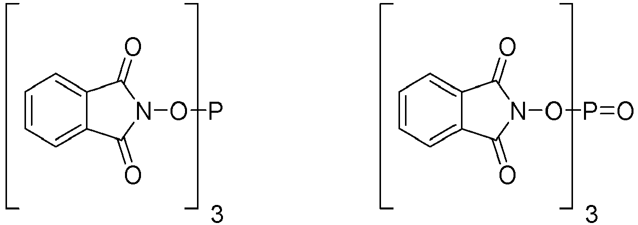 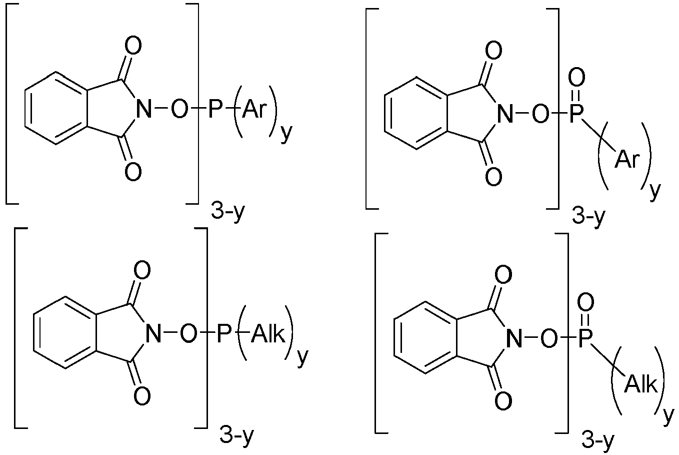 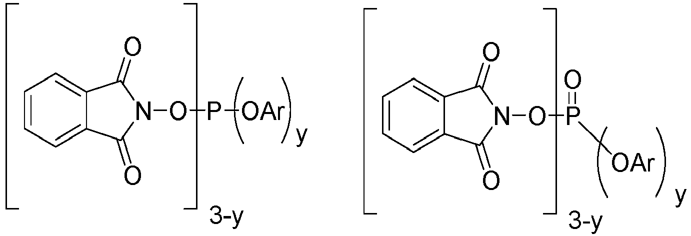 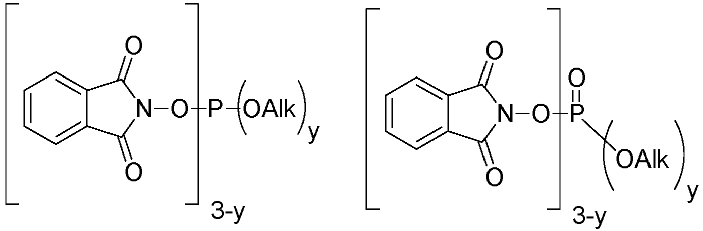 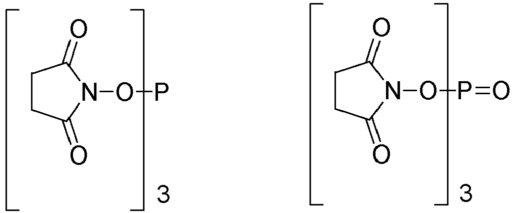 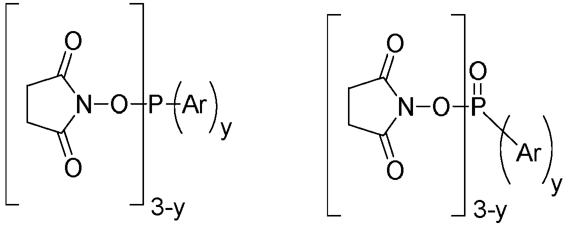 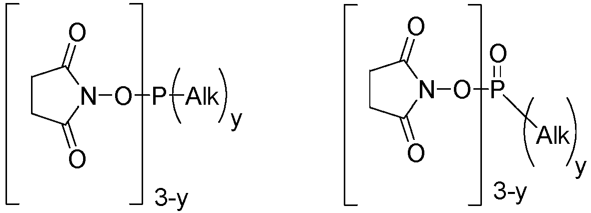 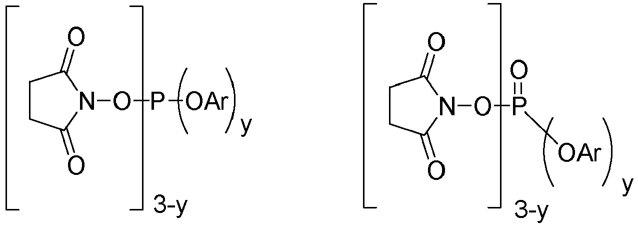 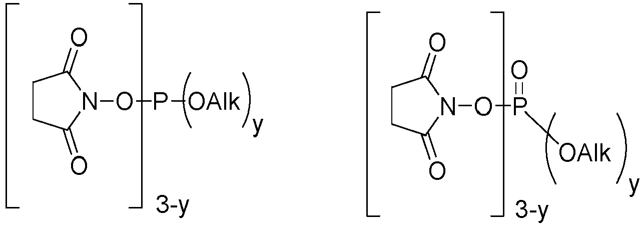 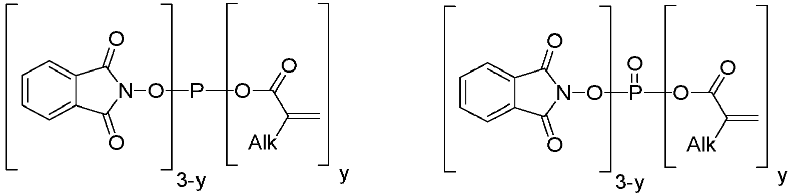 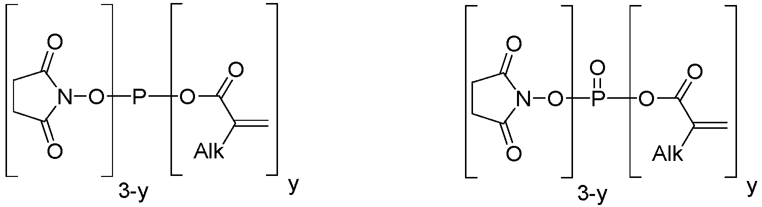 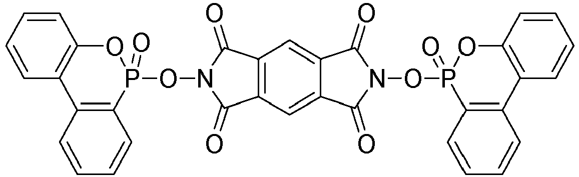 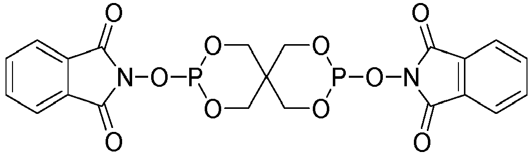 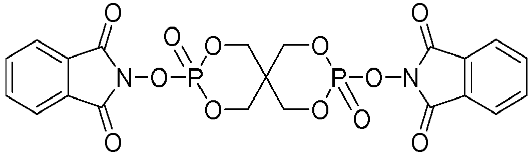 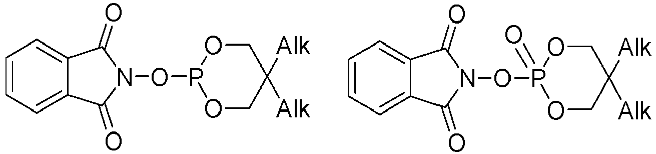 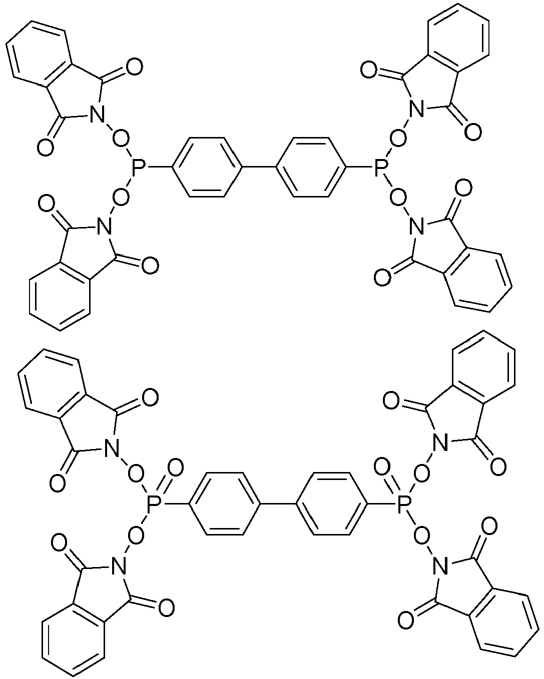 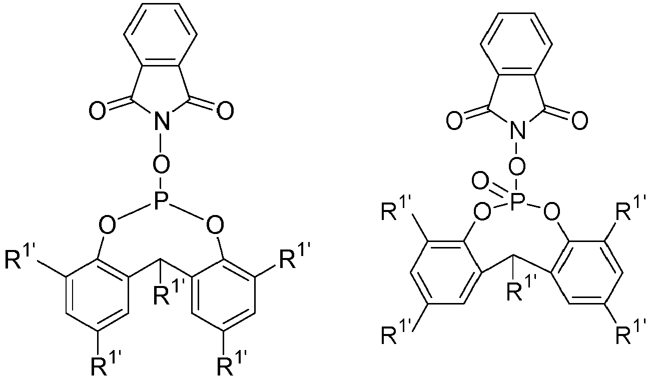 wobei
y 1 oder 2 ist
Alk einen linearen oder verzweigten, substituierten oder unsubstituierten Alkylrest bedeutet, und
Ar einen substituierten oder unsubstituierten Arlyrest oder Heteroarlyrest bedeutet.

6. Verwendung nach einem der vorhergehenden Ansprüche, **dadurch gekennzeichnet, dass** das Strukturelement gemäß der allgemeinen Formel I Teil eines Polymeren oder Copolymeren ist, wobei die Polymeren oder Copolymeren insbesondere zumindest die nachfolgenden Wiederholungseinheiten aufweisen:

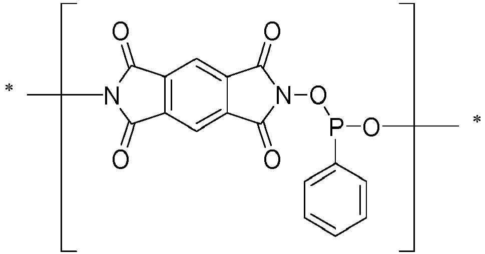

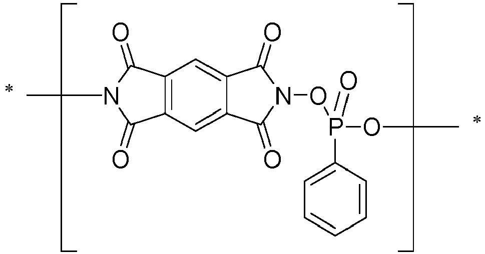

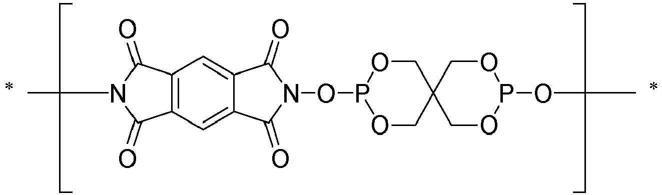

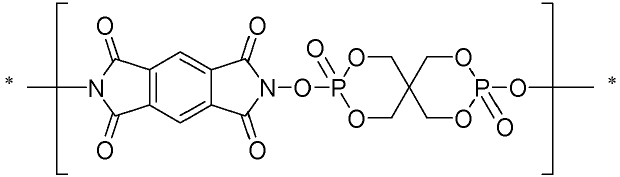

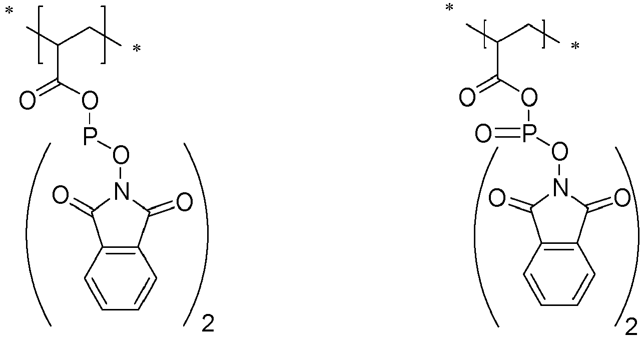

7. Verwendung nach einem der vorhergehenden Ansprüche, **dadurch gekennzeichnet, dass** die Kunststoffe thermoplastische Polymere sind und insbesondere ausgewählt sind aus der Gruppe bestehend aus
a) Polymere aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyisobutylen, Poly-4-methyl-penten-1, Polybutadien, Polyisopren, Polycycloocten, Polyalkylen-Kohlenmonoxid-Copolymere, sowie Copolymere in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure und deren Salze (lonomere), sowie Terpolymere wie z.B. Ethylen-Acrylsäure-Glycidylacrylat, Pfropfpolymere wie z.B. Polypropylen-graft-Maleinsäureanhydrid, Polypropylen-graft-Acrylsäure, Polyethylen-graft-Acrylsäure, Polyethylen-Polybutylacrylat-graft-Maleinsäureanhydrid,
b) Polystyrol, Polymethylstyrol, Polyvinylnaphthalin, Styrol-Butadien (SB), Styrol-Butadien-Styrol (SBS), Styrol-Ethylen-Butylen-Styrol (SEBS), Styrol-Ethylen-Propylen-Styrol, Styrolisopren, Styrol-Isopren-Styrol (SIS), Styrol-butadien-acrylnitril (ABS), Styrol-acrylnitrilacrylat (ASA), Styrol-Ethylen, Styrol-Maleinsäureanhydrid-Polymere einschl. entsprechender Pfropfcopolymere wie z.B. Styrol auf Butadien, Maleinsäureanhydrid auf SBS oder SEBS, sowie Pfropfcopolymere aus Methylmethacrylat, Styrol-Butadien und ABS (MABS),
c) halogenenthaltende Polymere wie z.B. Polyvinylchlorid (PVC), Polychloropren und Polyvinylidenchlorid (PVDC), Copolymere aus Vinylchlorid und Vinylidenchlorid oder aus Vinylchlorid und Vinylacetat, chloriertes Polyethylen, Polyvinylidenfluorid,
d) Polymere von ungesättigten Estern wie z.B. Polyacrylate und Polymethacrylate wie Polymethylmethacrylat (PMMA), Polybutylacrylat, Polylaurylacrylat, Polystearylacrylat, Polyacrylnitril, Polyacrylamide, Copolymere wie z.B. Polyacrylnitril-Polyalkylacrylat, Polymethacrylimid,
e) Polymere aus ungesättigten Alkoholen und Derivaten, wie z.B. Polyvinylalkohol, Polyvinylacetat, Polyvinylbutyral,
f) Polyacetale, wie z.B. Polyoxymethylen POM) oder Copolymere mit z.B. Butanal,
g) Polyphenylenoxide und Blends mit Polystyrol oder Polyamiden,
h) Polymere von cyclischen Ethern wie z.B. Polyethylenglycol, Polypropylenglycol, Polyethylenoxid, Polypropylenoxid, Polytetrahydrofuran,
i) Polyurethane, aus hydroxyterminierten Polyethern oder Polyestern und aromatischen oder aliphatischen Isocyanaten insbesondere lineare Polyurethane, Polyharnstoffe,
j) Polyamide wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3- Diaminobenzol, Blends von unterschiedlichen Polyamiden wie z.B. PA-6 und PA 6.6 bzw. Blends von Polyamiden und Polyolefinen wie z.B. PA/PP,
k) Polyimide, Polyamid-imide, Polyetherimide, Polyesterimide, Poly(ether)ketone, Polysulfone, Polyethersulfone, Polyarylsulfone, Polyphenylensulfid, Polybenzimidazole, Polyhydantoine,
l) Polyester aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat, Polyethylennaphthylat, Poly-1,4-dimethylolcyclohexanterephthalat, Polyhydroxybenzoat, Polyhydroxynaphthalat, Polymilchsäure,
m) Polycarbonate, Polyestercarbonate, sowie Blends wie z.B. PC/ABS, PC/PBT, PC/PET/PBT, PC/PA,
n) Cellulosederivate wie z.B. Cellulosenitrat, Celluloseacetat, Cellulosepropionat, Cellulosebutyrat, oder
o) duromere oder elastomere nicht-thermoplastische Kunststoffen sind, sowie
p) Mischungen, Kombinationen oder Blends aus zwei oder mehr der zuvor genannten Polymere.

8. Verwendung nach einem der vorhergehenden Ansprüche, **dadurch gekennzeichnet, dass**
a) das anorganische Flammschutzmittel ausgewählt ist aus der Gruppe bestehend aus Al(OH)₃, Mg(OH)₂, AlO(OH), MgCO₃, Schichtsilikaten wie z.B. Montmorillonit oder Sepiolit, nicht oder organisch modifiziert, Doppelsalzen, wie z.B. Mg-Al-Silikate, POSS-(Polyhedral Oligomeric Silsesquioxane) Verbindungen, Huntit, Hydromagnesit oder Halloysit sowie Sb₂O₃, Sb₂O₃, MoO₃, Zinkstannat, Zinkhydroxystannat,
b) das stickstoffhaltige Flammschutzmittel ausgewählt ist aus der Gruppe bestehend aus Melamin, Melem, Melam, Melon, Melaminderivaten, Melaminkondensationsprodukten oder Melaminsalzen, Benzoguanamin, Polyisocyanuraten, Allantoin, (Poly)Phosphacenen, insbesondere Melamincyanurat, Melaminphosphat, Dimelaminphosphat, Melaminpyrophosphat, Melaminpolyphosphat, Melamin-methanphosphonat, Melamin-Metall-Phosphaten wie z.B. Melaminaluminumphosphat, Melaminzinkphosphat, Melaminmagnesiumphopsphat, sowie die entsprechenden Pyrophosphaten und Polyphosphaten, Poly-[2,4-(piperazin-1,4-yl)-6-(morpholin-4-yl)-1,3,5-triazin], Ammoniumpolyphosphat, Melaminborat, Melaminhydrobromid, Ethylendiamin-methanphosphonat,
c) der Radikalbildner ausgewählt ist aus der Gruppe bestehend aus Alkoxyaminen, Hydroxylaminestern, Azoverbindungenen, Dicumyl oder Polycumyl, nicht phosphorhaltige Hydroxyimiden oder deren Derivaten wie z.B. Hydroxyimidestern oder Hydroxyimidethern, wobei die Radikalbildner insbesondere die Radikalbildner ausgewählt sind aus der Gruppe bestehend aus
aa) N-Alkoxyaminen gemäß der nachfolgend abgebildeten Strukturformel 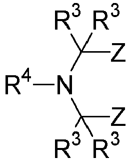 wobei
R³ für Wasserstoff oder einen gegebenenfalls substituierter Alkyl-, Cycloalkyl-, Aryl-, Heteroaryl- oder Acyl-Rest steht, insbesondere ein C1 bis C4- Alkylrest ist,
R⁴ für einen Alkoxy-, Aryloxy-, Cycloalkoxy-, Aralkoxy- oder Acyloxy-Rest steht,
Z für Wasserstoff oder einen gegebenenfalls substituierter Alkyl-, Cycloalkyl-, Aryl-, Heteroaryl- oder Acyl-Rest steht, wobei die beiden Reste Z auch einen geschlossenen Ring bilden können, der ggf. durch Ester-, Ether-, Amin, Amid, Carboxy- oder Urethangruppen substituiert sein kann,
E für einen Alkoxy-, Aryloxy- Cycloalkyloxy-, Aralkoxy oder Acyloxyrest steht,
bb) Azo-Verbindungen gemäß der nachfolgend abgebildeten Strukturformeln
R⁵-N=N-R⁵
oder 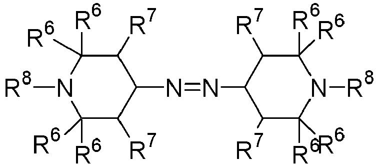 wobei
R⁵ einen Alkly-, Cycloalkyl- oder Arylrest bedeutet,
R⁶ bei jedem Auftreten gleich oder verschieden ist und einen linearen oder verzweigten Alkylrest bedeutet,
R⁷ bei jedem Auftreten gleich oder verschieden ist und Wasserstoff oder einen linearen oder verzweigten Alkylrest bedeutet, und
R⁸ bei jedem Auftreten gleich oder verschieden ist und einen Alkyl, Alkoxy-, Aryloxy- Cycloalkyloxy-, Aralkoxy oder Acyloxyrest bedeutet,
cc) Dicumyl gemäß der nachfolgend abgebildeten Strukturformel 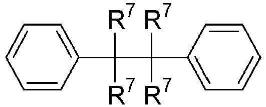 wobei R⁷ die zuvor angegebene Bedeutung aufweist, bevorzugt Methyl ist,
dd) und/oder Polycumyl gemäß der nachfolgend abgebildeten Strukturformel 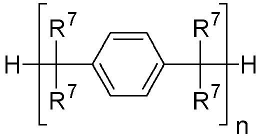 wobei R⁷ die zuvor angegebene Bedeutung aufweist, bevorzugt Methyl ist, und 2 < n < 100,
d) das phosphorhaltige Flammschutzmittel ausgewählt ist aus der Gruppe bestehend aus anorganischen oder organischen Phosphonaten wie z.B. Aluminiumphosphonat, Phosphonatestern, oligomeren und polymeren Derivaten der Methanphosphonsäure, roter Phosphor, Phosphaten wie z.B. Resorcindiphosphat, Bisphenol-A-diphosphat und ihre Oligomere, Triphenylphosphat, Ethylendiamindiphosphat, Phosphinaten wie z.B. Salze der hypophosphorigen Säure und Ihrer Derivate wie Alkylphosphinatsalzen z.B. Diethylphosphinataluminium oder Diethylphosphinat-Zink oder Aluminiumphosphinat, Aluminiumphosphit, Aluminiumphosphat, 9,10-Dihydro-9-oxa-10-phosphorylphenanthren-10-oxid (DOPO) und deren substituierte Verbindungen,
e) das halogenhaltige Flammschutzmittel auf Chlor- und Brombasis ausgewählt ist aus der Gruppe bestehend aus polybrominierten Diphenyloxiden, wie z.B. Decabromdiphenyloxid, Tris(3-bromo-2,2-bis(bromomethyl)propyl-phosphat, Tris(tribromneopentyl)-phosphat, Tetrabromphthalsäure, 1,2-Bis(tribromphenoxy)ethan, Hexabromcyclododecan, bromiertes Diphenylethan, Tris-(2,3-di-brompropyl)isocyanurat, Tetrabrombisphenol-A-bis(2,3)dibrompropylether), Ethylen-bis(tetrabromophthalimid), Tetrabromo-bisphenol A, bromiertes Polystyrol, bromiertes Polybutadien bzw. Polystyrol-bromiertes Polybutadien-Copolymere, bromiertes Epoxidharz, Polypentabrombenzylacrylat, bromierten Polyphenylenethern ggf. in Kombination mit Sb₂O₃ und/oder Sb₂O₅,
f) das Borat ausgewählt ist aus der Gruppe bestehend aus Zinkborat oder Calciumborat, ggf. auf Silica als Trägermaterial,
g) die schwefelhaltige Verbindung ausgewählt ist aus der Gruppe bestehend aus elementarem Schwefel, Disulfiden und Polysulfiden, Thiuramsulfid, Dithiocarbamaten, Mercaptobenzthiazol und Sulfenamide,
h) das Antidrip-Mittel Polytetrafluorethylen ist,
i) die siliciumhaltige Verbindung ausgewählt ist aus der Gruppe bestehend aus Polyphenylsiloxanen,
j) die Kohlenstoffmodifikation ausgewählt ist aus der Gruppe bestehend aus Kohlenstoff-Nanoröhren (CNT) oder Graphen,
sowie Kombinationen oder Mischungen hieraus,.

9. Verwendung nach einem der vorhergehenden Ansprüche, **dadurch gekennzeichnet, dass** die halogen-freien phosphorhaltigen organischen Oxyimide und das mindestens eine weitere Flammschutzmittel in einem Gewichtsverhältnis von 99:1 bis 1:99, bevorzugt von 5 : 95 bis 50 : 50, besonders bevorzugt von 10 : 90 bis 30 : 70 verwendet werden

10. Verwendung nach einem der vorangegangenen Ansprüche, **dadurch gekennzeichnet, dass** die halogen-freien phosphorhaltigen organischen Oxyimide
a) in Kombination mit mindestens einer phosphorhaltigen Verbindung, ausgewählt aus der Gruppe bestehend aus Phosphiten oder Phosphoniten eingesetzt werden, wobei die mindestens eine phosphorhaltigen Verbindung nicht identisch ist mit den phosphorhaltigen Flammschutzmitteln, und/oder
b) bezogen auf die Kunststoffe, zu 0,01 bis 30 Gew.-%, bevorzugt zu 0,1 bis 20 Gew.-%, besonders bevorzugt zu 1 bis 10 Gew.-% eingesetzt werden.

11. Verwendung nach einer der vorhergehenden Ansprüche, **dadurch gekennzeichnet, dass** mindestens ein halogen-freies phosphorhaltiges organisches Oxyimid, bevorzugt mindestens ein halogen-freies phosphorhaltiges organisches Oxyimide, in dem mindestens ein Phosphoratom in der Oxidationsstufe -2, -1, 0, +1, +2 oder +3 vorliegt, besonders bevorzugt mindestens ein mindestens eine Phosphit- und/oder Phosphonitgruppe enthaltendes halogen-freies phosphorhaltiges organisches Oxyimid verwendet wird.

12. Flammgeschützte Kunststoffzusammensetzung, enthaltend oder bestehend aus
a) 60 bis 99,9 Gew.-Teilen, bevorzugt 60 bis 98, besonders bevorzugt 70 bis 95 Gew.-Teilen mindestens eines Kunststoffes, insbesondere mindestens eines thermoplastischen Polymers,
b) 0,1 bis 40 Gew.-Teilen, bevorzugt 1 bis 25, besonders bevorzugt 2,5 bis 15 Gew.-Teilen mindestens eines halogen-freien phosphorhaltigen organischen Oxyimids, enthaltend mindestens ein Strukturelement der nachfolgend abgebildeten Formel I 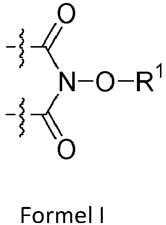 wobei R¹ wie in Anspruch 1 definiert ist,
c) 1 bis 25, bevorzugt 1 bis 20 Gew.-Teilen, besonders bevorzugt 2,5 bis 15 Gew.-Teilen mindestens eines weiteren Flammschutzmittels, ausgewählt aus der Gruppe bestehend aus anorganischen Flammschutzmitteln, stickstoffhaltigen Flammschutzmitteln, Radikalbildnern, phosphorhaltigen Flammschutzmitteln, Halogenhaltigen Flammschutzmitteln auf Chlor- und Brombasis, Boraten, schwefelhaltigen Verbindungen, Antidrip-Mitteln, siliciumhaltigen Verbindungen, Kohlenstoffmodifikationen, sowie Kombinationen oder Mischungen hieraus,
d) 0 bis 25 Gew.-Teilen, bevorzugt 1 bis 20 Gew.-Teilen, besonders bevorzugt 2,5 bis 15 Gew.-Teilen mindestens einer phosphorhaltigen Verbindung, ausgewählt aus der Gruppe bestehend aus Phosphiten oder Phosphoniten, wobei die mindestens eine phosphorhaltigen Verbindung nicht identisch ist mit den phosphorhaltigen Flammschutzmitteln, wobei bevorzugt
zusätzlich
e) bis 40 Gew.-Teile mindestens eines Verstärkungs- oder Füllstoffes und/oder
f) bis 5 Gew.-Teile mindestens eines Additivs aus der Klasse der phenolischen Antioxidantien, Säurefänger, gehinderten Amine, Dispergiermittel sowie Kombinationen hiervon enthalten sind.

13. Flammgeschützte Kunststoffzusammensetzung nachvorhergehendem Anspruch, **dadurch gekennzeichnet, dass** Zusatzstoffe ausgewählt aus der Gruppe bestehend aus UV-Absorber, der Lichtstabilisatoren, der Stabilisatoren, der Hydroxylamine, der Benzofuranone, der Nukleierungsmittel, Schlagzähigkeitsverbesserer, Weichmacher, Gleitmittel, Rheologiemodifikatoren, Verarbeitungshilfsmittel, Pigmente, Farbstoffe, optische Aufheller, antimikrobielle Wirkstoffe, Antistatika, Slipmittel, Antiblockmittel, Kopplungsmittel, Dispergiermittel, Kompatibilisatoren, Sauerstofffänger, Säurefänger, Markierungsmittel oder Antifoggingmittel eingesetzt werden. In bevorzugter Ausführungsform enthalten die Zusammensetzungen insbesondere Säurefänger, z.B. auf Basis von Salzen langkettiger Säuren wie z.B. Calciumstearat, Magnesiumstearat, Zinkstearat, Calciumlactat oder von Hydrotalciten und/oder Stabilisatoren aus der Gruppe der phenolischen Antioxidantien und der Phosphite und/oder Lichtstabilisatoren aus der Gruppe der gehinderten Amine (HALS) und/oder Dispergiermittel enthalten sind.

14. Verfahren zur Herstellung einer flammgeschützten Kunststoffzusammensetzung nach einem der Ansprüche 12 bis 13, bei dem
a) 0,1 bis 40 Gew.-Teile, bevorzugt 1 bis 25, besonders bevorzugt 2,5 bis 15 Gew.-Teile mindestens eines halogen-freien phosphorhaltigen organischen Oxyimids, enthaltend mindestens ein Strukturelement der nachfolgend abgebildeten Formel I 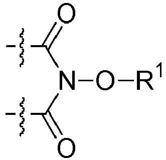 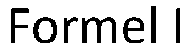 wobei R¹ wie in Anspruch 1 definiert ist,
b) vor, nach oder gleichzeitig mit 1 bis 25 Gew.-Teilen, bevorzugt 2,5 bis 15 Gew.-Teilen des mindestens einen weiteren Flammschutzmittels
in 60 bis 99,9 Gew.-Teile, bevorzugt 60 bis 98, besonders bevorzugt 70 bis 95 Gew.-Teile mindestens eines Kunststoffes, insbesondere mindestens eines thermoplastischen Polymers eingebracht wird.

15. Formteil, Lack oder Beschichtung, herstellbar aus einer flammgeschützten Kunststoffzusammensetzung nach einem der Ansprüche 12 bis 13, insbesondere in Form von Spritzgussteilen, Folien, Beschichtungen, Schäumen, Fasern, Kabeln und Rohren, die über Extrusion, Spritzguss, Blasformen, Pressverfahren hergestellt werden z.B. für Haushalts- und Elektrogeräte, Fahrzeugteile, Konsumartikel, Möbel, Textilien.

## Claims

1. Use of halogen-free phosphorus-containing organic oxyimides, comprising at least one structural element of subsequently illustrated formula I 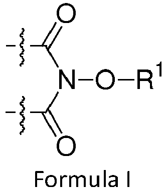
R¹ being selected from the group consisting of phosphorus-containing radicals,
in combination with at least one further flame retardant selected from the group consisting of inorganic flame retardants, nitrogen-containing flame retardants, radical formers, phosphorus-containing flame retardants, halogen-containing flame retardants based on chlorine and bromine, borates, sulfur-containing compounds, antidrip agents, silicon-containing compounds, carbon modifications, as well as combinations or mixtures thereof,
as flame retardant for plastic materials.

2. Use according to claim 1, **characterised in that** R¹ is selected from the group consisting of
-X-Y
X meaning a direct chemical bond, an unsubstituted or substituted alkylene radical, an unsubstituted or substituted cycloalkylene radical, an unsubstituted or substituted aryl radical, an unsubstituted or substituted heteroaryl radical or an acyl group, the carbonyl radical of which is bonded to the oxygen atom and the acid radical of which is bonded to Y, and
Y meaning a phosphorus-containing grouping which is chemically crosslinked to X via the phosphorus atom, and in which the phosphorus atom has the valency -3 to 5, in particular -2, -1, 0, +1, +2, +3, +4 or +5, and
Y preferably being selected from the group consisting of the subsequently illustrated groupings 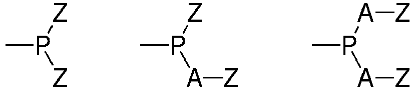 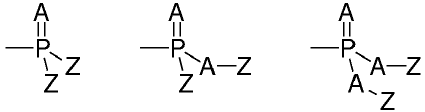 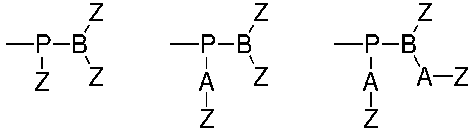 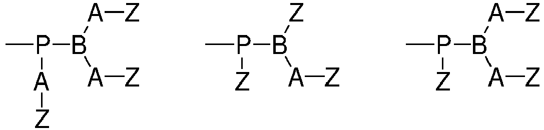 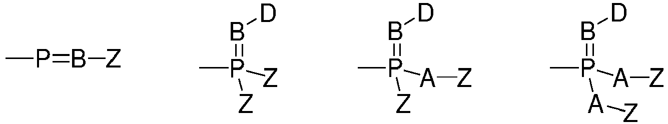
Z upon each occurrence, being the same or different and being selected from the group consisting of linear or branched and/or unsubstituted or substituted alkyl radicals, unsubstituted or substituted aryl radicals, unsubstituted or substituted heteroaryl radicals or acyl groups, the carbonyl radical of which is bonded to the phosphorus atom or A or B, the previously mentioned radicals being able to be substituted by at least one further structural element according to the above-illustrated formula I and/or by at least one further radical R¹ and also from structural elements of the above-illustrated formula I and groupings -X-Y,
A upon each occurrence, being the same or different and meaning oxygen or sulfur,
B upon each occurrence, being the same or different and meaning nitrogen, and
D upon each occurrence, being the same or different and being selected from the group consisting of linear or branched and/or unsubstituted or substituted alkyl radicals, unsubstituted or substituted aryl radicals, unsubstituted or substituted heteroaryl radicals, the previously mentioned radicals being able to be substituted possibly by at least one further structural element according to the above-illustrated formula I and/or by at least one further radical R¹.

3. Use according to one of the preceding claims, **characterised in that** the phosphorus-containing organic oxyimide has the following structure:
E-R¹
E meaning a subsequently illustrated radical, E being bonded to R¹ via the oxygen atom, 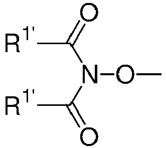
R¹ being defined as above and
R^{1'} upon each occurrence, being the same or different and representing hydrogen, a linear or branched alkyl radical, a linear or branched alkylene radical, an aromatic radical, a heteroaromatic radical, or in the case of radicals R¹ being bonded to form a ring, the ring being able to be saturated or unsaturated, substituted or unsubstituted and/or at least one or both radicals R¹', or the radicals R¹' bonded to form a ring, comprising at least one further structural element of the above-illustrated formula I, wherein
the phosphorus-containing organic oxyimide in particular has one of the subsequent formulae: 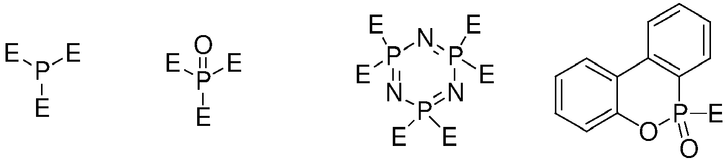 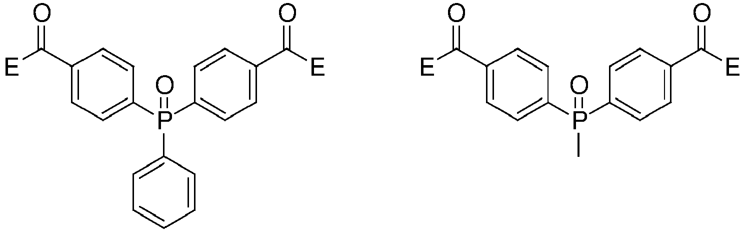 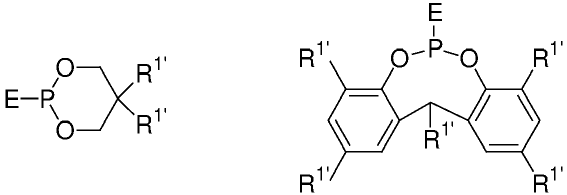 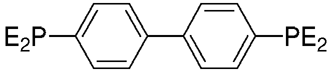 E und R^{1'} having the definition indicated given above.

4. Use according to one of the preceding claims, **characterised in that** the phosphorus-containing organic oxyimide
a) comprises a structural element of the general formula I and has one of the subsequent formulae 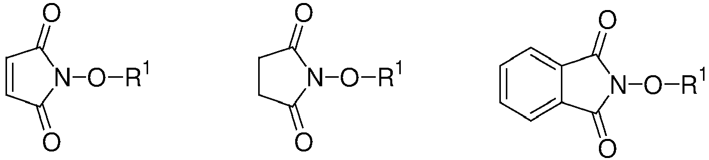 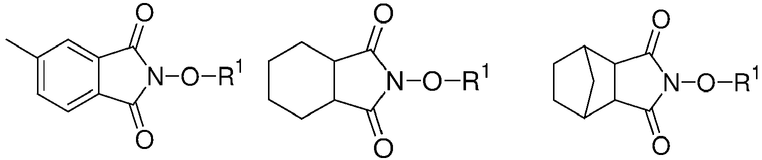 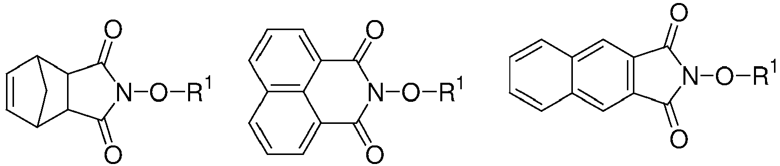 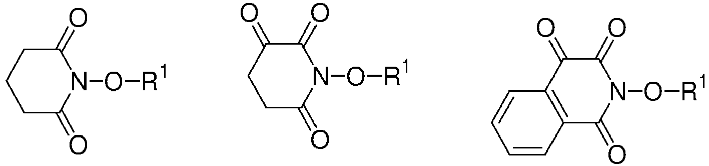 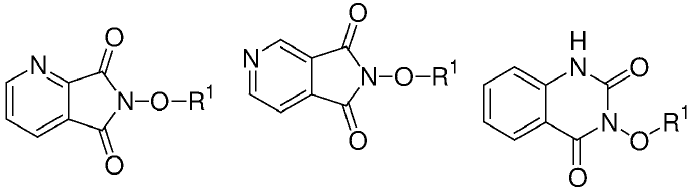 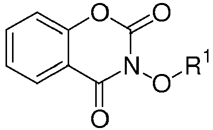
b) comprises two structural elements of the general formula I and has one of the subsequent formulae 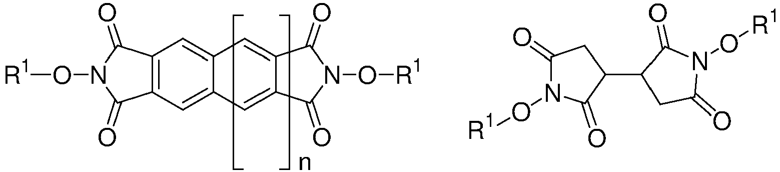 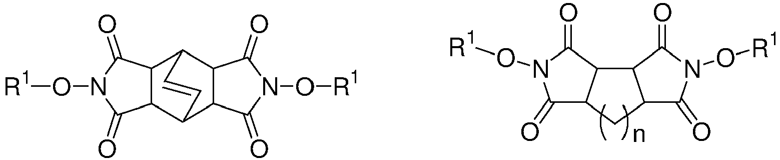 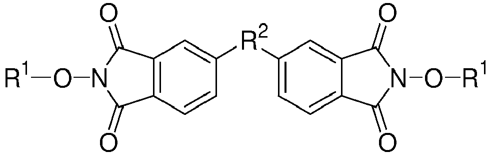 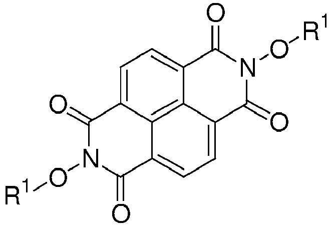 n meaning 0, 1, 2, 3 or 4, and
R² being selected from the group consisting of possibly substituted alkylene-, cycloalkylene-, arylene-, heteroarylene- or bridging acyl radicals, in particular R²being selected from residues of the group consisting of -(CH₂)ₙ- with n = 1 to 18, -CH(CH₃)-, -C(CH₃)₂-, -CH(CF₃)-, -C(CF₃)₂-, -O-, -S-, -SO₂-, -NHCO-, -CO-, -OC(O)O- and also the subsequently illustrated groups 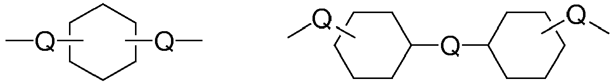 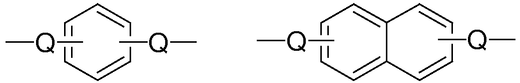 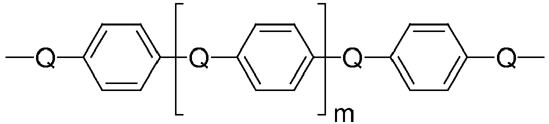
the cycloaliphatic or aromatic ring systems contained in the previously illustrated groups being unsubstituted or substituted by one or more alkyl- and/or alkoxy groups,
Q upon each occurrence, being the same or different and being selected from the group consisting of a chemical bond and also the radicals -(CH₂)ₙ- with n = 1 to 18, -CH(CH₃)-, -C(CH₃)₂-, -CH(CF₃)-, -C(CH₃)₂-,-O-C(O)-O-, -O-, -S-, -SO₂-, -NHCO-, -CO-, and
m being 0 or 1 to 3.
or
c) comprising three structural elements of the general formula I and having the subsequent formula

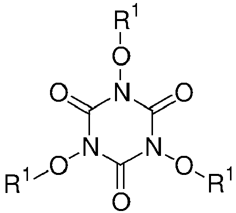

5. Use according to one of the preceding claims, **characterised in that** the phosphorus-containing organic oxyimide is selected from the group consisting of the subsequently illustrated compounds 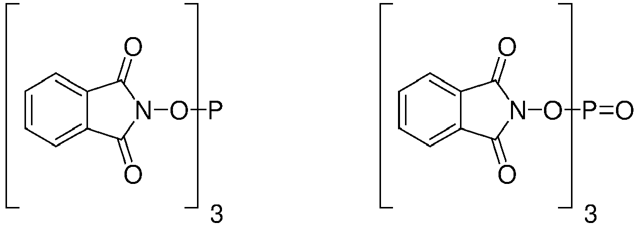 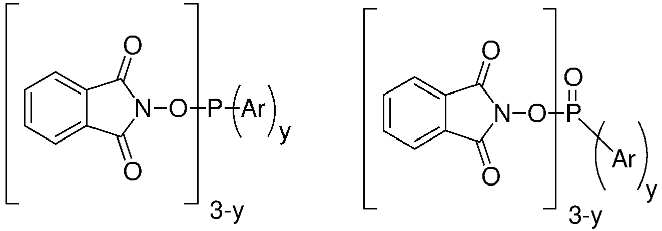 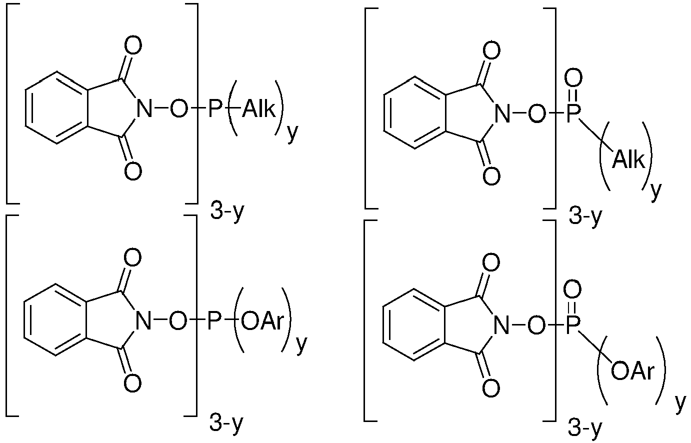 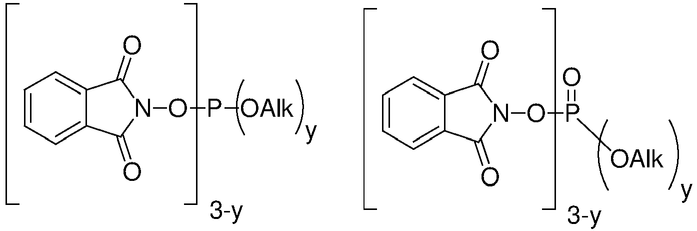 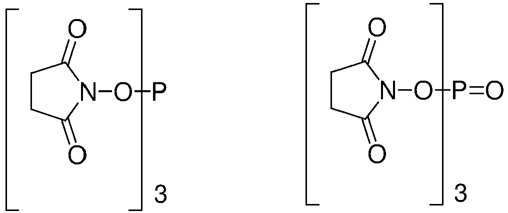 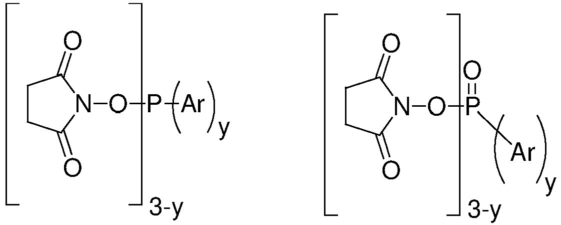 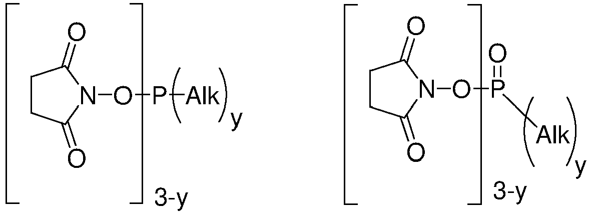 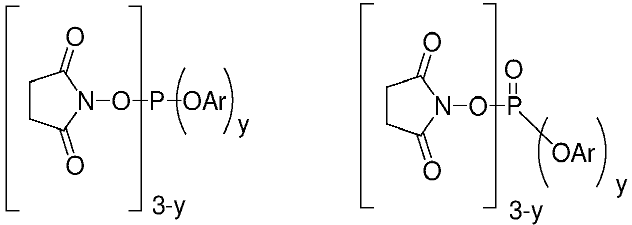 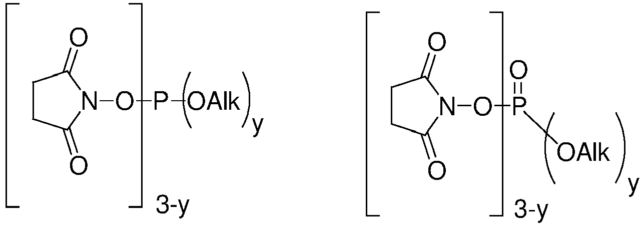 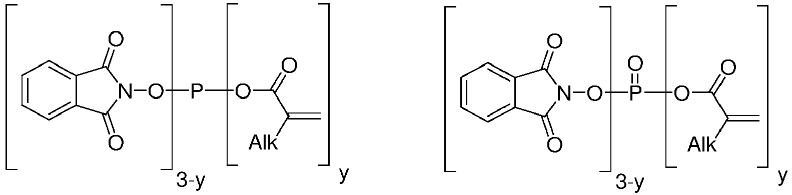 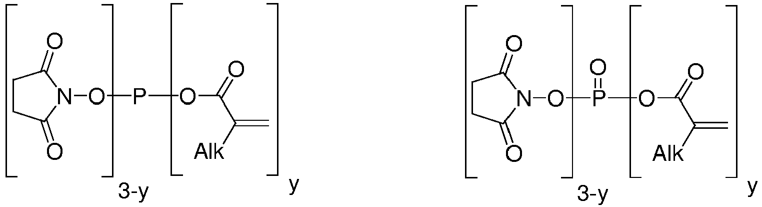 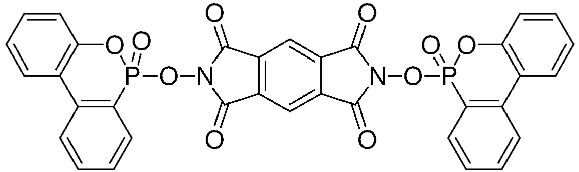 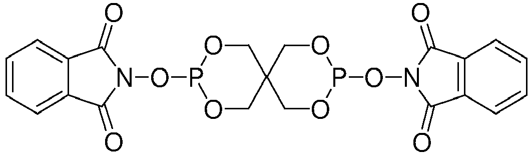 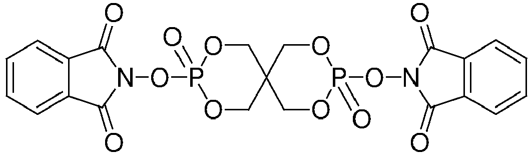 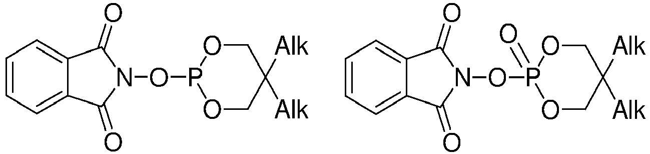 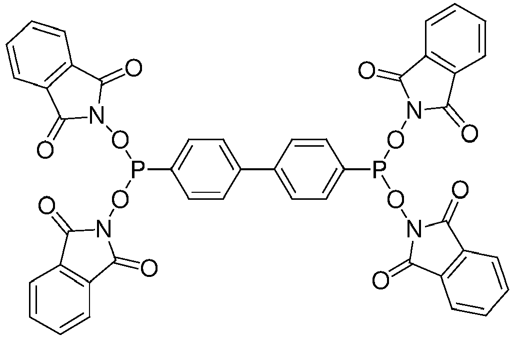 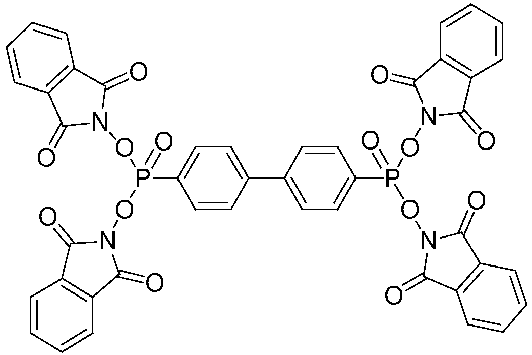 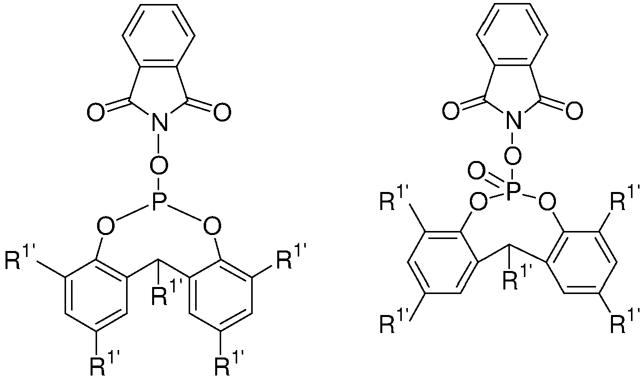
y being 1 or 2
Alk meaning a linear or branched, substituted or unsubstituted alkyl radical, and
Ar meaning a substituted or unsubstituted aryl radical or heteroaryl radical.

6. Use according to one of the preceding claims, **characterised in that** that the structural element according to the general formula I is part of a polymer or copolymer, the polymers or copolymers having in particular at least the subsequent repetition units:

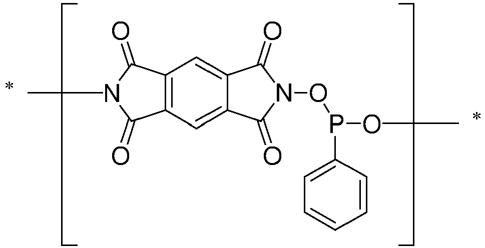

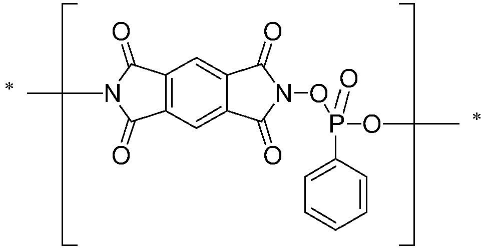

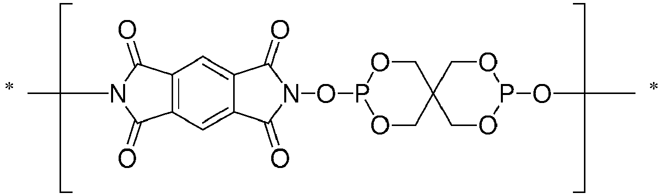

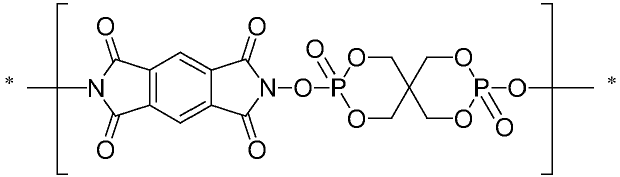

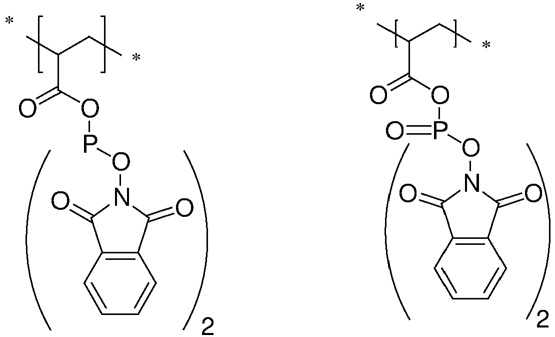

7. Use according to one of the preceding claims, **characterised in that** the plastic materials are thermoplastic polymers, and selected in particular from the group consisting of
a) polymers made of olefins or diolefins, such as e.g. polyethylene (LDPE, LLDPE, VLDPE, ULDPE, MDPE, HDPE, UHMWPE), metallocene-PE (m-PE), polypropylene, polyisobutylene, poly-4-methylpentene-1, polybutadiene, polyisoprene, polycyclooctene, polyalkylene-carbon monoxidecopolymers and also copolymers in the form of statistical or block structures, such as e.g. polypropylene-polyethylene (EP), EPM or EPDM, ethylene-vinyl acetate (EVA), ethylene-acrylester, such as e.g. ethylene-butylacrylate, ethylene-acrylic acid and the salts thereof (ionomers), and also terpolymers, such as e.g. ethylene-acrylic acid-glycidylacrylate, graft polymers, such as e.g. polypropylene-graft-maleic anhydride, polypropylene-graft-acrylic acid, polyethylene-graft-acrylic acid, polyethylene-polybutylacrylate-graft-maleic anhydride,
b) polystyrene, polymethylstyrene, polyvinylnaphthalene, styrene-butadiene (SB), styrene-butadiene-styrene (SBS), styrene-ethylenebutylene-styrene (SEBS), styrene-ethylene-propylene-styrene, styrene-isoprene, styrene-isoprene-styrene (SIS), styrene-butadiene-acrylonitrile (ABS), styrene-acrylonitrile-acrylate (ASA), styrene-ethylene, styrenemaleic anhydride polymers including corresponding graft copolymers, such as e.g. styrene on butadiene, maleic anhydride on SBS or SEBS, and also graft copolymers made of methylmethacrylate, styrene-butadiene and ABS (MABS),
c) halogen-containing polymers, such as e.g. polyvinyl chloride (PVC), polychloroprene and polyvinylidene chloride (PVDC), copolymers made of vinyl chloride and vinylidene chloride, or made of vinyl chloride and vinyl acetate, chlorinated polyethylene, polyvinylidene fluoride,
d) polymers of unsaturated esters, such as e.g. polyacrylates and polymethacrylates, such as polymethylmethacrylate (PMMA), polybutylacrylate, polylaurylacrylate, polystearylacrylate, polyacrylonitrile, polyacrylamides, copolymers, such as e.g. polyacrylonitrile-polyalkylacrylate, polymethacrylimide,
e) polymers made of unsaturated alcohols and derivatives, such as e.g. polyvinyl alcohol, polyvinyl acetate, polyvinyl butyral,
f) polyacetals, such as e.g. polyoxymethylene (POM) or copolymers, with e.g. butanal,
g) polyphenylene oxides and blends with polystyrene or polyamides,
h) polymers of cyclic ethers, such as e.g. polyethylene glycol, polypropylene glycol, polyethylene oxide, polypropylene oxide, polytetrahydrofuran,
i) polyurethanes made of hydroxy-terminated polyethers or polyesters and aromatic or aliphatic isocyanates, in particular linear polyurethanes, polyureas,
j) polyamides, such as e.g. polyamide-6, 6.6, 6.10, 4.6, 4.10, 6.12, 12.12, polyamide 11, polyamide 12 and also (partially) aromatic polyamides, such as e.g. polyphthalamides, e.g. produced from terephthalic acid and/or isophthalic acid and aliphatic diamines or from aliphatic dicarboxylic acids, such as e.g. adipic acid or sebacic acid, and aromatic diamines, such as e.g. 1,4- or 1,3-diaminobenzene, blends of different polyamides, such as e.g. PA-6 and PA 6.6 or blends of polyamides and polyolefins, such as e.g. PA/PP,
k) polyimides, polyamideimides, polyetherimides, polyesterimides, poly(ether)ketones, polysulphones, polyethersulphones, polyarylsulphones, polyphenylene sulphide, polybenzimidazoles, polyhydantoins,
l) polyesters made of aliphatic or aromatic dicarboxylic acids and diols or made of hydroxycarboxylic acids, such as e.g. polyethylene terephthalate (PET), polybutylene terephthalate (PBT), polypropylene terephthalate, polyethylene naphthylate, poly-1,4-dimethylolcyclohexane terephthalate, polyhydroxybenzoate, polyhydroxynaphthalate, polylactic acid,
m) polycarbonates, polyester carbonates and also blends, such as e.g. PC/ABS, PC/PBT, PC/PET/PBT, PC/PA,
n) cellulose derivatives, such as e.g. cellulose nitrate, cellulose acetate, cellulose propionate, cellulose butyrate,
o) duromeric or elastomeric, non-thermoplastic plastic materials, and also
p) mixtures, combinations or blends of two or more of the previously mentioned polymers.

8. Use according to one of the preceding claims, **characterised in that**
a) the inorganic flame retardant is selected from the group consisting of Al(OH)₃, Mg(OH)₂, AlO(OH), MgCO₃, layer silicates, such as e.g. montmorillonite or sepiolite, non- or organically modified, double salts, such as e.g. Mg-Al silicates, POSS (Polyhedral Oligomeric Silsesquioxane) compounds, huntite, hydromagnesite or halloysite and also Sb₂O₃, Sb₂O₅, MoO₃, zinc stannate, zinc hydroxystannate,
b) the nitrogen-containing flame retardant is selected from the group consisting of melamine, melem, melam, melon, melamine derivatives, melamine condensation products or melamine salts, benzoguanamine, polyisocyanurates, allantoin, (poly)phosphacenes, in particular melamine cyanurate, melamine phosphate, dimelamine phosphate, melamine pyrophosphate, melamine polyphosphate, melamine-methane phosphonate, melamine-metal phosphates, such as e.g. melamine aluminium phosphate, melamine zinc phosphate, melamine magnesium phosphate, and also the corresponding pyrophosphates and polyphosphates, poly-[2,4-(piperazin-1,4,-yl]-6-(morpholin-4-yl)1,3,5-triazine], ammonium polyphosphate, melamine borate, melamine hydrobromide, ethylene diamine methane phosphonate,
c) the radical former is selected from the group consisting of alkoxyamines, hydroxylamine esters, azo compounds, dicumyl or polycumyl, non-phosphorus-containing hydroxyimides or the derivatives thereof, such as e.g. hydroxyimide ester or hydroxyimide ether, wherein the radical formers in particular are selected from the group consisting of
aa) N-alkoxyamines according to the subsequently illustrated structural formula, 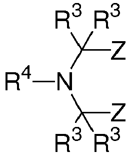
R³ standing for hydrogen or a possibly substituted alkyl-, cycloalkyl-, aryl-, heteroaryl- or acyl radical, in particular being a C1 to C4 alkyl radical,
R⁴ standing for an alkoxy-, aryloxy-, cycloalkoxy-, aralkoxy- or acyloxy radical,
Z standing for hydrogen or a possibly substituted alkyl-, cycloalkyl-, aryl-, heteroaryl- or acyl radical, the two radicals Z also being able to form a closed ring which can be substituted possibly by ester-, ether-, amine-, amide-, carboxy- or urethane groups,
E standing for an alkoxy-, aryloxy-, cycloalkoxy-, aralkoxy- or acyloxy radical,
bb) azo compounds according to the subsequently illustrated structural formulae
R⁵-N=N-R⁵ 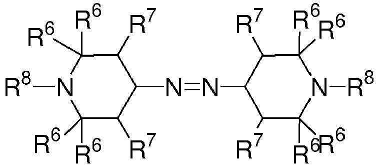
wherein
R⁵ meaning an alkyl-, cycloalkyl- or aryl radical,
R⁶ upon each occurrence, being the same or different and meaning a linear or branched alkyl radical,
R⁷ upon each occurrence, being the same or different and meaning hydrogen or a linear or branched alkyl radical, and
R⁸ upon each occurrence, being the same or different and meaning an alkyl-, alkoxy-, aryloxy-, cycloalkyloxy-, aralkoxy- or acyloxy radical,
cc) dicumyl according to the subsequently illustrated structural formula 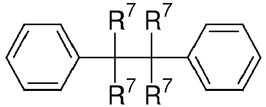 R⁷ having the previously indicated meaning, preferably being methyl,
dd) and/or polycumyl according to the subsequently illustrated structural formula 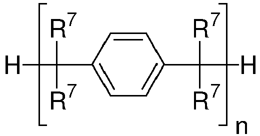 R⁷ having the previously indicated meaning, preferably being methyl, and 2 < n < 100,
d) the phosphorus-containing flame retardant is selected from the group consisting ofinorganic or organic phosphonates, such as e.g. aluminium phosphonate, phosphonate ester, oligomeric and polymeric derivatives of methane phosphonic acid, red phosphorus, phosphates, such as e.g. resorcin diphosphate, bisphenol-A-diphosphate and the oligomers thereof, triphenylphosphate, ethylene diamine diphosphate, phosphinates, such as e.g. salts of hypophosphorous acid and the derivatives thereof, such as alkyl phosphinate salts, e.g. diethylphosphinate aluminium or diethylphosphinate zinc or aluminium phosphinate, aluminium phosphite, aluminium phosphate, 9,10-dihydro-9-oxa-10-phosphorylphenanthrene-10-oxide (DOPO) and the substituted compounds thereof,
e) the halogen-containing flame retardant based on chlorine and bromine is selected from the group consisting of polybrominated diphenyl oxides, such as e.g. decabromodiphenyl oxide, tris(3-bromo-2,2-bis(bromomethyl)propylphosphate, tris(tribromoneopentyl)phosphate, tetrabromophthalic acid, 1,2-bis(tribromophenoxy)ethane, hexabromocyclododecane, brominated diphenylethane, tris-(2,3,-dibromopropyl)isocyanurate, tetrabromobisphenol-A-bis(2,3)dibromopropyl-ether), ethylene-bis(tetrabromophthalimide), tetrabromobisphenol A, brominated polystyrene, brominated polybutadiene or polystyrene-brominated polybutadiene copolymers, brominated epoxy resin, poly-pentabromobenzylacrylate, brominated polyphenylene ether, possibly in combination with Sb₂O₃ and/or Sb₂O₅,
f) the borate is selected from the group consisting of zinc borate or calcium borate, possibly on silica as carrier material,
g) the sulfur-containing compound is selected from the group consisting of elementary sulfur, disulphides und polysulphides, thiuram sulphide, dithiocarbamates, mercaptobenzothiazole and sulphenamides,
h) the antidrip agent is polytetrafluoroethylene,
i) the silicon-containing compound is selected from the group consisting of polyphenylsiloxanes,
j) the carbon modification is selected from the group consisting of carbon nanotubes (CNT) or graphene,
and combinations or mixtures hereof.

9. Use according to one of the two preceding claims, **characterised in that** the halogen-free phosphorus-containing organic oxyimides and the at least one further flame retardant are used in a weight ratio of 99 : 1 to 1 : 99, preferably of 5 : 95 to 50 : 50, particularly preferably of 10 : 90 to 30 : 70.

10. Use according to one of the preceding claims, **characterised in that** the halogen-free phosphorus-containing organic oxyimides
a) are used in combination with at least one phosphorus-containing compound selected from the group consisting of organic phosphites or phosphonites and/or
b) are used relative to the plastic materials at 0.01 to 30% by weight, preferably at 0.1 to 20% by weight, particularly preferably at 1 to 10% by weight.

11. Use according to one of the preceding claims, **characterised in that**, at least one halogen-free phosphorus-containing organic oxyimide, preferably at least one halogen-free phosphorus-containing organic oxyimide, in which at least one phosphorus atom is present in the oxidation state -2, -1, 0, +1, +2 or +3, particularly preferably at least one halogen-free phosphorus-containing organic oxyamide comprising at least one phosphite and/or phosphonite group is used.

12. Flame-retardant plastic material composition, comprising or consisting of:
a) 60 to 99.9 parts by weight, preferably 60 to 98, particularly preferably 70 to 95 parts by weight, of at least one plastic material, in particular of at least one thermoplastic polymer,
b) 0.1 to 40 parts by weight, preferably 1 to 25, particularly preferably 2.5 to 15 parts by weight, of at least one halogen-free phosphorus-containing organic oxyimide, containing at least one structural element of the subsequently illustrated formula I, 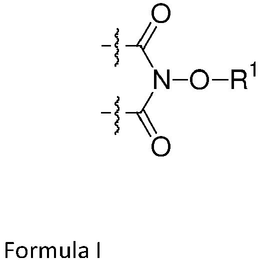 wherein R¹ is defined as in claim 1
c) 1 to 25, preferably 1 to 20 parts by weight, particularly preferably 2.5 to 15 parts by weight, of at least one further flame retardant selected from the group consisting of inorganic flame retardants, nitrogen-containing flame retardants, radical formers, phosphorus-containing flame retardants, halogen-containing flame retardants based on chlorine and bromine, borates, sulfur-containing compounds, antidrip agents, silicon-containing compounds, carbon modifications, as well as combinations or mixtures thereof,
d) 0 to 25 parts by weight, preferably 1 to 20 parts by weight, particularly preferably 2.5 to 15 parts by weight, of at least one phosphorus-containing compound, selected from the group consisting of phosphites or phosphonites, wherein the at least one phosphorus-containing compound is not identical with the phosphorous containing flame retardants, wherein preferably
e) up to 40 parts by weight of at least one reinforcing- or filling material and/or
f) up to 5 parts by weight of at least one additive from the class of phenolic antioxidants, phosphites, acid collectors, hindered amines, dispersants and also combinations hereof
are contained.

13. Flame-retardant plastic material composition according to one of the two preceding claims, **characterised in that** the additives are selected from the group consisting of UV absorbers, light stabilisers, stabilisers, hydroxylamines, benzofuranones, nucleation agents, impact strength enhancers, plasticisers, lubricants, rheology modifiers, processing aids, pigments, colourants, optical brighteners, antimicrobial active substances, antistatic agents, slip agents, antiblocking agents, coupling means, dispersants, compatibilisers, oxygen collectors, acid collectors, marking means or anti-fogging means. In a preferred embodiment, the compositions comprise in particular acid collectors, e.g. based on salts of long-chain acids, such as e.g. calcium stearate, Mg stearate, zinc stearate, calcium lactate or of hydrotalcites and/or stabilisers from the group of phenolic antioxidants and phosphites and/or light stabilisers from the group of hindered amines (HALS) and/or dispersants are contained.

14. Method for the production of a flame-retardant plastic material composition according to one of the claims 12 to 13, in which there is introduced
a) 0.1 to 40 parts by weight, preferably 1 to 25, particularly preferably 2.5 to 15 parts by weight, of at least one phosphorus-containing organic oxyimide, comprising at least one structural element of the subsequently illustrated formula I, 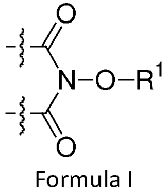 wherein R¹ is defined as in claim 1
b) before, after or at the same time, with 1 to 25 parts by weight, preferably 2.5 to 15 parts by weight, of the at least one further flame retardant
into 60 to 99.9 parts by weight, preferably 60 to 98, particularly preferably 70 to 95 parts by weight, of at least one plastic material, in particular to at least one thermoplastic polymer.

15. Moulded part, paint or coating producible from a flame-retardant plastic material composition according to one of the claims 12 to 13, in particular in the form of injection moulded parts, foils, coatings, foams, fibres, cables and pipes, which are produced via extrusion, injection moulding, blow-moulding, pressing processes, e.g. for household and electrical appliances, vehicle parts, consumer articles, furniture, textiles.

## Revendications

1. Utilisation d'oxyimides organiques contenant du phosphore et exempts d'halogènes, contenant au moins un élément de structure de formule I représentée ci-après 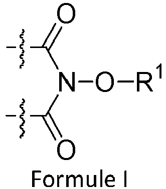 dans laquelle R¹ est choisi dans le groupe constitué par les radicaux contenant du phosphore,
en combinaison avec au moins un autre agent ignifuge, choisi dans le groupe constitué par les agents ignifuges inorganiques, les agents ignifuges contenant de l'azote, les générateurs de radicaux, les agents ignifuges contenant du phosphore, les agents ignifuges contenant des halogènes à base de chlore et de brome, les borates, les composés contenant du soufre, les agents anti-gouttes, les composés contenant du silicium, les modifications du carbone, ainsi que les combinaisons ou mélanges de ceux-ci,
comme retardateurs de flamme pour les matières plastiques.

2. Utilisation selon la revendication 1, **caractérisée en ce que** R¹ est choisi dans le groupe constitué par
-X-Y
dans laquelle
X représente une liaison chimique directe, un radical alkylène non substitué ou substitué, un radical cycloalkylène non substitué ou substitué, un radical aryle non substitué ou substitué, un radical hétéroaryle non substitué ou substitué ou un groupe acyle dont le radical carbonyle est lié à l'atome d'oxygène et dont le radical acide est lié à Y, et
Y représente un groupement contenant du phosphore, qui est lié chimiquement à X par l'intermédiaire de l'atome de phosphore et dans lequel l'atome de phosphore présente la valence -3 à 5, en particulier -2, -1, 0, +1, +2, +3, +4 ou +5, et où
Y est de préférence choisi dans le groupe constitué par les grou-
pements représentés ci-après 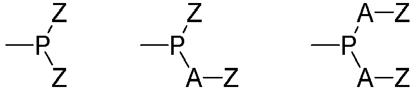 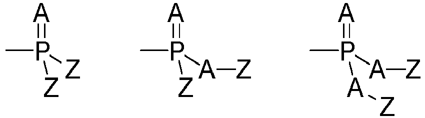 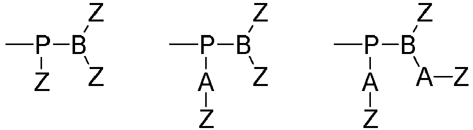 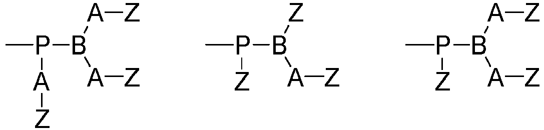 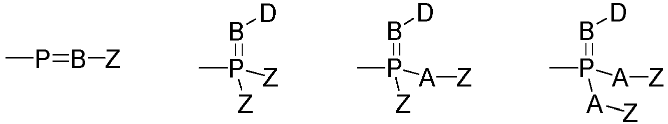
dans laquelle
Z est identique ou différent à chaque occurrence et est choisi dans le groupe constitué par les radicaux alkyle linéaires ou ramifiés et/ou non substitués ou substitués, les radicaux aryle non substitués ou substitués, les radicaux hétéroaryle non substitués ou substitués ou les groupes acyle, dont le radical carbonyle est lié à l'atome de phosphore A ou B, les radicaux cités précédemment pouvant éventuellement être substitués par au moins un autre élément de structure selon la formule I représentée ci-dessus et/ou par au moins un autre radical R¹, ainsi que parmi des éléments de structure de la formule I représentée ci-dessus et des groupements -X-Y,
A est identique ou différent à chaque occurrence et de l'oxygène ou du soufre,
B est identique ou différent à chaque occurrence et de l'azote, et
D est identique ou différent à chaque occurrence et est choisi dans le groupe constitué par des radicaux alkyle linéaires ou ramifiés et/ou non substitués ou substitués, des radicaux aryle non substitués ou substitués, des radicaux hétéroaryle non substitués ou substitués, les radicaux mentionnés précédemment pouvant éventuellement être substitués par au moins un autre élément de structure selon la formule I représentée ci-dessus et/ou au moins un autre radical R¹.

3. Utilisation selon l'une quelconque des revendications précédentes, **caractérisée en ce que** l'oxyimide organique contenant du phosphore présente la structure suivante
E-R¹
dans laquelle
E représente un radical représenté ci-après, E étant lié à R¹ par l'intermédiaire de l'atome d'oxygène, 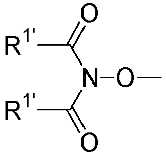
R¹ est défini comme ci-dessus et
R^{1'} est identique ou différent à chaque occurrence et représente un atome d'hydrogène, un radical alkyle linéaire ou ramifié, un radical alkylène linéaire ou ramifié, un radical aromatique, un radical hétéroaromatique, ou dans le cas de radicaux R¹', ceux-ci sont reliés en un cycle, le cycle pouvant être saturé ou insaturé, substitué ou non substitué et/ou au moins un ou les deux radicaux R¹' ou les radicaux R¹' reliés en un cycle comprennent au moins un autre élément de structure de la formule I représentée ci-dessus, dans laquelle
l'oxyimide organique phosphoré répond notamment à l'une des formules suivantes 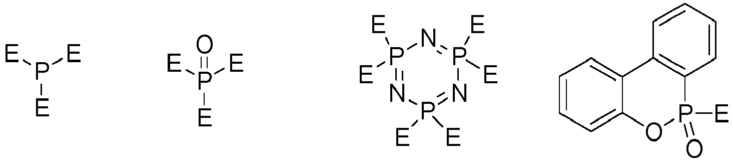 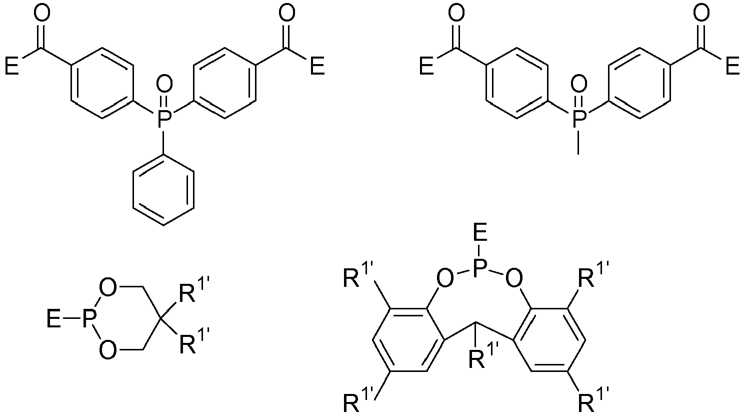 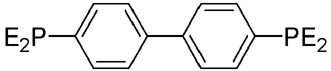 dans laquelle E et R^{1'} sont tels que définis ci-dessus.

4. Utilisation selon l'une quelconque des revendications précédentes, **caractérisée en ce que** l'oxyimide organique contenant du phosphore
a) comprend un élément de structure de la formule générale I et présente l'une des formules suivantes 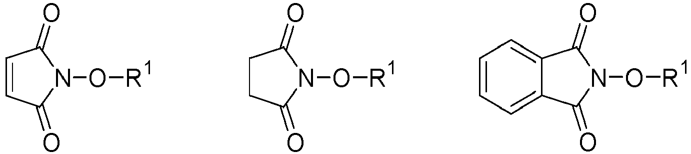 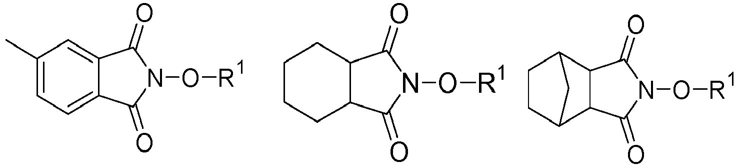 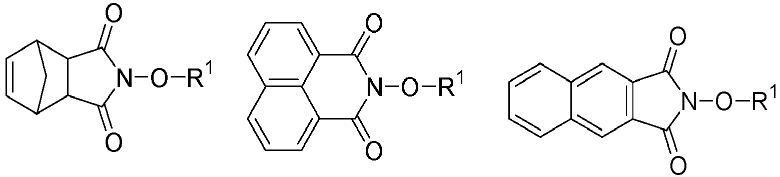 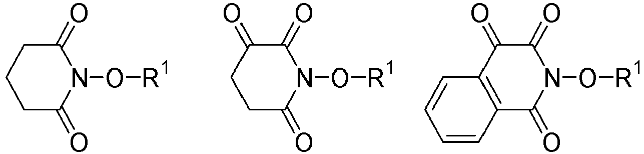 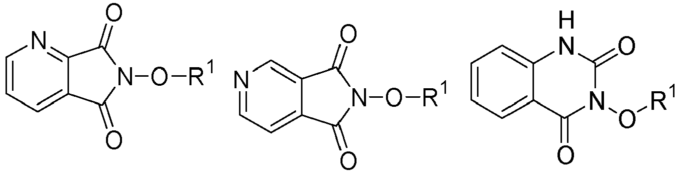 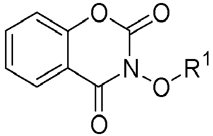
b) comprend deux éléments de structure de la formule générale I et présente l'une des formules suivantes 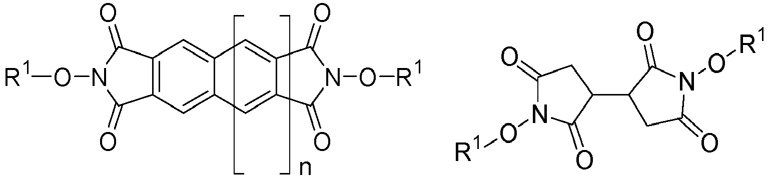 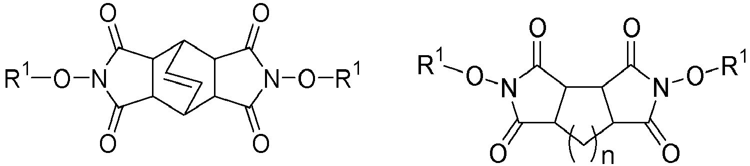 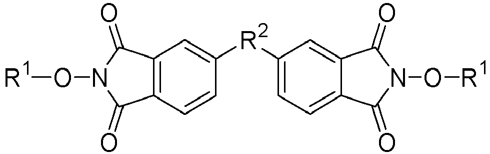 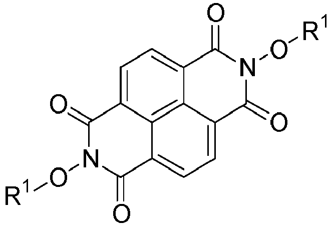 dans laquelle
n est égal à 0, 1, 2, 3 ou 4, et
R² est choisi dans le groupe constitué par les radicaux alkylène, cycloalkylène, arylène, hétéroarylène ou acyle de pontage éventuellement substitués, et en particulier choisi parmi les radicaux du groupe constitué par -(CH₂)n- avec n = 1 à 18, -CH(CH₃)-, -C(CH₃)₂-, -CH(CF₃)-, -C(CF₃)₂-,-O-, -S-, -SO₂-, -NHCO-, -CO-, -OC(O)O- ainsi que les groupes représentés ci-après 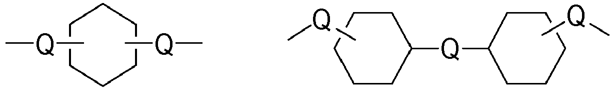 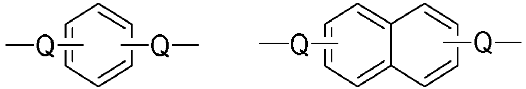 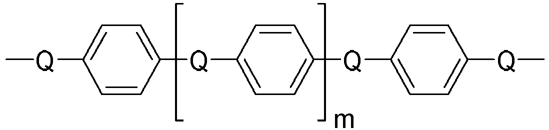 dans laquelle
les systèmes cycliques cycloaliphatiques ou aromatiques contenus dans les groupes représentés précédemment sont non substitués ou substitués par un ou plusieurs groupes alkyle et/ou alcoxy,
Q est identique ou différent à chaque occurrence et est choisi dans le groupe constitué par une liaison chimique ainsi que des radicaux -(CH₂)ₙ- avec n = 1 à 18, -CH(CH3)-, -C(CH3)2-, CH(CF3)-, -C(CH3)2-, -O-C(O)-O-, -O-, -S-, -SO2-, -NHCO-CO-, et
m est nul ou compris entre 1 et 3.
ou
c) comprend trois éléments de structure de la formule générale I et présente la formule suivante

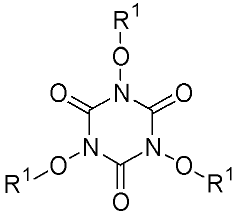

5. Utilisation selon l'une quelconque des revendications précédentes, **caractérisée en ce que** l'oxyimide organique contenant du phosphore est choisi dans le groupe constitué par les composés représentés ci-après 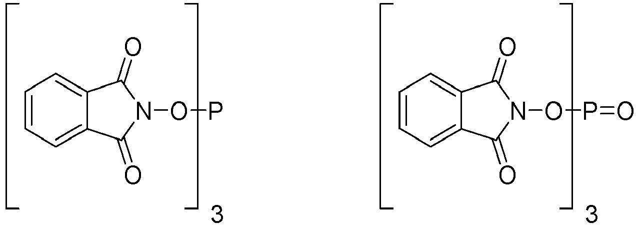 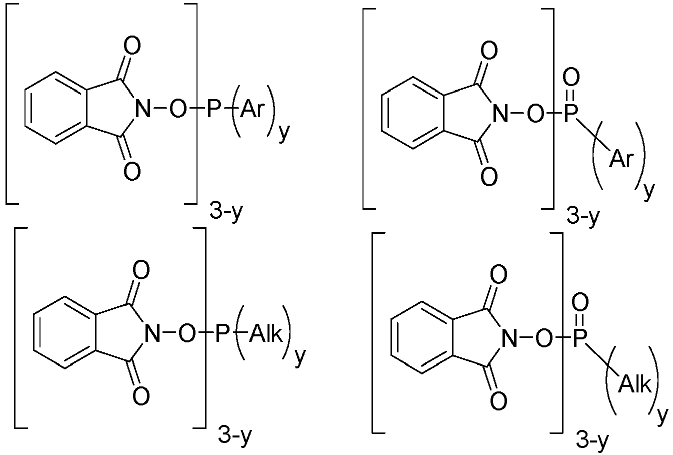 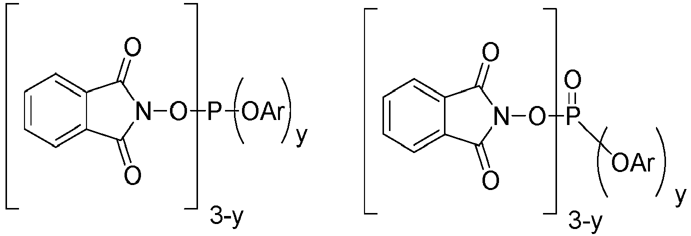 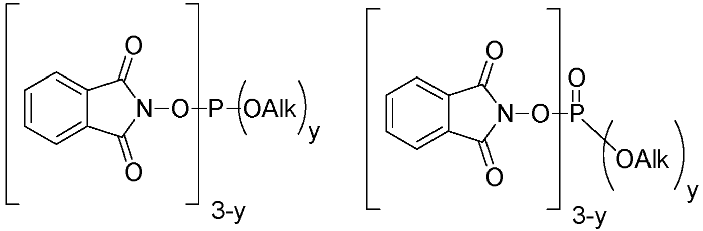 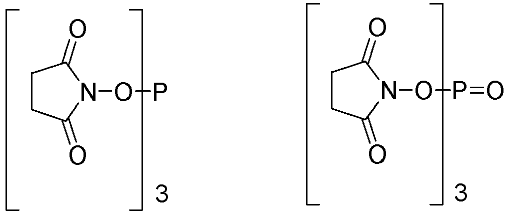 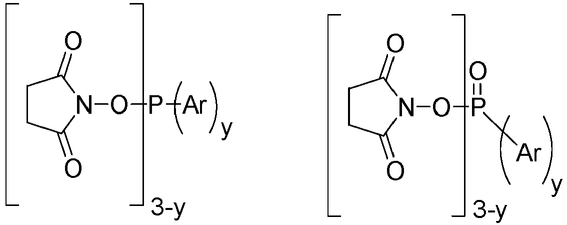 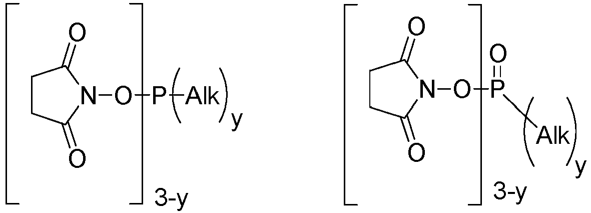 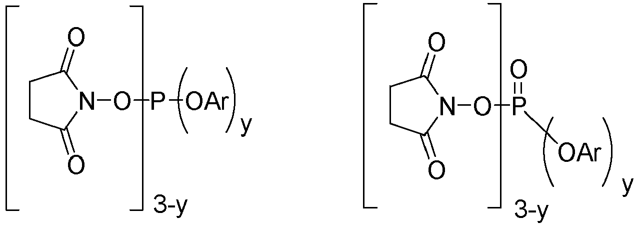 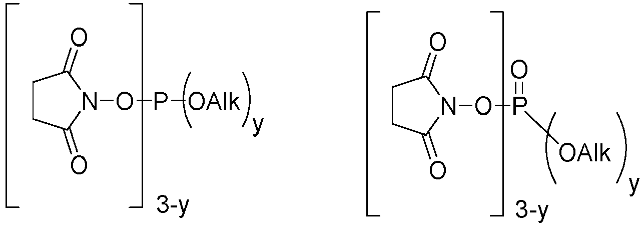 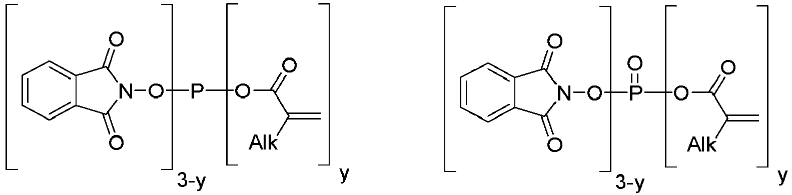 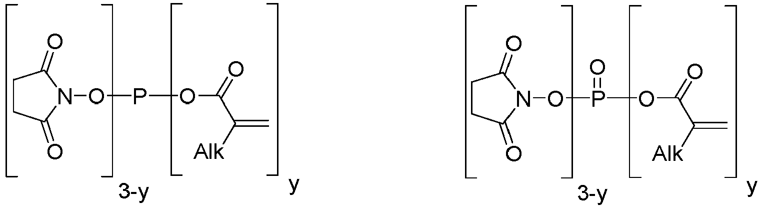 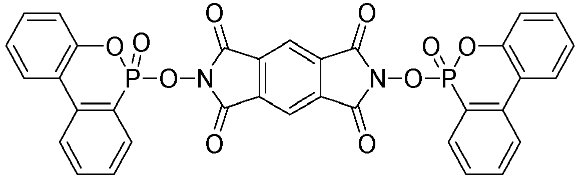 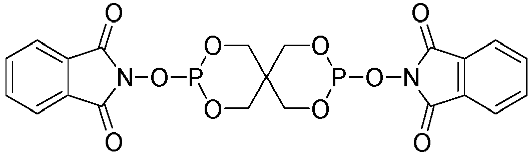 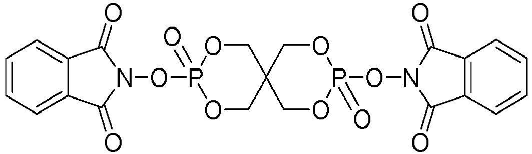 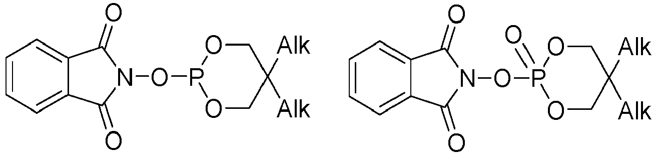 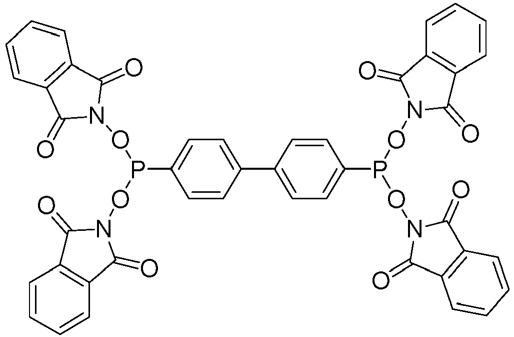 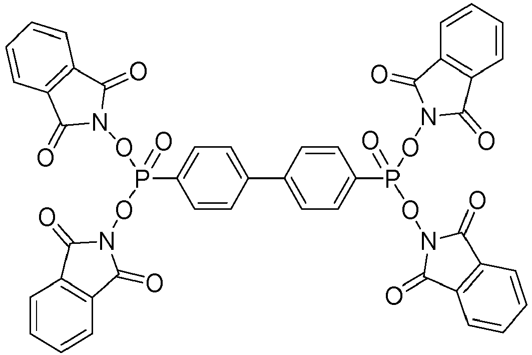 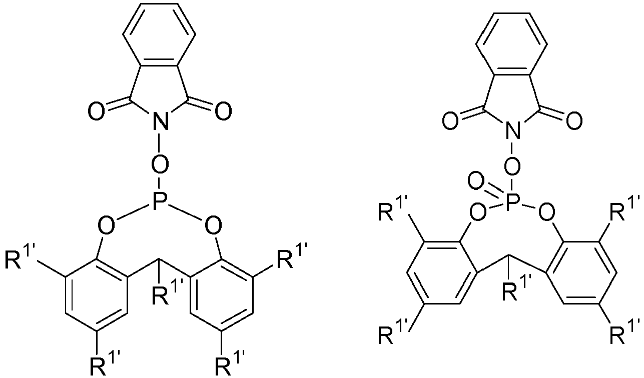 dans laquelle
y est égal à 1 ou r2
Alk représente un radical alkyle linéaire ou ramifié, substitué ou non substitué, et
Ar représente un radical aryle ou un radical hétéroaryle substitué ou non substitué.

6. Utilisation selon l'une des revendications précédentes, **caractérisée en ce que** l'élément structurel selon la formule générale I fait partie d'un polymère ou d'un copolymère, les polymères ou copolymères présentant en particulier au moins les unités de répétition suivantes :

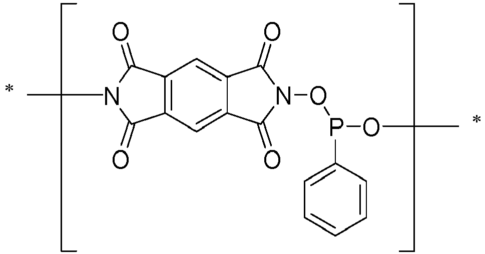

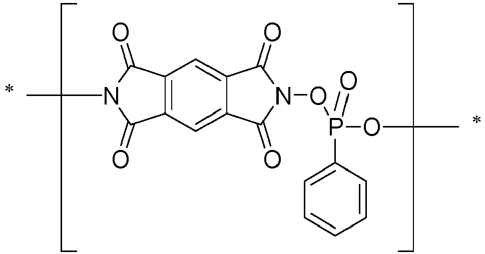

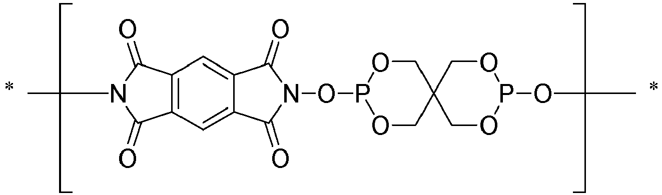

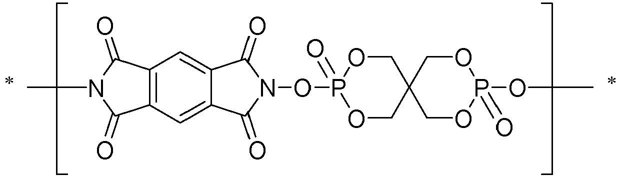

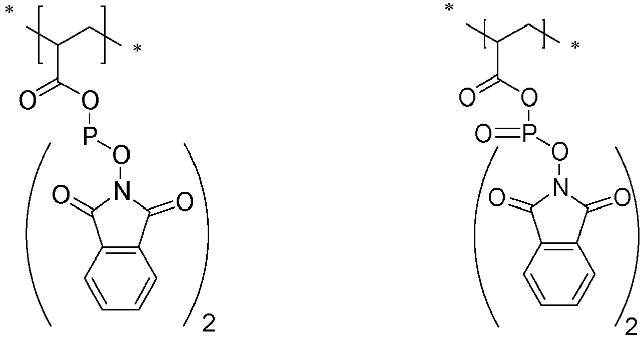

7. Utilisation selon l'une quelconque des revendications précédentes, **caractérisée en ce que** les matières plastiques sont des polymères thermoplastiques et sont notamment choisies dans le groupe constitué par
a) les polymères d'oléfines ou de dioléfines, tels que le polyéthylène (LDPE, LLDPE, VLDPE, ULDPE, MDPE, HDPE, UHMWPE), le métallo-cène PE (m-PE), le polypropylène, le polyisobutylène, le poly-4-méthyl-pentène-1, le polybutadiène, le polyisoprène, le polycy-clooctène, les copolymères polyalkylène-monoxyde de carbone, ainsi que les copolymères sous forme de structures statistiques ou séquentielles, tels que les polypropylène-polyéthylène (EP), EPM ou EPDM, l'éthylène-acétate de vinyle (EVA), les éthylène-esters acryliques, tels que l'éthylène-acrylate de butyle, l'éthylène-acide acrylique (EAA) et leurs sels (ionomères), ainsi que les terpoly-mères tels que l'éthylène-acide acrylique-acrylate de glycidyle, les polymères greffés, tels que le polypropylène-greffé à-anhydride maléique, le polypropylène-greffé à-acide acrylique, le polyéthylène-greffé à-acide acrylique, le polyéthylène-polybutylacrylate-greffé à-anhydride maléique,
b) le polystyrène, polyméthylstyrène, polyvinylnaphtalène, styrène-butadiène (SB), styrène-butadiène-styrène (SBS), styrène-éthylène-butylène-styrène (SEBS), styrène-éthylène-propylène-styrène, styrène-isoprène, styrène-isoprène-styrène (SIS), styrène-butadiène-acrylonitrile (ABS), styrène-acrylonitrile-acrylate (ASA), styrène-éthylène, polymères de styrène et d'anhydride maléique, y compris les copolymères greffés correspondants tels que le styrène sur le butadiène, l'anhydride maléique sur le SBS ou le SEBS, ainsi que les copolymères greffés de méthacrylate de méthyle, de styrène-butadiène et d'ABS (MABS),
c) les polymères contenant des halogènes tels que le polychlorure de vinyle (PVC), le polychloroprène et le polychlorure de vinylidène (PVDC), les copolymères de chlorure de vinyle et de chlorure de vinylidène ou de chlorure de vinyle et d'acétate de vinyle, le polyéthylène chloré, le polyfluorure de vinylidène,
d) les polymères d'esters insaturés, tels que les polyacrylates et les polyméthacrylates tels que le polyméthacrylate de méthyle (PMMA), le polyacrylate de butyle, le polyacrylate de lauryle, le polyacrylate de stéaryle, le polyacrylonitrile, les polyacrylamides, les copolymères, tels que le polyacrylonitrile-polyacrylate d'alkyle, le polyméthacrylimide,
e) les polymères d'alcools insaturés et de dérivés, tels que l'alcool polyvinylique, l'acétate de polyvinyle, le polyvinylbutyral,
f) les polyacétals, tels que le polyoxyméthylène POM) ou des copolymères avec par exemple du butanal,
g) les polyoxydes de phénylène et mélanges avec du polystyrène ou des polyamides,
h) les polymères d'éthers cycliques, tels que le polyéthylène glycol, le polypropylène glycol, l'oxyde de polyéthylène, l'oxyde de polypropylène, le polytétrahydrofurane,
i) les polyuréthanes, composés de polyéthers ou polyesters à terminaison hydroxy et d'isocyanates aromatiques ou aliphatiques, en particulier polyuréthanes linéaires, polyurées,
j) les polyamides, tels que le polyamide-6, 6.6, 6.10, 4.6, 4.10, 6.12, 12.12, le polyamide 11, le polyamide 12 ainsi que les polyamides (partiellement) aromatiques, tels que les polyphtalamides, par exemple préparés à partir d'acide téréphtalique et/ou d'acide isophtalique et de diamines aliphatiques ou à partir d'acides dicarboxyliques aliphatiques, tels que l'acide adipique ou l'acide séba-cique et des diamines aromatiques, tels que le 1,4- ou 1,3-diami-nobenzène, des mélanges de différents polyamides, tels que le PA-6 et PA 6.6 ou des mélanges de polyamides et de polyoléfines, tels que le PA/PP,
k) les polyimides, polyamide-imides, polyéther-imides, polyesterimides, poly(éther)-cétones, polysulfones, polyéthersulfones, polyarylsulfones, polyphénylène-sulfure, polybenzimidazoles, polyhy-dantoïnes,
l) les polyesters d'acides dicarboxyliques et de diols aliphatiques ou aromatiques ou d'acides hydroxy-carboxyliques tels que le polyéthylène téréphtalate (PET), le polybutylène téréphtalate (PBT), le polypropylène téréphtalate, le polyéthylène naphtylate, le poly-1,4-diméthylolcyclohexane téréphtalate, le polyhydroxybenzoate, le polyhydroxynaphtalate, l'acide polylactique,
m) les polycarbonates, les polyestercarbonates, ainsi que les mélanges, tels que les PC/ABS, PC/PBT, PC/PET/PBT, PC/PA,
n) les dérivés de cellulose, tels que le nitrate de cellulose, l'acétate de cellulose, le propionate de cellulose, le butyrate de cellulose, ou
o) les matières plastiques thermodurcissables, ainsi que
p) les mélanges, combinaisons ou mélanges de deux polymères susmentionnés ou plus.

8. Utilisation selon l'une quelconque des revendications précédentes, **caractérisée en ce que**
a) l'agent ignifuge inorganique est choisi dans le groupe constitué par Al(OH)₃, Mg(OH)₂, AlO(OH), MgCO₃, les silicates lamellaires, tels que la montmorillonite ou la sépiolite, non modifiés ou modifiés organiquement, les sels doubles tels que les silicates Mg-AI, les composés POSS (silsesquioxane oligomérique polyédrique), la huntite, l'hydromagnésite ou l'halloysite ainsi que Sb₂O₃, Sb₂O₅, MoO₃, le stannate de zinc, l'hydroxystannate de zinc,
b) le retardateur de flamme azoté est choisi dans le groupe constitué par la mélamine, le melem, le melam, le melon, les dérivés de mélamine, les condensats de mélamine/formaldéhyde ou les sels de mélamine, la benzoguanamine, les polyisocyanurates, l'allantoïne, les (poly)phosphacènes, en particulier le cyanurate de mélamine, le phosphate de mélamine, le phosphate de dimélamine, le pyrophosphate de mélamine, le polyphosphate de mélamine, le méthane-phosphonate de mélamine, les phosphates métalliques de mélamine, tels que le phosphate d'aluminium de mélamine, le phosphate de zinc de mélamine, le phosphate de magnésium de mélamine, ainsi que les pyrophosphates et polyphosphates correspondants, la poly-[2,4-(pipérazine-1,4-yl)-6-(morpholin-4-yl)-1,3,5-triazine], le polyphosphate d'ammonium, le borate de mélamine, le bromhydrate de mélamine, le méthane-phosphonate d'éthy-lènediamine,
c) l'agent générateur de radicaux est choisi dans le groupe constitué par les alcoxyamines, les esters d'hydroxylamine, les composés azoïques, le dicumyle ou le polycumyle, les hydroxyimides non phosphorés ou leurs dérivés, tels que les esters d'hydroxyimide ou les éthers d'hydroxyimide, les agents générateurs de radicaux étant en particulier choisis dans le groupe constitué par
aa) les N-alcoxylamines selon la formule de structure représentée ci-après 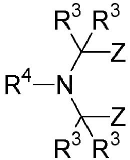 dans laquelle
R³ est l'hydrogène ou un radical alkyle, cycloalkyle, aryle, hétéroaryle ou acyle éventuellement substitué, en particulier un radical alkyle en C1 à C4,
R⁴ représente un radical alcoxy, aryloxy, cycloalcoxy, aral-coxy ou acyloxy,
Z représente l'hydrogène ou un radical alkyle, cycloalkyle, aryle, hétéroaryle ou acyle éventuellement substitué, dans laquelle les deux radicaux Z peuvent également former un cycle fermé, qui peut éventuellement être substitué par les groupes ester, éther, amine, amide, carboxy ou uréthane,
E représente un radical alcoxy, aryloxy- cycloalkyloxy, aral-coxy ou acyloxy,
bb) les composés azoïques selon les formules de structure représentées ci-après
R⁵-N=N-R⁵
ou 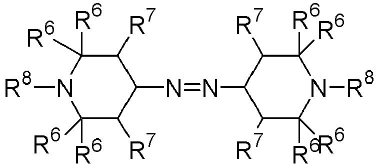 dans laquelle
R⁵ représente un radical alkyle, cycloalkyle ou aryle,
R⁶ est identique ou différent à chaque occurrence et représente un radical alkyle linéaire ou ramifié,
R⁷ est identique ou différent à chaque occurrence et représente l'hydrogène ou un radical alkyle linéaire ou ramifié, et
R⁸ est identique ou différent à chaque occurrence et représente un radical alkyle, alcoxy, aryloxy-cycloalkyloxy, aral-coxy ou acyloxy,
cc) le dicumyl selon la formule de structure représentée ci-après 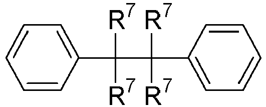 dans laquelle R⁷ présente la signification indiquée ci-dessus, est de préférence du méthyle,
dd) et/ou le polycumyle selon la formule de structure représentée ci-après 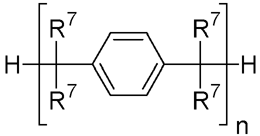 dans laquelle R⁷ présente la signification indiquée ci-dessus, est de préférence du méthyle, et 2 < n < 100,
d) l'agent ignifugeant phosphoré est choisi dans le groupe constitué par les phosphonates inorganiques ou organiques tels que le phosphonate d'aluminium, les esters phosphonates, les dérivés oligomères et polymères de l'acide méthanephosphonique, le phosphore rouge, les phosphates tels que le diphosphate de résorcinol, le diphosphate de bisphénol A et leurs oligomères, le phosphate de triphényle, le diphosphate d'éthylènediamine, les phosphinates, tels que les sels de l'acide hypophosphoreux et leurs dérivés tels que les sels de phosphinate d'alkyle, tels que le diéthylphosphinate d'aluminium ou le diéthylphosphinate de zinc ou le phosphinate d'aluminium, le phosphite d'aluminium, le phosphate d'aluminium, le 9,10-dihydro-9-oxa-10-phosphorylphénanthrène-10-oxyde (DOPO) et leurs composés substitués,
e) l'agent ignifuge halogéné à base de chlore et de brome est choisi dans le groupe constitué par les oxydes de diphényle polybromés, tels que l'oxyde de décabromodiphényle, le phosphate de tris(3-bromo-2,2-bis(bromométhyl)propyle, le phosphate de tris(tribro-monéopentyle), l'acide tétrabromophtalique, le 1,2-bis(tribromo-phénoxy)éthane, l'hexabromocyclododécane, le diphényléthane bromé, l'isocyanurate de tris(2,3-dibromopropyle), le tétrabrom-bisphénol-A-bis(2,3)dibrompropyléther, l'éthylène-bis(tétrabro-mophtalimide), le tétrabromobisphénol A, le polystyrène bromé, le polybutadiène bromé ou polypropylène bromé, les copolymères de polybutadiène bromé et de polystyrène, la résine époxy bromée, l'acrylate de polypentabromobenzyle, les éthers de polyphénylène bromés, éventuellement en combinaison avec SB₂O₃ et/ou SB₂O₅,
f) le borate est choisi dans le groupe constitué par le borate de zinc ou le borate de calcium, éventuellement sur de la silice comme matériau de support,
g) le composé contenant du soufre est choisi dans le groupe constitué par le soufre élémentaire, les disulfures et les polysulfures, le sulfure de thiurame, les dithiocarbamates, le mercaptobenzothiazole et les sulfénamides,
h) l'agent anti-gouttes est le polytétrafluoroéthylène,
i) le composé contenant du silicium est choisi dans le groupe constitué par les polyphénylsiloxanes,
j) la modification du carbone est choisie dans le groupe constitué par les nanotubes de carbone (CNT) ou le graphène,
ainsi que des combinaisons ou des mélanges de ceux-ci.

9. Utilisation selon l'une des revendications précédentes, **caractérisée en ce que** les oxyimides organiques contenant du phosphore et exempts d'halogène et ledit au moins un autre agent ignifugeant sont présents dans un rapport pondéral de 99:1 à 1:99, de préférence de 5 : 95 à 50 : 50, de préférence encore de 10 : 90 à 30 : 70 sont utilisés

10. Utilisation selon l'une quelconque des revendications précédentes, **caractérisée en ce que** les oxyimides organiques contenant du phosphore et exempts d'halogène
a) sont utilisés en combinaison avec au moins un composé contenant du phosphore, choisi dans le groupe constitué par les phosphites ou les phosphonites, ledit au moins un composé contenant du phosphore n'étant pas identique aux agents ignifuges contenant du phosphore, et/ou
b) par rapport aux matières plastiques, sont utilisés à raison de 0,01 à 30 % en poids, de préférence à raison de 0,1 à 20 % en poids, de manière particulièrement préférée à raison de 1 à 10 % en poids.

11. Utilisation selon l'une quelconque des revendications précédentes, **caractérisée en ce que** l'on utilise au moins un oxyimide organique phosphoré non halogéné, de préférence au moins un oxyimide organique phosphoré non halogéné dans lequel au moins un atome de phosphore est présent à l'état d'oxydation -2, -1, 0, +1, +2 ou +3, de manière particulièrement préférée au moins un oxyimide organique phosphoré non halogéné contenant au moins un groupe phosphite et/ou phosphonite.

12. Composition de matière plastique ignifugée contenant ou consistant en
a) de 60 à 99,9 parties en poids, de préférence 60 à 98, de manière particulièrement préférée 70 à 95 parties en poids d'au moins une matière plastique, en particulier d'au moins un polymère thermoplastique,
b) de 0,1 à 40 parties en poids, de préférence 1 à 25, de manière particulièrement préférée 2,5 à 15 parties en poids d'au moins un oxyimide organique contenant du phosphore et exempt d'halogène, contenant au moins un élément de structure de la formule I représentée ci-après 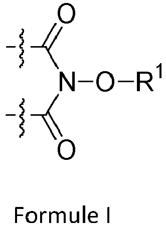 où R¹ est tel que défini dans la revendication 1,
c) de 1 à 25, de préférence de 1 à 20 parties en poids, de préférence encore de 2,5 à 15 parties en poids d'au moins un autre agent ignifuge, choisi dans le groupe constitué par les agents ignifuges inorganiques, les agents ignifuges contenant de l'azote, les générateurs de radicaux, les agents ignifuges contenant du phosphore, les agents ignifuges contenant des halogènes à base de chlore et de brome, les borates, les composés contenant du soufre, les agents antidérapants, les composés contenant du silicium, les modifications du carbone, ainsi que des combinaisons ou des mélanges de ceux-ci,
d) de 0 à 25 parties en poids, de préférence 1 à 20 parties en poids, de manière particulièrement préférée de 2,5 à 15 parties en poids d'au moins un composé contenant du phosphore, choisi dans le groupe constitué par des phosphites ou des phosphonites, ledit au moins un composé contenant du phosphore n'étant pas identique aux agents ignifuges contenant du phosphore, contenant de préférence
en outre
e) jusqu'à 40 parties en poids d'au moins une matière de renforcement ou de remplissage et/ou
f) jusqu'à 5 parties en poids d'au moins un additif choisi dans la classe des antioxydants phénoliques, des capteurs d'acide, des amines à empêchement stérique, des dispersants et de leurs combinaisons.

13. Composition plastique ignifugée selon la revendication précédente, **caractérisée en ce que** l'on utilise des additifs choisis dans le groupe constitué par les absorbeurs d'UV, les stabilisants à la lumière, les stabilisateurs, les hydroxylamines, les benzofuranones, les agents de nucléation, les agents de résistance aux chocs, les plastifiants, les lubrifiants, les modificateurs de rhéologie, les auxiliaires de traitement, les pigments, les colorants, les azurants optiques, les agents antimicrobiens, les antistatiques, les agents de glissement, les agents anti-blocage, les agents de couplage, les agents dispersants, les agents de compatibilité, les capteurs d'oxygène, les capteurs d'acide, les agents de marquage ou les agents antibuée. Dans le mode de réalisation préféré, les compositions contiennent notamment des capteurs d'acide, par exemple à base de sels d'acides à longue chaîne, tels que le stéarate de calcium, le stéarate de magnésium, le stéarate de zinc, le lactate de calcium ou sont contenus par des hydrotalcites et/ou des stabilisants du groupe des antioxydants phénoliques et des phosphites et/ou des stabilisants à la lumière du groupe des amines à empêchement stérique (HALS) et/ou d'agents dispersants.

14. Procédé pour la préparation d'une composition plastique ignifugée selon l'une quelconque des revendications **Fehler! Verweisquelle konnte nicht gefunden werden.** à 13, dans lequel
a) de 0,1 à 40 parties en poids, de préférence 1 à 25, de manière particulièrement préférée de 2,5 à 15 parties en poids d'au moins un oxyimide organique contenant du phosphore et exempt d'halogène, contenant au moins un élément de structure de la formule I représentée ci-après 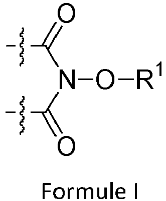 où R¹ est tel que défini dans la revendication 1,
b) avant, après ou simultanément avec de 1 à 25 parties en poids, de préférence de 2,5 à 15 parties en poids dudit au moins un des autres agents ignifuges
est introduit dans 60 à 99,9 parties en poids, de préférence 60 à 98, de manière particulièrement préférée 70 à 95 parties en poids d'au moins une matière plastique, en particulier d'au moins un polymère thermoplastique.

15. Pièce moulée, vernis ou revêtement, pouvant être fabriqué à partir d'une composition plastique ignifugée selon l'une des revendications **Fehler! Verweisquelle konnte nicht gefunden werden.** à 13, en particulier sous forme de pièces moulées par injection, de films, de revêtements, de mousses, de fibres, de câbles et de tubes, qui sont fabriqués par extrusion, moulage par injection, moulage par soufflage, procédé de pressage, par exemple pour des appareils ménagers et électriques, des pièces de véhicules, des articles de consommation, des meubles, des textiles.
